(19) Europäisches Patentamt
European Patent Office
Office européen des brevets

(11) **EP 3 843 021 A1**

(12) **EUROPEAN PATENT APPLICATION**
published in accordance with Art. 153(4) EPC

(43) Date of publication:
**30.06.2021 Bulletin 2021/26**

(51) Int Cl.:
*G06Q 20/06* (2012.01)          *G06Q 20/10* (2012.01)
*G06Q 20/16* (2012.01)

(21) Application number: **19851481.2**

(22) Date of filing: **03.04.2019**

(86) International application number:
**PCT/JP2019/014820**

(87) International publication number:
**WO 2020/039645 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **23.08.2018 JP 2018156010**
**17.12.2018 JP 2018235584**

(71) Applicant: **Torii, Kan**
**Tokyo 154-0001 (JP)**

(72) Inventor: **Torii, Kan**
**Tokyo 154-0001 (JP)**

(74) Representative: **Pfenning, Meinig & Partner mbB**
**Patent- und Rechtsanwälte**
**Theresienhöhe 11a**
**80339 München (DE)**

(54) **MONEY TRANSFER INSTRUCTION DEVICE, MONEY TRANSFER INSTRUCTION METHOD, MONEY TRANSFER INSTRUCTION PROGRAM, AND MONEY TRANSFER INSTRUCTION SYSTEM**

(57)     A remittance instruction apparatus is provided with: a key information storage unit configured to store each of a plurality of key information for a given user to use each remittance execution service in association with each of a plurality of remittance execution services; an identification unit configured to identify the key information in the key information storage unit based on the predetermined remittance execution service designated by the given user; and a remittance instruction unit configured to, based on remittance information in which a remittance amount in a predetermined digital currency and a remittance destination are specified, give a remittance instruction to the predetermined remittance execution service, the remittance instruction to remit the specified remittance amount in the predetermined digital currency to a remittance destination address corresponding to the specified remittance destination using the identified key information, wherein, each of the plurality of key information includes one or more keys that differ for each remittance execution service and includes information that can uniquely identify the given user in the remittance execution service.

Fig. 43

**Description**

**Technical Field**

The present invention relates to a remittance instruction apparatus, a remittance instruction method, a remittance instruction program, and a remittance instruction system, and more particularly to a remittance instruction apparatus, a remittance instruction method, a remittance instruction program, and a remittance instruction system that give remittance instructions for digital currency.

**Background Art**

With networked payment systems of today, remittances in digital currencies, which are electronic representations of currencies, have become popular, instead of physical currencies such as coins, banknotes, and checks. At present, credit cards and bank transfers are popular for payments on the network. Alternatively, payment by electronic money is also widespread in payments at physical stores. For example, Patent Literature 1 discloses a payment system using two-dimensional codes. Hereinafter, the expression "store" is used, but this is not necessarily a store that sells products. This expression is used to represent the recipient of the remittance, such as an individual, a service provider, or a mere remittance destination account.

On the other hand, in recent years, attention has been focused on virtual currencies (also called "cryptocurrency"). Although virtual currency was developed to make remittances easier, it may be difficult to identify the sender because there was focus on the anonymity of remittances. To solve this problem, e-commerce stores can contract with individual cryptocurrency exchange companies and use their remittance services.

**Citation List**

**Patent Literature**

Patent Literature 1: Japanese Patent No. 6271800

**Summary of Invention**

**Technical Problem**

However, if a store wants to do business with more customers, it must partner with multiple payment companies. But it is not feasible for small stores and individuals to partner with multiple payment companies due to procedures and costs. For example, for payment with virtual currency, if the store does not partner with a payment company (virtual currency exchange company), the store will need to convey the remittance destination address to each customer and ask each customer to manually send the payment with the exchange company used by the customer each time. Thus, convenience of the customer is impaired. Therefore, introduction of a service that comprehensively handles payments from a plurality of exchange companies with the aim of ensuring customer convenience is desired.

This disclosure is made to solve such problem, and the purpose is to provide a remittance instruction apparatus, a remittance instruction method, a remittance instruction program, and a remittance instruction system for comprehensively handling payments from a plurality of payment companies for the convenience of customers.

**Solution to Problem**

The remittance instruction apparatus according to the first aspect of the present disclosure includes:

a key information storage unit configured to store each of a plurality of key information for a given user to use each remittance execution service in association with each of each of a plurality of remittance execution services for providing services to a plurality of registered users services for remittance of digital currency;
an identification unit configured to identify the key information in the key information storage unit based on the predetermined remittance execution service designated by the given user; and
a remittance instruction unit configured to, based on remittance information in which a remittance amount in a predetermined digital currency and a remittance destination are specified, give a remittance instruction to the predetermined remittance execution service, the remittance instruction to remit the remittance amount in the specified digital currency to a remittance destination address corresponding to the specified remittance destination using the identified key information,

wherein, each of the plurality of key information includes one or more keys that differ for each remittance execution service and includes information that can uniquely identify the given user in the remittance execution service.

## Advantageous Effects of Invention

According to the present disclosure, it is possible to provide a remittance instruction apparatus, a remittance instruction method, a remittance instruction program, and a remittance instruction system that comprehensively handle payments from a plurality of payment companies for the convenience of customers.

## Brief Description of the Drawings

Fig. 1 is a block diagram showing a hardware configuration for the remittance instruction apparatus according to the first embodiment;

Fig. 2 is a block diagram showing a configuration of an information system related to remittance of virtual currency and a sequence for registering a customer's key according to the first embodiment;

Fig. 3 is an example of a key information page displayed on the customer exchange according to the first embodiment;

Fig. 4 is an example of a key registration page displayed when the remittance instruction apparatus according to the first embodiment is accessed;

Fig. 5 is an example of a method that returns information capable of knowing the name of a key in the remittance instruction apparatus according to the first embodiment;

Fig. 6 is a flowchart showing a procedure for adding text boxes for inputting keys to a web page in the process of generating a key registration page on the remittance instruction apparatus according to the first embodiment;

Fig. 7 is an example of a Japanese translation table in the remittance instruction apparatus according to the first embodiment;

Fig. 8 is an example of a key information table in the remittance instruction apparatus according to the first embodiment;

Fig. 9 is a block diagram according to the first embodiment showing a configuration related to the payment procedure and a sequence for the flow of the payment procedure;

Fig. 10 is an example of a remittance approval page generated by the remittance instruction apparatus according to the first embodiment;

Fig. 11 is an example of a store information table that holds store information in the remittance instruction apparatus according to the first embodiment;

Fig. 12 is a block diagram showing a configuration of an information system related to remittance of virtual currency and a sequence for the payment procedure according to the second embodiment;

Fig. 13 is an example of a lookup table of the key definition table according to the second embodiment;

Fig. 14 is an example of a key information table according to the second embodiment;

Fig. 15 shows a procedure for adding text boxes for inputting keys to a web page in the process of generating a key registration page according to the second embodiment;

Fig. 16 is an example of a key registration page according to the second embodiment;

Fig. 17 is an example of a remittance approval page according to the second embodiment;

Fig. 18 is a flowchart for when obtaining a conversion rate on a remittance instruction apparatus according to a second embodiment;

Fig. 19 is a block diagram of a remittance approval sequence in the remittance instruction system according to the third embodiment;

Fig. 20 is an example of a remittance approval screen of a smartphone application on the remittance instruction system according to the third embodiment;

Fig. 21 is an example of a store information table that holds store information in the remittance instruction system according to the third embodiment;

Fig. 22 is an example of a remittance destination address generation control table that holds the attributes of each currency in the remittance instruction system according to the third embodiment;

Fig. 23 is an example of a database table that holds keys for generating a remittance destination address in the remittance instruction system according to the third embodiment;

Fig. 24 is a block diagram of a configuration and a remittance approval sequence of an information system for remittance of virtual currency according to the fourth embodiment;

Fig. 25 is an example of a remittance approval page on the remittance instruction apparatus according to the fourth embodiment;

Fig. 26 is a flowchart of a remittance instruction apparatus according to a fourth embodiment when an exchange order is placed on an exchange;

Fig. 27 is a block diagram of a configuration and a remittance approval sequence of an information system for remittance of virtual currency according to the fifth embodiment;

Fig. 28 is an example of a key information database in the remittance instruction apparatus according to the fifth embodiment;

Fig. 29 is an example of one entry of a transaction log in the remittance instruction apparatus according to the fifth embodiment;

Fig. 30 is an example of a withdrawal web page on the remittance instruction apparatus according to the fifth embodiment;

Fig. 31 is an example of one entry of a transaction log in the remittance instruction apparatus according to the fifth embodiment;

Fig. 32 is a block diagram of a configuration and a remittance approval sequence of an information system for remittance of virtual currency according to the sixth embodiment;

Fig. 33 is an example of a product page of the store server according to the sixth embodiment;

Fig. 34 is an example of an HTML description near the price display area of the product page according to the sixth embodiment;

Fig. 35 is a block diagram showing a hardware configuration of the remittance instruction apparatus according to the seventh embodiment;

Fig. 36 is a block diagram showing a configuration of an information system relating to remittance of virtual currency according to the seventh embodiment;

Fig. 37 is a diagram showing a sequence for registering a customer key according to the seventh embodiment;

Fig. 38 is an example of an exchange list screen displayed on the remittance instruction apparatus according to the seventh embodiment;

Fig. 39 is an example of a key registration screen displayed on the remittance instruction apparatus according to the seventh embodiment;

Fig. 40 is an example of a method for returning information capable of knowing the name of a key in the remittance instruction apparatus according to the seventh embodiment;

Fig. 41 is a flowchart showing a procedure for adding text boxes for inputting keys to the screen in the process of generating a key registration screen in the remittance instruction apparatus according to the seventh embodiment;

Fig. 42 is an example of a key information table in the remittance instruction apparatus according to the seventh embodiment;

Fig. 43 is a block diagram of a configuration and a remittance approval sequence for an information system for remittance of virtual currency according to the seventh embodiment;

Fig. 44 is a diagram showing a sequence when the remittance instruction apparatus sends a remittance instruction according to the seventh embodiment;

Fig. 45 is an example of a remittance approval screen on the remittance instruction apparatus according to the seventh embodiment;

Fig. 46 is a block diagram of a configuration and a remittance approval sequence of an information system related to remittance of digital currency according to the eighth embodiment;

Fig. 47 is a diagram showing a sequence when the remittance instruction apparatus sends a remittance instruction according to the eighth embodiment; and

Fig. 48 is an example of a remittance approval screen on the remittance instruction apparatus according to the eighth embodiment.

**Description of Embodiments**

Hereinafter, specific embodiments to which the present invention is applied will be described in detail with reference to the drawings. In each drawing, the same elements are designated by the same reference numerals, and duplicate description will be omitted as necessary for the sake of clarity. The money to be remitted in this embodiment is digital currency that represents currency electronically. Examples of digital currencies include virtual currencies and electronic money, but it does not matter whether or not cashing with legal tender is guaranteed. Further, the digital currency may be a legal tender in which coins or banknotes do not exist, or it may be a legal currency that can be exchanged for coins or banknotes. Further, https (Hypertext Transfer Protocol Secure) in the following description is only an example of encrypted communication, and other encrypted communication technology may be applied.

**First Embodiment**

In the present embodiment, the service function of a digital currency exchange is included in a remittance execution service, and an example will be shown in which the name of the key used in the remittance execution service is directly used in the user interface provided by the remittance instruction apparatus.

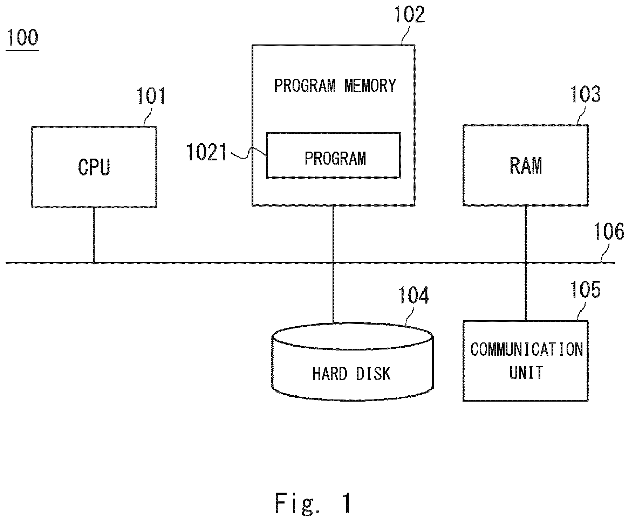

Fig. 1 is a block diagram showing a hardware configuration in the remittance instruction apparatus 100 according to the first embodiment. In the figure, the CPU (Central Processing Unit) 101 executes the program 1021 in which the processes of the remittance instruction apparatus according to the present embodiment are implemented. The program memory 102 stores the program 1021 executed by the CPU 101. The RAM (Random Access Memory) 103 is a volatile storage device that temporarily stores various information when a program is executed by the CPU 101. When the program is executed by the CPU 101, the RAM 103 can be implemented so as to serve as the program memory 102 by storing the program 1021. The hard disk 104 is a non-volatile storage device that stores various information for a longer period than the RAM 103. The communication unit 105 is used to communicate with other devices. The CPU 101, the program memory 102, the RAM 103, the hard disk 104, and the communication unit 105 are connected by the bus 106, which is used to transfer data and control signals to each other. Although program execution by the CPU will be described in this specification, the same function can be implemented in an integrated circuit such as an FPGA (Field-Programmable Gate Array).

Further, the database functionality is used in the present embodiment, and the data stored in the database is stored in the hard disk 104, the RAM 103, or the like. Alternatively, it can be stored on another apparatus and can be read and written by using the communication unit 105.

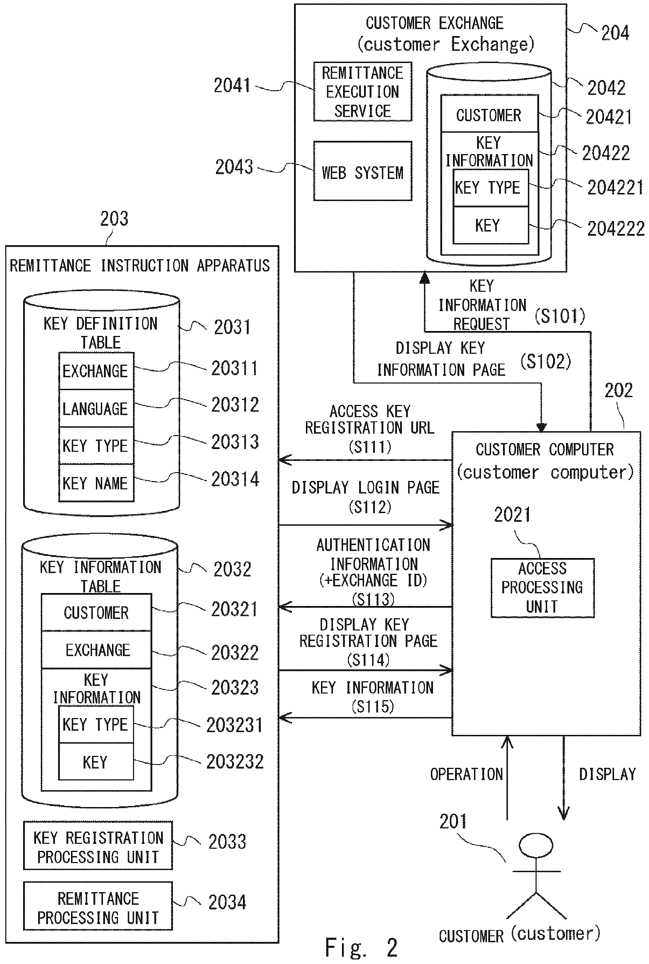

Fig. 2 is a block diagram showing a configuration of an information system related to remittance of virtual currency and a sequence when registering a customer's key according to the present embodiment. Here, the customer exchange 204 is an information system operated by a virtual currency exchange company that mediates remittance of one or more types of virtual currencies (including transactions such as exchanges between currencies). The customer exchange 204 includes a remittance execution service 2041 that provides a service for remittance of a plurality of virtual currencies to each of a plurality of (registered) users (for example, customer 201) managed by the customer exchange 204. Here, it is assumed that the customer exchange 204 and the remittance execution service 2041 have a one-to-one correspondence. The customer exchange 204 stores the key information table 2042, and the key information table 2042 stores the key information 20422 in association with each customer 20421. The key information 20422 includes a plurality of pairs of a key (API key or the like) 204222 for using the API (Application Programming Interface) provided as the remittance execution service 2041 and a key type 204221 which is its type. That is, the customer 20421 and the key information 20422 have a one-to-one correspondence, and the key information 20422 includes one or more pairs of the key type 204221 and the key 204222. Therefore, each key 204222 is different for each customer 20421. The customer exchange 204 has a function as a web system 2043, and in response to a key information request from the customer 201, the key information 20422 (a set of key type 204221 and key 204222) from the key information table 2042, in which the customer 201 is associated with the customer 20421, is read and provided. However, the method of storing the key and the method of output or notification are not limited to this.

The customer computer 202 is a computer terminal operated by the customer 201, and is, for example, a personal computer, a smartphone, a tablet, or the like on which a browser or the like (access processing unit 2021) operates. The customer 201 is an example of a "remittance source" and a user who uses a given remittance execution service.

The remittance instruction apparatus 203 is an information processing apparatus that manages key information for each customer and exchange and can give remittance instructions to a plurality of exchanges. The remittance instruction apparatus 203 may be realized by being distributed or made redundant by a plurality of information processing apparatuses. The remittance instruction apparatus 203 includes a key definition table 2031, a key information table 2032, a key registration processing unit 2033, and a remittance processing unit 2034. The key definition table 2031 is a table that stores the definition related to the key for each of the plurality of remittance execution services. Here, the key definition table 2031 is a table that holds for each exchange and language the character strings of the names of each key required when using the API of the remittance execution service provided by the exchange. The key definition table 2031 associates the exchange 20311, the language 20312, the key type 20313, and the key name 20314. There needs to be at least one or more key names for each exchange. As a matter of course, the key type 20313 does not have to have the same contents as those of the key type 204221, and the key type may be represented by a position in the array. Further, the key definition table 2031 may be a separate table for each language.

The key information table 2032 is a table that manages key information 20323 for each customer 20321 and exchange 20322. The key information 20323 includes a plurality of pairs of the key type 203231 and the key 203232. Further, the key information 20323 is different for each pair of customer 20321 and exchange 20322, and may include at least one key and information that can uniquely identify the customer 20321 on the exchange 20322. For example, one of the keys is the user identifier of the customer 20321 on the exchange 20322, or information that can be converted into the user identifier. Further, for example, another key is a private key for encryption / digital signature used for communicating with the exchange 20322.

The key registration processing unit 2033 generates and returns a key registration page by referring to the key definition table 2031 in response to a key registration request from the customer, and the key input via the key registration page is stored in the key information table 2032. The remittance processing unit 2034 gives remittance instruction to the specified exchange using the key registered in the key information table 2032 to transfer the specified amount of the specified virtual currency to the remittance destination in response to a remittance request from the customer.

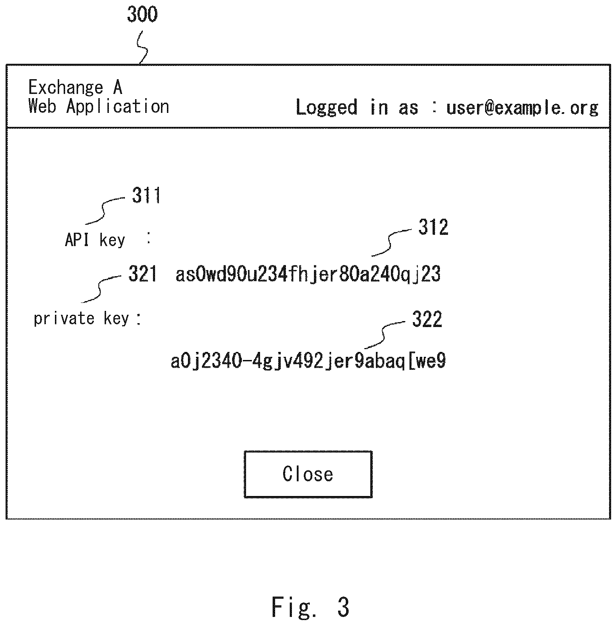

Subsequently, the flow of the process of registering the customer's key will be described with reference to Fig. 2. First, the access processing unit 2021 of the customer computer 202 transmits a key information request to the customer exchange 204 in response to the operation of the customer 201 (S101). For example, the customer computer 202 logs in to the website of the customer exchange 204 to which the customer 201 has an account, and the web system 2043 of the customer exchange 204 refers to the key information table 2042 and reads the key information 20422 associated with the customer 201. A key information page in which the key 204222 is associated with the character string of the name of the key type 204221 is generated, and the key information page is transmitted to be displayed on the customer computer 202 (S102). Since the communication method between the customer exchange 204 and the customer computer 202 is not covered by the present invention, the description thereof will be omitted. The access processing unit 2021 displays the key information page received from the customer exchange 204 on the screen (not shown). It is assumed that the key information page 300 displayed on the customer computer 202 has two keys as shown in Fig. 3, and these two keys have the key name 311 "API key" and the key name 321 "private key", respectively. Then, the key information page 300 displays the key 312 associated with the key name 311 and the key 322 associated with the key name 321. Therefore, the customer 201 can obtain the key by visually observing and copying the character string of the key for each key name on the key information page 300 displayed on the screen of the customer computer 202.

Next, the customer 201 operates the customer computer 202 to register the key obtained earlier in the remittance instruction apparatus 203. In the present embodiment, the remittance instruction apparatus 203 has a function of a web server. Therefore, in principle, the customer computer 202 and the remittance instruction apparatus 203 communicate using https. First, the access processing unit 2021 of the customer computer 202 accesses the web page for key registration provided by the remittance instruction apparatus 203 (key registration URL (Uniform Resource Locator)) (S111), and if the customer 201 has not yet logged in, the remittance instruction apparatus 203 returns a login page to the customer computer 202 (S112). In response to this, the access processing unit 2021 displays the received login page on the screen. When the customer 201 inputs the username and password to the login page, the access processing unit 2021 transmits these to the remittance instruction apparatus 203 as authentication information (S113). In addition, the access processing unit 2021 may also transmit the identification information of the exchange (exchange ID, etc.) in which the key is registered to the remittance instruction apparatus 203. Alternatively, the identification information may be included in the key registration URL. If this authentication information matches the information registered in advance in the remittance instruction apparatus 203, the key registration processing unit 2033 of the remittance instruction apparatus 203 generates a key registration page. Here, the key registration processing unit 2033 refers to the key definition table 2031 and reads the key type 20313 and the key name 20314, based on the exchange ID received in step S113, etc. and the display language of the access processing unit 2021, and generates a key registration page that includes a key entry field corresponding to the key name 20314. Then, the key registration processing unit 2033 transmits the generated key registration page to the customer computer 202 (S114). At this point, to maintain the authentication state, the key registration processing unit 2033 can also send a cookie to the customer computer 202. The access processing unit 2021 displays the key registration page received from the remittance instruction apparatus 203 on the screen.

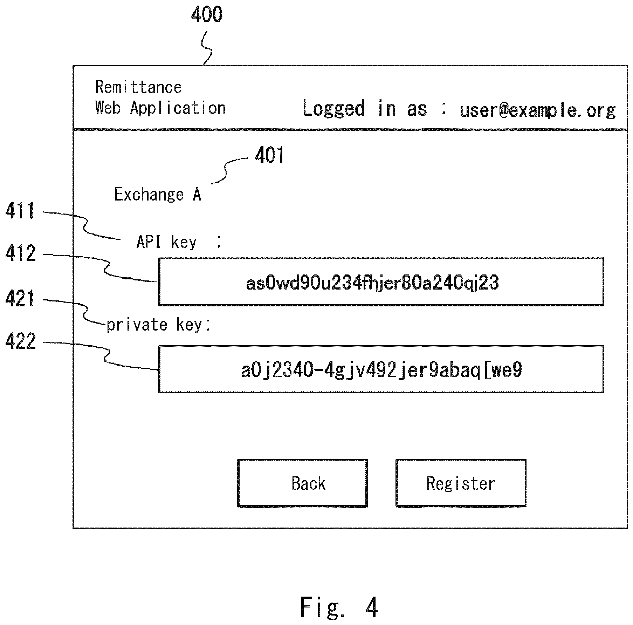

The key registration page 400 displayed on the customer computer 202 includes text boxes (key entry fields 412 and 422) for inputting the keys corresponding to the key name 411 "API key" and the key name 421 "private key" for the exchange name 401, as shown for example in Fig. 4. The customer 201 inputs the information copied from Fig. 3 into the key input fields 412 and 422 corresponding to the "API key" and the "private key" respectively on the key registration page 400 displayed on the customer computer 202.

Here, the names (key names) of "API key" and "private key" are matched with the expressions (character strings) used by the information system of the customer exchange 204. This is possible because the key names are stored in the key definition table 2031 for each exchange and language. By doing so, once the implementation of the generation process of the key registration page (web page) in the key registration processing unit 2033 is completed, even a back-end engineer who does not know front-end technology such as HTML can automatically generate a key registration page just by writing a program corresponding to the exchange and writing the correspondence of the names of these keys. This is quite important because it allows a small number of people to respond quickly to more exchanges. In addition, since the key name between the key registration page and the key information page of the exchange is consistent, the customer does not have to wonder which key to enter, which is useful from the viewpoint of usability.

One way to do the above is to use object-oriented inheritance and internationalization technology. Here, Fig.

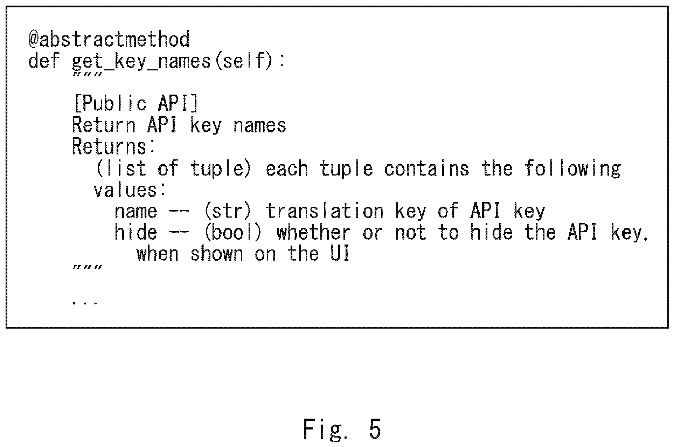

5 shows a specific example in the Python language. The backend engineer only needs to define the method in Fig. 5 for all exchange classes. Here, the exchange class is defined for each customer exchange and holds information about each exchange. The method of Fig. 5 performs a process of arranging and returning pairs (tuples) of a character string (str) and a Boolean value (bool) in an array (list). Here, an element of the array corresponds to one key. Therefore, when there are two keys, the length of the array is two.

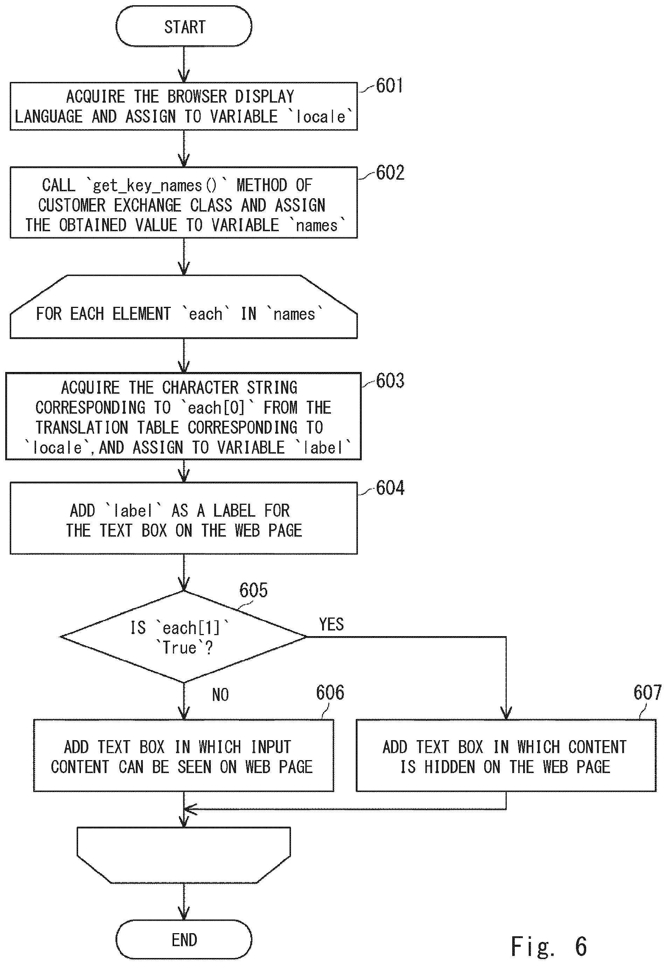

The key registration processing unit 2033 generates the web page of Fig. 4 based on this information. Here, Fig. 6 shows a procedure for adding text boxes for inputting keys to a web page in the process of generating a key registration page. As a premise, at the beginning of the procedure, it is assumed that the part before the text boxes on the web page has already been generated. Further, the key registration processing unit 2033 identifies the exchange ID received in step Sill or step S113. First, in step 601 the key registration processing unit 2033 acquires the display language selected by the browser of the customer computer 202 and assigns it to the variable 'locale'. Next, in step 602, the key registration processing unit 2033 calls the method of Fig. 5 and assigns the obtained array to a variable called 'names'. Then, step 603 to step 606 or step 607 are repeated for each element of the array 'names' (that is, as 'each'). In step 603, the key registration processing unit 2033 first acquires the character string corresponding to the first element of 'each' from the translation table (key definition table 2031) corresponding to 'locale', and assigns this to the variable 'label'. The translation table will be described later. In the next step 604, the key registration processing unit 2033 adds the character string assigned to the variable 'label' as a label attached to the text box on the web page. Here, the second element of 'each' represents the attribute of the text box. When the key registration processing unit 2033 determines in step 605 that 'each[1]' is 'True', the key registration processing unit 2033 adds a text box in which the character string input by the customer 201 in step 607 is displayed in hidden characters on the web page. On the contrary, when 'each[1]' is 'False', the key registration processing unit 2033 adds a text box in which the input contents can be seen on the web page. After the above loop, the key registration processing unit 2033 adds the remaining part of the web page to complete the web page.

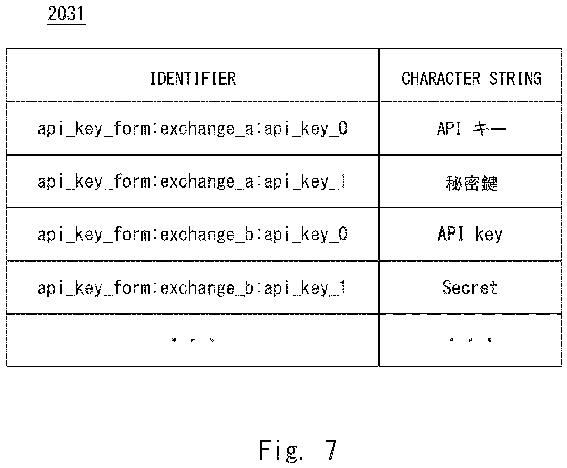

Here, the above-mentioned translation table (key definition table 2031) is a lookup table as shown in Fig. 7, for example. The character string in the left column (key) is searched, and the character string from the right column (key name 20314) is obtained. Here, the "key" is, for example, a combination of the exchange 20311 and the key type 20313 but is not limited thereto. Fig. 7 is an example of a Japanese translation table. Such a translation table is prepared for the number of supported languages (language 20312). A translation table may be prepared for each exchange and each language, but in this example, the character strings of the key names 20314 used in all exchanges are held in one translation table. The character string in the left column (key) is the character string returned by the method of Fig. 5. The translation table may be read from a file on the hard disk 104 or a table in the database, wherever the storage location is. By having a translation table in a place other than the program, even a person in charge who is not a programmer can have the expression on the key registration page follow when the expression on the exchange changes.

The explanation will be continued by returning to Fig. 2. The access processing unit 2021 transmits to the remittance instruction apparatus 203 the key information (S115), in which the key character strings input in the key input fields 412 and 422 of the key registration page 400 of Fig. 4 are associated with the key types corresponding to the key names 411 and 421, respectively. Then, the key registration processing unit 2033 registers the received key information in the key information table 2032. For example, the key registration processing unit 2033 adds to or updates the key information table 2032 with the logged-in user as the customer 20321 and the exchange ID as the exchange 20322 in association with the set of the key type 203231 and the key 203232 included in the received key information.

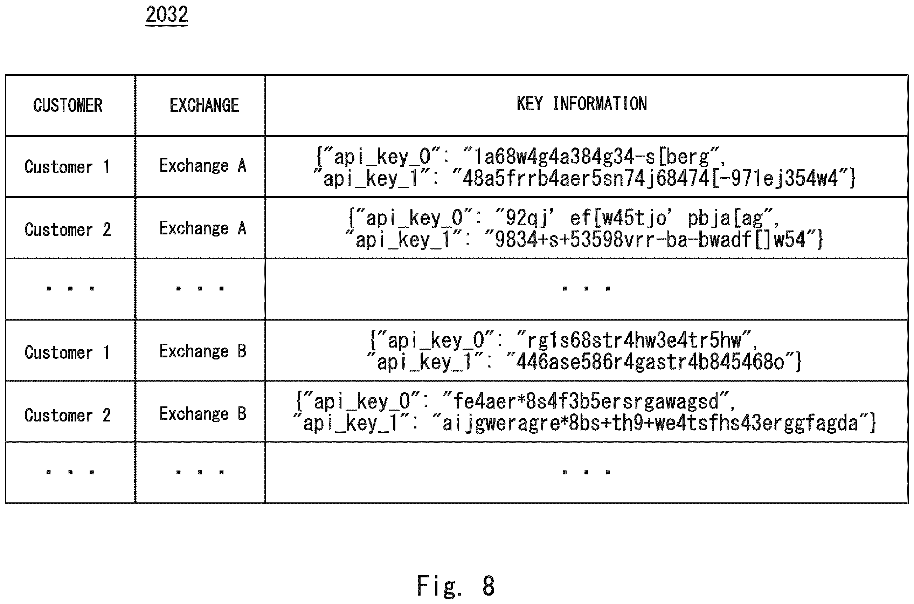

Here, an example of the key information table 2032 is shown in Fig. 8. An identifier (exchange ID, etc.) representing an exchange is held in the Exchange column. An identifier representing a customer (logged-in user ID, etc.) is held in the Customer column. In the Key information column, the key input in Fig. 4 is held in json (JavaScript (registered trademark) Object Notation) format. Each pair in json format is the internal name of the key and the value of the key entered in Fig. 4. The key information may be an array, but the key information is held in a variable length structure because the number of keys differs depending on the exchange. The key information should be encrypted to ensure security, but the description will be omitted because a publicly known technique can be used for encryption. Further, for an exchange where there is a way of obtaining an access token by a method such as OAuth, the token can be obtained by this method and registered in the key information table 2032 using the token as a key.

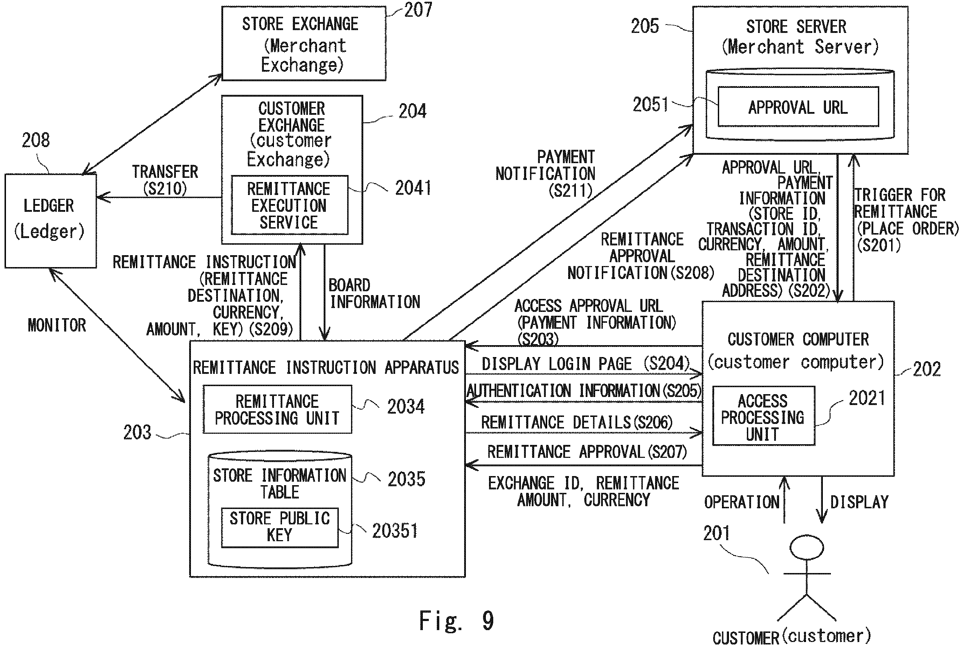

Subsequently, the configuration related to the payment procedure according to the present embodiment will be described with reference to Fig. 9. First, in Fig. 9, a part of the configuration of Fig. 2 is omitted, and a configuration related to the payment procedure is added. The remittance instruction apparatus 203 shall include a store information table 2035 in addition to the configuration shown in Fig. 2. The store information table 2035 is a table that manages information about the store that operates the store server 205, which will be described later. In particular, it is assumed that the store information table 2035 manages the store public key 20351 for each store. The store public key 20351 is a public key for encryption on the store server 205. Other configurations of the store information table 2035 will be described later.

The store server 205 is a computer device that provides a website for electronic commerce. The store server 205 corresponds to the store operator that operates the server and can be said to be an example of a "remittance destination". The store server 205 stores the approval URL 2051 in the storage device. The approval URL 2051 is the URL of the remittance instruction apparatus 203 that the customer computer 202 should access for remittance approval. Since other configurations of the store server 205 can be realized by using known techniques, a detailed description thereof will be omitted. The store exchange 207 is a virtual currency exchange in which the merchant who operates the store server 205 is registered as a user. Therefore, since the configuration of the store exchange 207 is like that of the customer exchange 204, a detailed description thereof will be omitted. Ledger 208 is drawn as a functional block for convenience to be a transaction record of any virtual currency, for example, a blockchain.

Based on the above, the flow of the payment procedure will be described with reference to Fig. 9. First, the customer 201 enters the ordering sequence on the store server 205 using the customer computer 202. The ordering sequence is different for each store and will not be described here. The customer 201 performs an operation to confirm the purchase at the end of the ordering sequence. Depending on the store, the customer 201 clicks the button "Place Order". As a result, the access processing unit 2021 transmits a trigger to the store server 205 for starting a remittance (S201). Then, the store server 205 digitally signs a set of the store ID, transaction ID, currency, amount, and remittance destination address (hereinafter referred to as "payment information") with the private key (secret key) of the store server 205, and returns this with the approval URL 2051 for remittance approval to the customer computer 202 (S202). Here, the "store ID" is an identifier unique to the store. The "transaction ID" is unique within the same store and is an identifier that identifies the payment. The access processing unit 2021 stores the received payment information with the digital signature in the body part, and issues (accesses) a POST request to the approval URL 2051 by https (S203). The remittance processing unit 2034 of the remittance instruction apparatus 203 confirms that the received payment information is digitally signed by the private key of the store server 205 by using the store public key 20351. Then, if the user is not logged in at this point (if a valid cookie is not stored in the customer computer 202), the remittance processing unit 2034 returns the login page to the customer computer 202 (S204). In response to this, the access processing unit 2021 displays the received login page on the screen. When the customer 201 inputs the username and password on the login page, the access processing unit 2021 transmits the authentication information (including the input username and password pair) to the remittance instruction apparatus 203 (S205). If the received authentication information matches the information stored in advance, the remittance processing unit 2034 will generate a web page (remittance approval page) that includes the currency and amount from the payment information. Then, the remittance processing unit 2034 transmits the generated remittance approval page to the customer computer 202 as remittance details (S206). The access processing unit 2021 displays the remittance approval page received from the remittance instruction apparatus 203 on the screen.

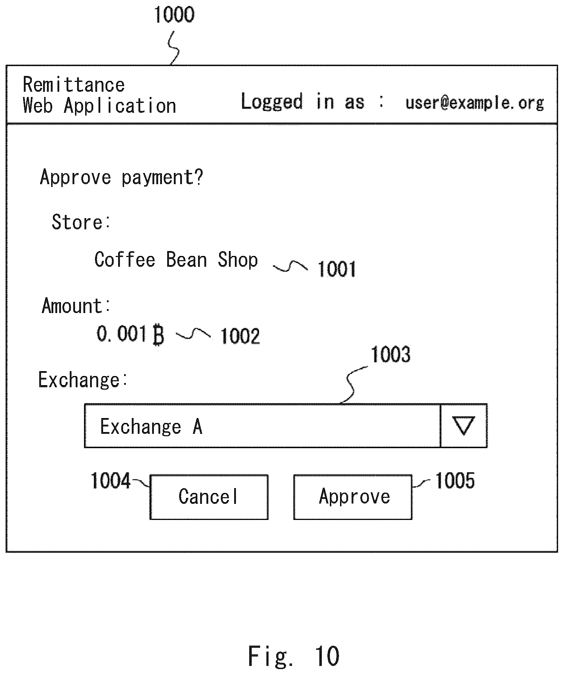

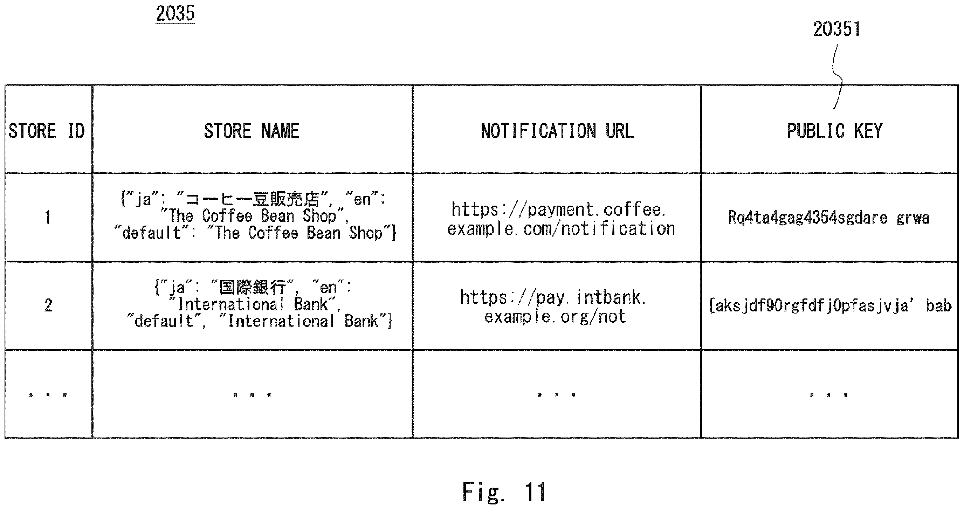

Fig. 10 is an example of the remittance approval page 1000 according to the first embodiment. The remittance approval page 1000 includes a store name 1001, a remittance amount 1002, an exchange selection field 1003, a Cancel button 1004, an Approve button 1005, and the like. The store name 1001 is an area for displaying the store name of the remittance destination. Here, the store information table 2035 included in the remittance instruction apparatus 203 has the configuration shown in Fig. 11 as an example. Here, the json format data is stored in the Store name column. It has the display language as keys in the structure and store names as the values. If the structure does not contain the desired language, the value for the key "default" will be used. Therefore, the remittance processing unit 2034 searches the store information table 2035 by the store ID included in the received payment information and acquires the store name. Here, the remittance processing unit 2034 can acquire the store name corresponding to the display language by searching this structure using the display language specified in the browser of the customer computer 202 as a key. Then, the remittance processing unit 2034 inserts the acquired store name into the store name 1001 on the remittance approval page 1000. Of course, the table in Fig. 11 may have other columns for the store.

The remittance amount 1002 is an area for displaying the amount of money remitted from the customer side to the store side in connection with the order. Therefore, the remittance instruction apparatus 203 inserts the amount in the currency included in the received payment information into the remittance amount 1002. Here, when the base currency is stored in the database in the remittance instruction apparatus 203 as set by the customer 201, the converted amount obtained by converting the remittance amount into the value of the base currency can be added to the web page. As a result, the customer 201 can easily grasp the present value of the remittance amount based on the amount converted into their base currency. For that purpose, the remittance instruction apparatus 203 needs to obtain the board information from the customer exchange 204 in advance. The "board information" is a list of bid and ask prices between two currencies on the exchange. If the board information is a list of buying and selling of the remittance currency expressed in the base currency, the converted amount of the remittance amount is (remittance amount x maximum bid price - exchange fee). On the other hand, when the board information is a list of buying and selling of the base currency expressed in the remittance currency, the converted amount of the remittance amount is (remittance amount / maximum ask price - exchange fee). If the exchange fee is deducted in the remittance currency, it is ((remittance amount - exchange fee) x maximum bid price) and ((remittance amount - exchange fee) / maximum ask price), respectively. Here, the maximum bid price or the minimum ask price can be regarded as the conversion rate.

8

Further, the exchange selection field 1003 is a drop-down menu for selecting the exchange of the remittance source. The remittance processing unit 2034 acquires from the key information table 2032 a list of exchanges that are registered the keys associated with the logged-in customer 201. Then, the remittance processing unit 2034 generates the remittance approval page 1000 so that the acquired list is displayed when the exchange selection field 1003 is selected. Therefore, the customer 201 can select a desired exchange from the displayed list. The customer exchange 204 can later determine the remittance source by identifying the account of the customer 201 based on this key associated with the customer 201 who is logged in. When the customer 201 selects another exchange in the exchange selection field 1003 while the above converted amount is displayed, the access processing unit 2021 notifies the remittance instruction apparatus 203 to that effect. Then, the remittance processing unit 2034 recalculates the converted amount at the selected exchange based on the above, updates the web page, and transmits it to the customer computer 202. As a result, the access processing unit 2021 displays the converted amount after the update.

Also, the Cancel button 1004 is for stopping the payment process. When the customer 201 selects the Cancel button 1004, the access processing unit 2021 notifies the remittance instruction apparatus 203 to that effect, the remittance processing unit 2034 notifies the store server 205 to cancel the payment process, and the payment process is canceled. Specifically, the remittance processing unit 2034 may realize "notification" by acquiring a URL character string from the Notification URL column corresponding to the store in the store information table 2035, and sending a POST request to the store server 205 to the URL with /cancel added to the end. Here, the remittance processing unit 2034 inserts the information including the transaction ID digitally signed with the private key of the remittance instruction apparatus 203 into the body of the POST request. The store server 205 cancels the order based on this transaction ID.

The Approve button 1005 is for the customer 201 to allow the remittance and continue the payment process. When the customer 201 selects the Approve button 1005, the access processing unit 2021 notifies the remittance instruction apparatus 203 of the approval of remittance for the currency, the remittance amount, and the exchange displayed on the remittance approval page 1000 (S207). The remittance processing unit 2034 notifies the store server 205 of the remittance approval (S208). Specifically, the remittance processing unit 2034 may realize "notification" by acquiring a URL character string from the Notification URL column corresponding to the store in the store information table 2035, and sending a POST request to the URL with /confirmed added at the end. Here, the remittance processing unit 2034 inserts the information that includes the transaction ID digitally signed with the private key of the remittance instruction apparatus 203 into the body of the POST request.

After sending the remittance approval notification to the store server 205, the remittance processing unit 2034 of the remittance instruction apparatus 203 transmits the remittance instruction to the customer exchange 204 (S209).

More specifically, the remittance processing unit 2034 identifies and reads from the key information table 2032 the key information that corresponds to the user (logged-in user) who has permitted or approved the remittance and the approved exchange (the exchange selected on the remittance approval page 1000, that is, the remittance execution service 2041). Then, the remittance processing unit 2034 uses the identified key information to transmit a remittance instruction to the remittance execution service 2041 of the selected exchange (here, the customer exchange 204) to transfer the digital currency and the remittance amount permitted to the remittance destination address of the store, which is the remittance destination.

Here, the method of sending the remittance instruction differs depending on the exchange. For example, the remittance instruction is sent by sending a POST request to https://exchange.com/api/withdraw. Here, the remittance processing unit 2034 includes in the body of the request the following information digitally signed using one of the keys (for example, a private key) in the Key information column of the row corresponding to the exchange in the key information table 2032.

- another key (for example, the API key) taken from the Key information column of the row corresponding to the exchange in the key information table 2032
- (approved) currency
- (approved) remittance amount
- (approved) remittance destination address

When the remittance execution service 2041 of the customer exchange 204 receives the remittance instruction from the remittance instruction apparatus 203, the remittance execution service 2041 identifies the user (customer 201) based on the key information in the remittance instruction, and identifies the remittance source address available to the user for the currency and remittance amount in the remittance instruction. For example, the remittance execution service 2041 identifies the user as customer 201 and the user's key with the API key included in the received remittance instruction. Then, the remittance execution service 2041 verifies the digital signature of the information included in the received remittance instruction with the identified key, and when verified, the remittance source address corresponding to the identified user is determined based on the currency included in the received remittance instruction. Here, the remittance execution service 2041 may use a fixed remittance source address or a dynamically generated remittance source address.

After this, the remittance execution service 2041 transfers the remittance amount included in the remittance instruction from the determined remittance source address to the remittance destination address included in the remittance instruction by writing the fact of transfer (transaction record) to the ledger 208 corresponding to the currency included in the remittance instruction (S210). For example, when the currency is Bitcoin, the remittance execution service 2041 records the remittance facts on the Bitcoin blockchain.

After issuing the remittance instruction to the customer exchange 204, the remittance processing unit 2034 of the remittance instruction apparatus 203 continues to monitor the ledger 208 and determines whether or not remittance to the remittance destination address can be regarded as completed. When the currency is Bitcoin, the remittance processing unit 2034 considers that the remittance has been completed when confirmation is made a predetermined number of times on the blockchain. The remittance processing unit 2034 considers that the remittance is completed when the transaction record corresponding to the predetermined digital currency specified in the remittance information satisfies a confirmation condition. Here, the confirmation conditions may be variable. For example, the confirmation conditions may be updated by the remittance instruction apparatus 203 or an external apparatus (for example, a store server 205, etc.). When it is considered that the remittance is completed, the remittance processing unit 2034 sends a payment notification to the store server 205 (S211). Specifically, the remittance processing unit 2034 may realize "payment notification" by acquiring a URL character string from the column for the notification URL corresponding to the store in the store information table 2035, and sending a POST request to the URL with /transferred added at the end. Here, the remittance processing unit 2034 inserts the information including the transaction ID digitally signed with the private key of the remittance instruction apparatus 203 into the body of the POST request.

In the above description, any mention related to a load balancer for processing more requests is omitted. However, in this embodiment, known techniques such as load balancers can be used for distribution of load for a large number of requests. The key registration processing unit 2033 is an example of a key registration unit. The remittance processing unit 2034 is an example of a remittance information acquisition unit, a verification unit, a conversion unit, a display information generation unit, an identification unit, a remittance instruction unit, and a remittance notification unit. The CPU 101 in the remittance instruction apparatus 100 functions as the key registration processing unit 2033 and the remittance processing unit 2034 by executing the program 1021. Further, the "payment information" is an example of remittance information in which the remittance amount and the remittance destination in a predetermined digital currency are specified.

As described above, in the present embodiment, an example of the remittance instruction apparatus was shown in which the remittance details are displayed on the customer computer after the customer is authenticated. In the present embodiment, by storing the names of the keys presented by the customer exchange for each exchange and each display language, the customer can register those keys in the remittance instruction apparatus without confusion. Therefore, the convenience for customers who use a plurality of exchange companies can be improved. In addition, by doing so, it is possible to improve the development efficiency of the remittance instruction apparatus at the same time and respond to more exchanges faster. That is, it is possible to comprehensively handle remittance instructions for a plurality of exchange companies.

**Second Embodiment**

The second embodiment is a modification of the first embodiment and shows an example of a system in which remittance approval is performed at the same time as customer authentication, thus giving priority to the efficiency of the remittance approval sequence.

The hardware configuration of the remittance instruction apparatus according to the second embodiment is the same as that shown in Fig. 1. Therefore, the same functionality can be realized with similar configurations of other integrated circuits such as FPGAs. However, it is assumed that the processes of the remittance instruction apparatus according to the second embodiment are implemented in a program 1021.

The sequence for registering the key shall follow Fig. 2 as in the first embodiment. However, the second embodiment shows an example in which development efficiency is prioritized as compared with the first embodiment. Specifically, only the number and order of keys are matched between the customer exchange and the key registration page.

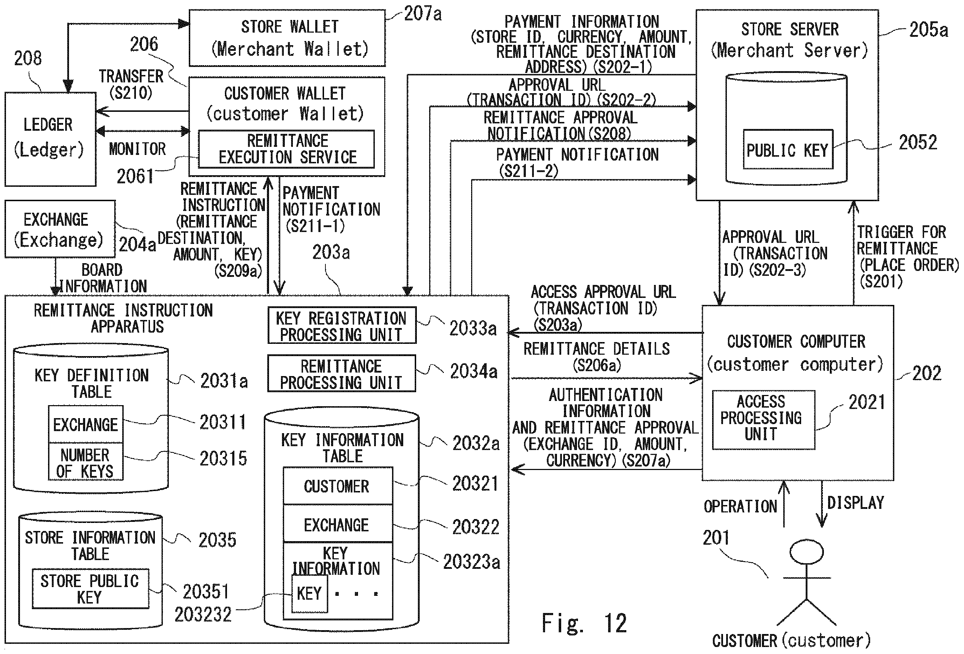

Fig. 12 is a block diagram showing a configuration of an information system and a sequence of the payment procedure related to remittance of virtual currency according to the present embodiment. The same components are designated by the same reference numerals as those in Fig. 2 and Fig. 9, and thus the description thereof will be omitted. Unlike the remittance instruction apparatus 203, the remittance instruction apparatus 203a includes a key definition table 2031a, a key information table 2032a, a key registration processing unit 2033a, and a remittance processing unit 2034a.

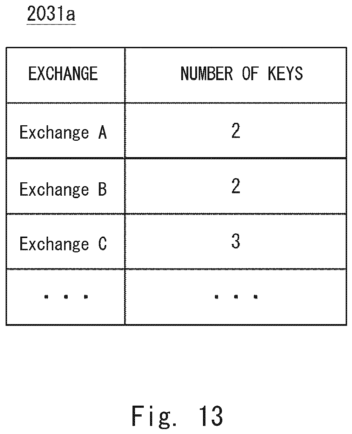

The key definition table 2031a is a table that manages the number of keys 20315 for each exchange 20311. As one method of realizing the key definition table 2031a, there is a method of using a lookup table. Needless to say, instead of storing the number of keys, it can be realized even in the first embodiment by storing the key names and appropriately counting the number of key names using a table. Fig. 13 shows an example of a lookup table for the key definition table 2031a.

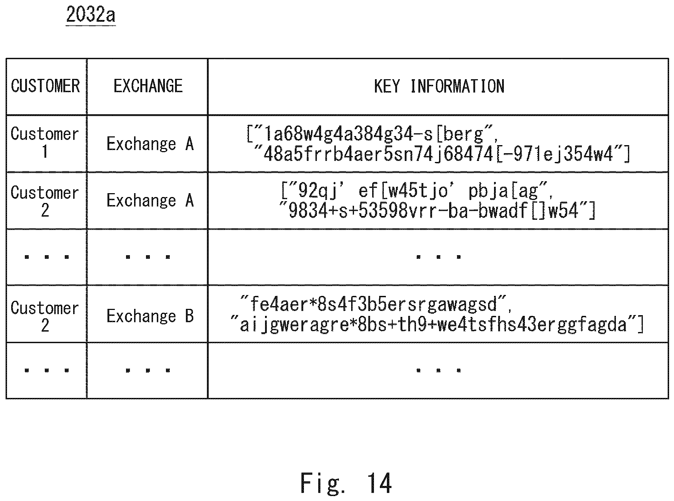

The explanation will be continued by returning to Fig. 12. The key information table 2032a is a table that manages key information 20323a for each customer 20321 and exchange 20322. The key information 20323a holds a plurality of keys 203232 in the order of registration. Fig. 14 shows an example of the key information table 2032a. The key information column indicates that multiple keys are connected by commas (,) in the order of registration. Here, key information is expressed as a variable length array. Here, the order in which the key information is stored in the array corresponds to the order in which the key information is displayed on the key registration page described later.

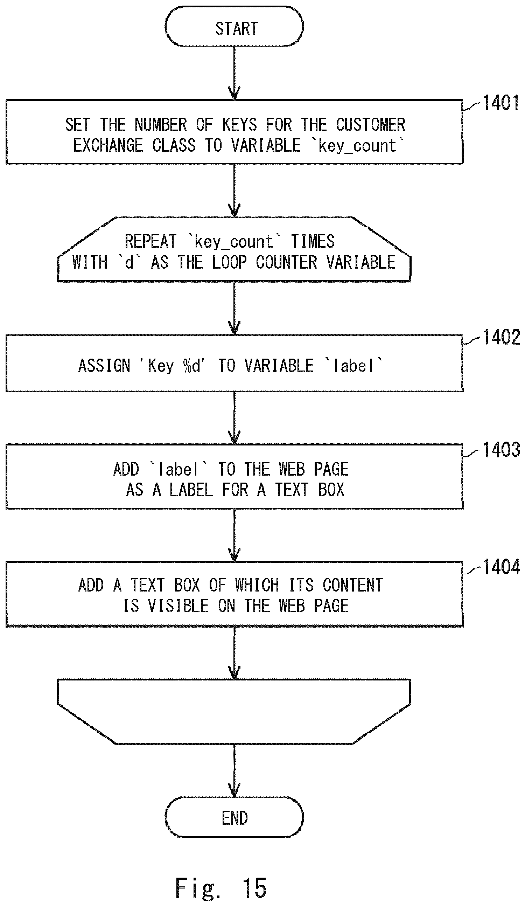

The explanation will be continued by returning to Fig. 12. The key registration processing unit 2033a generates and returns a key registration page by referring to the key definition table 2031a in response to a key registration request from a customer, and registers the key input via the key registration page in the key information table 2032a. Fig. 15 shows a procedure for adding text boxes for inputting keys to a web page in the process of generating a key registration page in the present embodiment. It is assumed that the upper part of the web page has already been generated before executing the flow of Fig. 15. First, in step 1401, the key registration processing unit 2033a searches the key definition table 2031a by the transaction ID received from the customer computer 202, acquires the number of keys for the corresponding exchange, and sets the acquired number of keys to a variable "key_count". Next, steps 1402 to 1404 are repeated 'key_count' times with the loop counter variable in an ascending order as "d". In step 1402 at the beginning of the loop, the key registration processing unit 2033a assigns the character string "Key %d" to the variable "label". Here, %d is a format specifier, and indicates that the part of %d is replaced by the value (integer) of the variable 'd' in the actually displayed character string. Next, in step 1403, the key registration processing unit 2033a adds a label for displaying the value of the variable "label" to the web page. In the next step 1404, the key registration processing unit 2033a adds a text box along with the label added in step 1403. After executing the flow, the key registration processing unit 2033a completes the rest of the web page. As a result, a web page (key registration page) is generated containing text boxes with their labels according to the number of keys on the exchange.

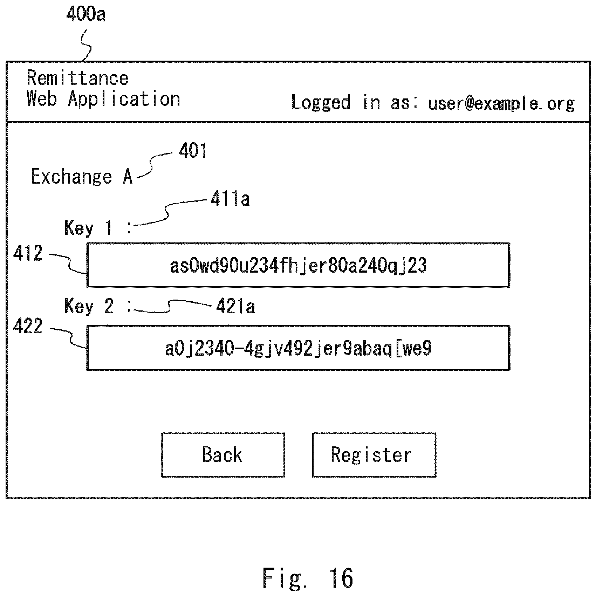

Fig. 16 is an example of the key registration page 400a in this embodiment. On the key registration page 400a, unlike on the key registration page 400 of Fig. 4, the key names 411a and 421a are shown to have become assigned numbers ("1", "2") indicating the order together with a general notation ("Key"). That is, the key names 411a and 421a are the same regardless of the exchange.

The customer 201 inputs the keys obtained from the customer exchange 204 on the key registration page 400a displayed on the customer computer 202. In response to this, the access processing unit 2021 transmits to the remittance instruction apparatus 203a the key information in which the character strings of the keys input in the key input fields 412 and 422 of the key registration page 400a are associated with the display order. Here, the access processing unit 2021 associates the key character string input in the key input field 412 with the display order "1" and the key character string input in the key input field 422 with the display order "2" and uses them as key information. Then, the key registration processing unit 2033a adds to or updates the key information table 2032a with the keys 203232 in the order included in the received key information, with the logged-in user as the customer 20321 and the exchange ID as the exchange 20322.

The explanation will be continued by returning to Fig. 12. In this embodiment, it is assumed that the customer wallet 206 that handles the currency of the customer 201 and the exchange 204a are different services. This corresponds to the case where the customer wallet 206 has the functions of deposit management and remittance execution but does not have the exchange function, or the case where the customer exchange (wallet) does not handle the base currency specified by the customer 201. Further, the customer wallet 206 has a remittance execution service 2061 that can be used by using the key 203232 stored in the key information table 2032a. Although the store wallet 207a is a service different from the store exchange 207, the store exchange 207 may be used. Further, the store server 205a further stores the public key 2052 in the storage device in addition to the configuration of the store server 205 described above. Here, the public key 2052 is a public key for encryption of the remittance instruction apparatus 203a. On the other hand, the store server 205a does not store the approval URL in the storage device in advance.

Subsequently, the flow of the payment procedure will be described with reference to Fig. 12. First, the customer 201 begins the ordering sequence on the store server 205a using the customer computer 202. The customer 201 performs an operation to confirm the purchase at the end of the ordering sequence. As a result, the access processing unit 2021 transmits a trigger for starting remittance to the store server 205a (S201). Here, the store server 205a is connected to the remittance instruction apparatus 203a for a long period of time in a bidirectional communication session such as WebSocket Secure. Then, the store server 205a sends to the remittance instruction apparatus 203a information (hereinafter referred to as "payment information") with the set of the store ID, currency, amount, and remittance destination address digitally signed with the private key of the store server 205a (S202-1). That is, the payment information according to the second embodiment does not have to include the transaction ID. After using the store public key 20351 to confirm the digital signature of the store server 205a, the remittance processing unit 2034a of the remittance instruction apparatus 203a generates a transaction ID. The information with the transaction ID digitally signed with the private key of the remittance instruction apparatus 203a (hereinafter, simply referred to as "transaction ID") is then added as a parameter to the approval URL for remittance approval and transmitted to the store server 205a (S202-2). Here, it is desirable that the transaction ID be generated according to a rule that cannot be used by other apparatuses. For example, it is possible to use an identifier that is a continuously generated numerical value digitally signed with a private key of the remittance instruction apparatus 203a. Further, the remittance instruction apparatus 203a stores the transaction ID and the payment information mentioned above in a database (not shown) in association with each other. It is also possible to record the creation time at the same time. If the WebSocket Secure is set to require the SSL certificate of the store server 205a, the payment information does not have to be digitally signed.

The store server 205a transmits the received approval URL (including the transaction ID in the parameter) to the customer computer 202 (S202-3). Then, the customer computer 202 sends a GET request to the approval URL received by https (S203a), and it is received by the remittance instruction apparatus 203a. The remittance processing unit 2034a of the remittance instruction apparatus 203a extracts the transaction ID from the parameter of the approval URL and uses it to read the payment information from the database. At the same time, the expiration date of the transaction ID may be confirmed from the creation time recorded in the database. The remittance processing unit 2034a generates a remittance approval page 1000a from this payment information and returns the remittance details to the customer computer 202 (S206a).

At this point, the remittance processing unit 2034a acquires the store name from the store information table 2035 using the store ID as in the first embodiment when generating the remittance approval page 1000a. In addition, the remittance processing unit 2034a extracts the currency and the amount from the payment information. Here, in the second embodiment, a case will be described where the remittance processing unit 2034a obtains the conversion rate to the base currency also considering the amount of the remittance currency.

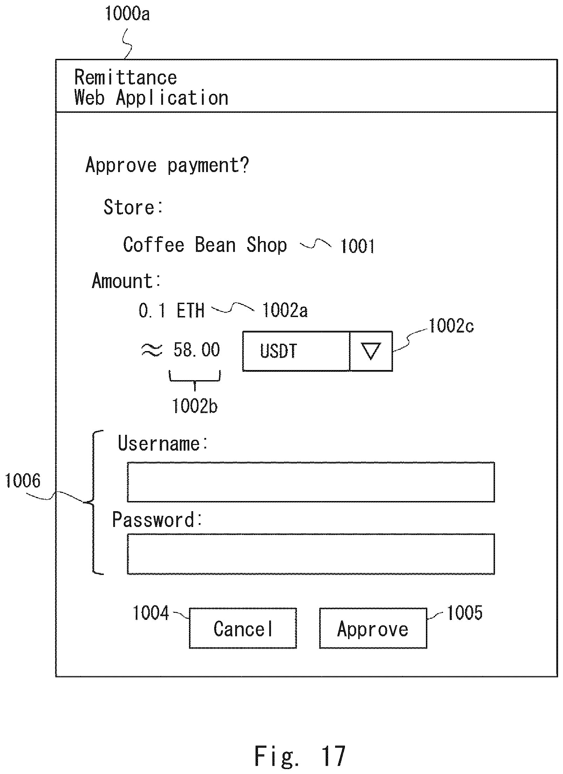

Fig. 17 shows an example of the remittance approval page 1000a. The remittance approval page 1000a has text boxes (user information input fields 1006) for inputting a username and a password, and the customer 201 can perform authentication and remittance approval at the same time by inputting such information. In addition, a drop-down menu (base currency selection field 1002c) for the customer 201 to select the base currency is prepared. The wallet to be used shall be set in advance as the default for each remittance currency.

Further, the remittance approval page 1000a includes a remittance amount 1002a and a converted amount in base currency 1002b. The remittance amount 1002a is the currency and amount thereof included in the payment information. The converted amount in base currency 1002b is an area for displaying the "converted amount" described above in the first embodiment. Here, the converted amount is an amount converted from the remittance amount 1002a into the base currency of the customer 201 based on the "board information" in the default exchange. The remittance processing unit 2034a may periodically acquire board information from the exchange.

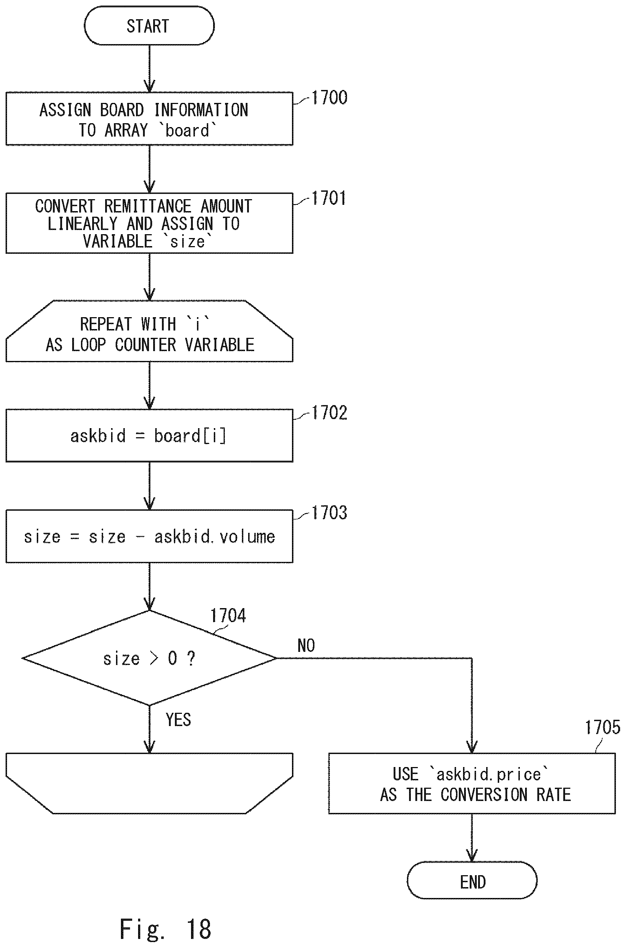

Fig. 18 is a flowchart for obtaining the conversion rate. First, in step 1700, the remittance processing unit 2034a obtains the board information from the exchange 204a and assigns it to the array 'board'. When the board information is a list representing the buying and selling of the remittance currency in the base currency, the remittance processing unit 2034a assigns an array in which the pairs of (bid price, transaction volume) are sorted so that the bid prices are in a descending order. On the other hand, when the board information is a list representing the buying and selling of the base currency in the remittance currency, the remittance processing unit 2034a assigns an array in which the pairs of (ask price, transaction volume) are sorted so that the ask prices are in an ascending order. Next, in step 1701, the remittance processing unit 2034a linearly converts the remittance amount and assigns it to the variable 'size'. The linear coefficient and constant term at this point need to be adjusted for each currency. Next, the loop from step 1702 to step 1704 is repeated with the variable 'i' as the loop counter variable in an ascending order. First, in step 1702, the remittance processing unit 2034a assigns the 'i'-th element of the array 'board' to the variable 'askbid'. As a result, the bid price or ask price is held in the 'price' field ('askbid.price') of the structure 'askbid', and the transaction volume is held in the 'volume' field ('askbid.volume'). In the next step 1703, the remittance processing unit 2034a subtracts 'askbid.volume' from the variable 'size'. In the next step 1704, the remittance processing unit 2034a compares the variable 'size' with 0, and if 'size' is greater than 0, continues the loop. On the other hand, if 'size' is 0 or less, control proceeds to step 1705. In step 1705, the remittance processing unit 2034a uses the 'askbid.price' as the conversion rate. If the bid price is held in 'board', the converted amount of the remittance amount will be (remittance amount x conversion rate - exchange fee). If the ask price is held in 'board', the converted amount of the remittance amount will be (remittance amount / conversion rate - exchange fee). However, if the exchange fee is in the remittance currency, they will be ((remittance amount - exchange fee) x conversion rate) and ((remittance amount - exchange fee) / conversion rate) respectively. That is, in this example, when calculating the converted amount, it is shown that the actual transaction amount (transaction amount in the order) is accumulated and the bid price or ask price when the remittance amount is reached is used as the conversion rate. The conversion rate is calculated as described above, because there may be fluctuations in the price when an attempt to make a large transaction is made, as the transaction volume may, depending on the currency, be small or as the offer for the ask price or the bid price disappears the next moment.

Returning to Fig. 12, the sequence after the remittance is approved will be described. The access processing unit 2021 of the customer computer 202 displays the received remittance approval page 1000a. Then, the customer 201 inputs a username and a password on the remittance approval page 1000a, selects a desired currency from the base currency selection field 1002c as necessary, and switches the display of the converted amount in base currency 1002b. After that, when the customer 201 selects the Approve button 1005, the access processing unit 2021 transmits the authentication information and the remittance approval to the remittance instruction apparatus 203a (S207a). Specifically, the access processing unit 2021 transmits authentication information including the set of the username and password entered in the user information input fields 1006 of the remittance approval page 1000a. In addition, the access processing unit 2021 transmits to the remittance instruction apparatus 203a the fact that the remittance for the currency, the remittance amount, and the exchange, which are displayed on the remittance approval page 1000a, is approved.

After that, the remittance processing unit 2034a of the remittance instruction apparatus 203a sends a remittance approval notification to the store server 205a (S208) and issues a remittance instruction to the customer wallet 206 (S209a). The method of transmitting the remittance instruction is defined by the customer wallet 206, and it is possible to transmit information including the remittance destination and the remittance amount permitted for remittance, with the key. Here, the remittance processing unit 2034a searches the key information table 2032a for a row in which the customer and the exchange (customer wallet 206) match and acquires the key information. If the customer wallet 206 is a wallet that handles a plurality of currencies, the remittance processing unit 2034a specifies remittance instructions including the remittance currency.

When the remittance execution service 2061 of the customer wallet 206 receives the remittance instruction from the remittance instruction apparatus 203a, the remittance execution service 2061 remits the remittance amount included in the remittance instruction to the remittance destination included in the remittance instruction (S210); for example, the remittance execution service 2061 remits money by writing the remittance fact on the ledger 208 corresponding to the currency. After that, the remittance execution service 2061 continues to monitor the ledger 208.

Then, the remittance instruction apparatus 203a waits for the payment notification by the method specified by the customer wallet 206. For example, the remittance execution service 2061 considers that the remittance has been completed, when there are a predetermined number of confirmations on the blockchain of the ledger 208, and a payment notification is transmitted to the remittance instruction apparatus 203a (S211-1). When the remittance processing unit 2034a of the remittance instruction apparatus 203a receives the remittance notification from the customer wallet 206, the remittance notification is sent to the customer server 205a by using the information including the transaction ID using the long-term connection session (S211-2).

As described above, in the present embodiment, an example of a system that approves remittance at the same time as customer authentication has been shown. In addition, an example of acquiring board information from an exchange service other than the customer wallet is shown. In particular, in determining the conversion rate, not only the maximum bid price and the minimum ask price but also a plurality of bid prices and ask prices and their transaction volumes are taken into consideration to suppress an unexpected price drop with the exchange of a large remittance amount. We also show that the present invention can be realized by various connection forms by relying on the customer wallet service for payment monitoring.

**Third Embodiment**

The third embodiment is a modified example of the first and second embodiments. The present embodiment shows an example of dynamically generating a remittance destination address, in order to use a different remittance destination address for each payment even for remittance to the same store. We also consider the case when the format for remittance requests is commonly defined between remittance execution services, for example, when the interface for using the remittance execution service is unified. Further, remittance by currency other than the specified currency is also dealt with.

It is assumed that the hardware configuration of the remittance instruction apparatus according to the third embodiment is similar to that in Fig. 1. Therefore, the same functionality can be realized with the same configuration in other integrated circuits such as FPGA. However, it is assumed that the processes of the remittance instruction server according to the third embodiment is implemented in program 1021.

The sequence for registering the key shall be in accordance with Fig. 2 as in the first embodiment. Further, in the third embodiment, since the remittance request method is standardized among the remittance execution services, the name and number of the keys are also standardized. Therefore, the name of the keys on the key registration page is fixed. For example, when the customer 201 registers the keys from a smartphone application, the name of the keys on the screen may be fixed. When the customer 201 registers the keys on a web page, the names of the keys may be written in the HTML document. Therefore, in the third embodiment, the key definition table becomes unnecessary.

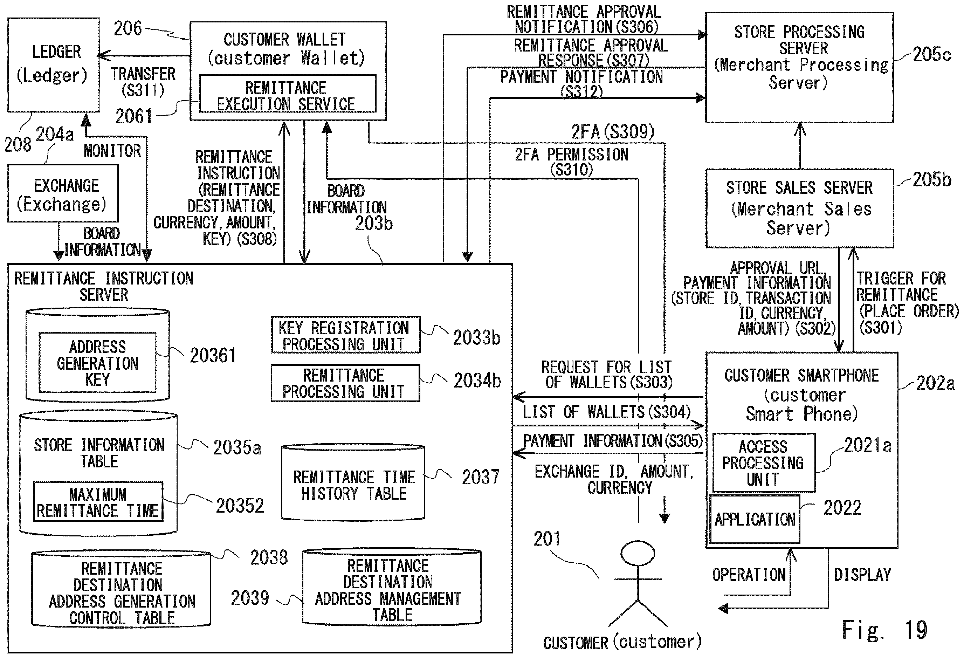

Fig. 19 shows a block diagram of a remittance approval sequence in the remittance instruction system according to the present embodiment. Here, it is assumed that the remittance instruction server 203b stores the address generation key 20361 for generating the remittance destination address of the store in the storage device. The address generation key 20361 may be registered in advance by the store but may be automatically generated by the remittance instruction server 203b. The remittance instruction server 203b includes the above-mentioned key information table 2032a and the store information table 2035 in a configuration not shown.

Further, the store server, which was one in the other embodiment, is divided into a store sales server 205b that provides a customer user interface and a store processing server 205c that processes orders. Further, in the third embodiment, the customer smartphone 202a is used instead of the customer computer. When the customer smartphone 202a executes the application 2022, some functions of the remittance instruction apparatus can be taken over. Therefore, what was the remittance instruction apparatus in the other embodiment is divided into two, and in the third embodiment, the key registration processing unit 2033b and the remittance processing unit 2034b of the remittance instruction server 203b, and the application 2022 on the customer smartphone 202a are combined and regarded as a remittance instruction system. The customer smartphone 202a stores a program in a storage device (not shown), in which the processing of the application 2022 according to the third embodiment is implemented. The processor (not shown) reads the program from the storage device into the memory, and by executing this, the function of the application 2022 according to the third embodiment is realized.

An authentication function is implemented in the application 2022 on the customer smartphone 202a, and when the customer 201 inputs a username and a password, they are sent to the remittance instruction server 203b. When the remittance instruction server 203b receives them, it checks the username and password pair held in the database and returns an authentication token if they match. The authentication token is information that makes it possible to avoid repeated authentication. For example, a set of username and time that is digitally signed with the private key of the remittance instruction server 203b can be used. It is well known among those skilled in the art that the password can be verified by a challenge response method without sending the password as it is. Further, a method of comparing password hash values instead of comparing passwords as they are is also well-known.

First, the customer 201 begins the ordering sequence on the store sales server 205b using the customer smartphone 202a. Then, the customer 201 performs an operation of confirming the purchase at the end of the ordering sequence. As a result, the access processing unit 2021a transmits a trigger for starting remittance to the store sales server 205b (S301). Then, the store sales server 205b returns the approval URL for remittance approval with a set of the store ID, transaction ID, currency, and amount (hereinafter referred to as "payment information") as parameters to the customer smartphone 202a (S302). That is, the payment information according to the third embodiment does not include the remittance destination address. Here, the transaction ID, currency, and amount included in the payment information are shared with the store processing server 205c, and the store processing server 205c can confirm the contents later. When the access processing unit 2021a of the customer smartphone 202a opens the received approval URL for remittance approval, it launches application 2022 with deep link functionality (for example, Universal Link in the case of iOS (registered trademark), Intent URL in the case of Android (registered trademark)). When the specific application 2022 is activated, the customer smartphone 202a first sends an authentication token and requests a list of wallets from the remittance instruction server 203b (S303). In response to this, the remittance processing unit 2034b of the remittance instruction server 203b confirms the digital signature of the authentication token and returns the following information to the specific application 2022 of the customer smartphone 202a (S304).

- List of customer wallet names
- List of currencies that each customer wallet can handle
- List of conversion rates from each currency in the currency list to the currency in the payment information

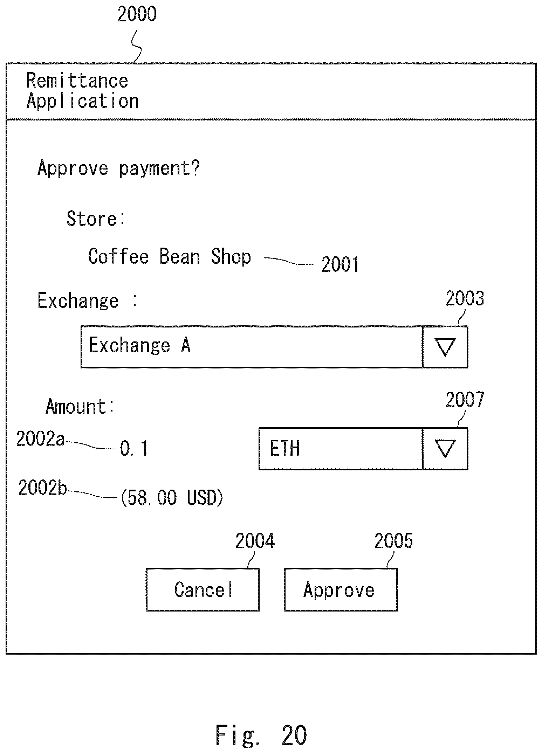

At this point, the remittance processing unit 2034b of the remittance instruction server 203b uses the customer wallet names (exchange names) whose keys are registered in association with the username (customer ID) from the key information table 2032a in Fig. 14 to create a list of customer wallet names. The application 2022 extracts payment information from the parameters of the approval URL received in step S203 based on the list of wallet names received from the remittance instruction server 203b, and generates and displays the remittance approval screen 2000 as shown in Fig. 20. The wallet names become options in the drop-down menu (exchange selection field) 2003, and customer 201 can select one from the options. In the dropdown menu (currency selection field) 2007, currencies that can be handled by the wallet selected in the drop-down menu 2003 can be selected. In addition, the remittance approval screen 2000 displays the store name 2001, the remittance amount 2002a, the converted amount in base currency 2002b, the Cancel button 2004, and the Approve button 2005, which will be described later.

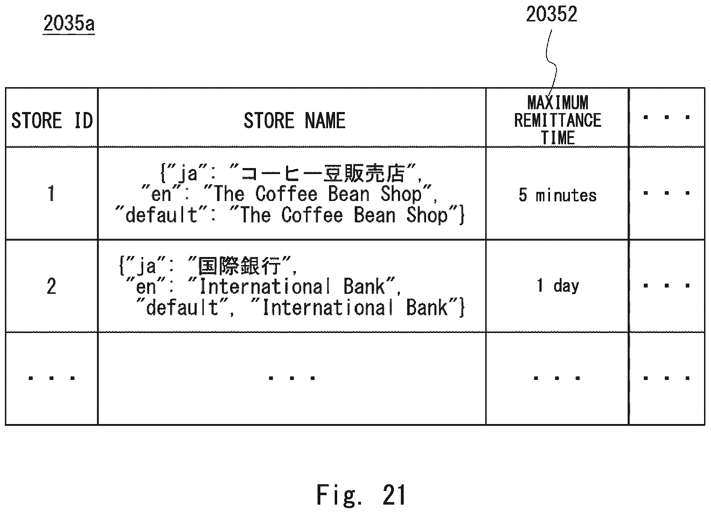

Now, there is a large difference in remittance time depending on the digital currency. Therefore, the remittance processing unit 2034b of the remittance instruction server 203b can obtain the distribution of the remittance time for each currency by recording the time from the remittance instruction to the receipt of the remittance in the past. Therefore, as shown in Fig. 21, the remittance processing unit 2034b stores the maximum remittance time 20352 desired by the store as the store information table 2035a in advance for each store ID. Then, when creating a list of currencies that can be handled by each customer wallet, the remittance processing unit 2034b refers to the remittance time history table 2037 and narrows down the currencies for each wallet that can be expected to be remitted within a predetermined time. A list (options) of the currency and wallet pairs is included in step S304 and transmitted. As a result, the application 2022 can narrow down the currency options to be displayed in the drop-down menu 2007. Wallets that do not have any appropriate currencies are excluded from the drop-down menu 2003 candidates. For example, if 95% of the last month's remittances for a currency do not end with a remittance time shorter than the maximum saved remittance time, then that currency will be removed from the currency options. Needless to say, it is possible to narrow down the options according to the wishes of the customer. As a result, it is possible to prevent the remittance from taking an unexpected time to some extent.

When the customer 201 selects a currency in the drop-down menu 2007, the application 2022 converts the amount in the currency of the payment information into the selected currency and displays it in the remittance amount 2002a as the converted amount. The conversion rate at this time may be obtained by the method shown in another embodiment, but in this embodiment, a method of obtaining by using the time series information of the board information is shown. Specifically, the remittance processing unit 2034b of the remittance instruction server 203b successively acquires the board information from the exchange 204a, and records in the database the maximum bid price and the minimum ask price from the board information of each currency pair together with time information. Then, the remittance processing unit 2034b obtains the average of the maximum bid prices and the minimum ask prices within the latest fixed period at the timing (S304) of sending the list of customer wallet names to the application 2022, and sends them together with the conversion rate of the bid price and the ask price to the application 2022. By obtaining the conversion rate in this way, it is possible to suppress large fluctuations in the conversion rate in a short period of time. On the other hand, it is also possible to predict the conversion rate in the near future from the past board information by using machine learning such as deep learning. By doing so, we aim to suppress fluctuations in the amount of money when exchanging currency at the time of deposit.

Further, the remittance fee may be included in the converted amount displayed in the remittance amount 2002a. In this case, the payment amount to be displayed is calculated by the following formula.

$$\text{Converted amount} = (\text{Amount in payment information} \times \text{Conversion rate} + \text{Exchange fee}) + \text{Remittance fee}$$

or

$$\text{Converted amount} = (\text{Amount in payment information} / \text{Conversion rate} + \text{Exchange fee}) + \text{Remittance fee}$$

In addition, the application 2022 displays the amount in the base currency designated by the customer 201 in the converted amount in base currency 2002b along with the converted amount of the remittance amount 2002a. In that case, the calculation method can be the same as that of the first or second embodiments. Alternatively, for example, the average of the past bid price and the ask price may be used as the conversion rate, as in the case of obtaining the converted amount. In any case, it is convenient for the customer 201 to have the currency that minimizes the amount in the base currency as the default value of the drop-down menu 2007.

When the customer 201 selects the Cancel button 2004 on the remittance approval screen 2000 of Fig. 20, the application 2022 notifies the remittance instruction server 203b to that effect, and the remittance processing unit 2034b records that the transaction ID of the store ID as aborted, and the payment process will now be aborted. Assuming that the host name of the remittance instruction server 203b is api.sender.com, the store processing server 205c can know the details of the transaction recorded in the database by issuing a GET request to https://api.sender.com/vl/payments/{store ID}/{transaction ID}. Here, the {store ID} part of the URL is replaced with the store ID, and the {transaction ID} part is replaced with the transaction ID. The detailed transaction information includes currency, amount and status, and the store management server 205c can also confirm that the contents have not been tampered with. If the status is "Canceled", it means that the payment has been canceled.

On the other hand, when the customer 201 selects the Approve button 2005 on the remittance approval screen 2000 of Fig. 20, the application 2022 sends the notification that approval has been granted for remittance with the currency, the remittance amount, and the exchange (customer wallet) displayed or selected on the remittance approval screen 2000 (S305), and the remittance processing unit 2034b records the transaction status as "approved". The store processing server 205c can acquire this state from the URL above. During this time, the remittance processing unit 2034b of the remittance instruction server 203b transmits a remittance approval notification including payment information to the store processing server 205c (S306), and the store processing server 205c confirms the integrity of the payment information and transmits a remittance approval response to the remittance instruction server 203b (S307). Then, after setting the transaction status to "approved", the remittance instruction server 203b issues a remittance instruction to the customer wallet 206 (S308). At this point, the currency selected on the remittance approval screen 2000 of Fig. 20, the converted amount (remittance amount), and the remittance destination address generated by the method described later are sent. In addition, the remittance processing unit 2034b digitally signs the remittance instruction information by using the key associated with the username from the key information table 2032a by the method specified by the customer wallet 206.

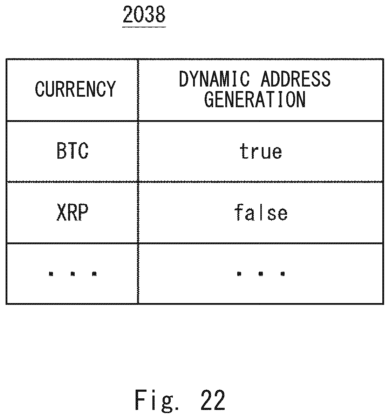

Here, a method of generating a remittance destination address will be described. That is, the remittance instruction server 203b generates an address corresponding to the digital currency as the remittance destination address according to the characteristics of the predetermined digital currency. Here, it is assumed that the remittance instruction server 203b holds in advance the attribute (indicating whether or not to dynamically generate the remittance destination address) for each currency in the remittance destination address generation control table 2038 of the database as shown in Fig. 22. In addition, instead of the remittance destination address generation control table 2038, for example, the attributes above for each currency may be written in the program. For example, in the case of a currency such as BTC (Bitcoin) where reuse of the remittance destination address is not recommended, 'true' is held in the Dynamic address generation column. On the other hand, in the case of a currency such as XRP (Ripple) in which the remittance destination address can be reused, 'false' is held in the Dynamic address generation column.

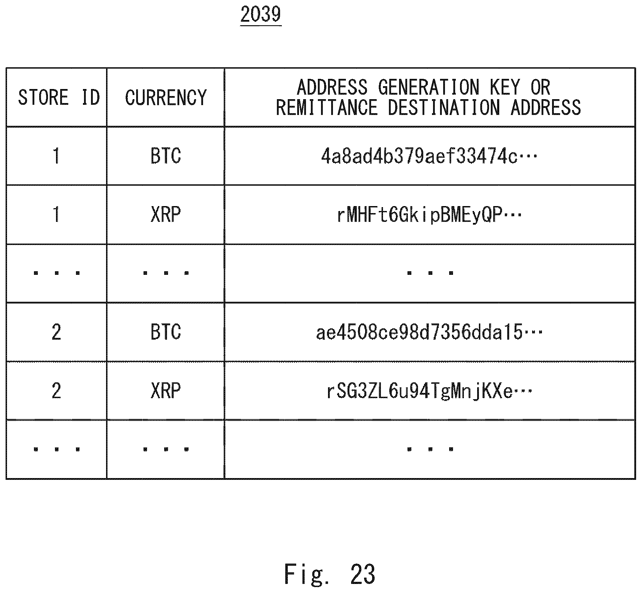

Further, the remittance instruction server 203b stores the remittance destination address management table 2039 as the database that holds keys for generating the remittance destination address. Fig. 23 shows an example of the remittance destination address management table 2039. Each row is prepared for each store and currency pair, and for currencies whose Dynamic address generation column in the remittance destination address generation control table 2038 of Fig. 22 is 'false', the third column of the remittance destination address management table 2039 of Fig. 23 holds the remittance destination address itself of the corresponding store. If the remittance destination address itself is held, this value is used to send when instructing remittance for the remittance destination address. Conversely, for currencies whose Dynamic address generation column is 'true' in the remittance destination address generation control table 2038 of Fig. 22, the third column of the remittance destination address management table 2039 of Fig. 23 holds the key for address generation of the corresponding store. When holding the key for address generation, the remittance processing unit 2034b of the remittance instruction server 203b uses this to generate a remittance destination address. For example, in the case of BTC, a remittance destination address generation method realized by a function called Deterministic Wallet is defined (BIP0032, etc.). The remittance processing unit 2034b of the remittance instruction server 203b can generate an address by using the address generation key held in the database. Then, this can be used as a remittance destination address when instructing remittance.

Returning to the description of Fig. 19. The remittance execution service 2061 of the customer wallet 206 that has received the remittance instruction records the remittance on the ledger 208 (S311). Depending on the customer wallet, the remittance may be reconfirmed with the customer 201 by two-step verification (other means such as telephone or email). For example, in accordance with step S308, the remittance execution service 2061 performs 2FA (Two Factor Authentication) on the customer smartphone 202a by telephone or email (that is, a means other than the application 2022 that can receive messages) (S309). Then, the customer 201 responds with the customer smartphone 202a (with functions other than the application 2022 (SMS (Short Message Service) by telephone number, mail application, etc.)), so that the customer smartphone 202a notifies the remittance execution service 2061 of the 2FA permission (S310). This makes it possible to prevent fraudulent transactions even if the password of the web application is leaked. In addition to the customer smartphone 202a, the customer 201 may possess an information communication apparatus such as a mobile phone terminal, a tablet terminal, or a personal computer capable of communication. In that case, the remittance execution service 2061 performs 2FA on the information communication apparatus possessed by the customer 201 in step S309 and receives the 2FA permission from the information communication apparatus in step S310.

After that, the remittance instruction server 203b continues to monitor the ledger 208 and reflects the remittance status as the transaction status. In addition, since the currency specified in the payment information and the remittance currency may be different, the remittance currency and the remittance amount are added to the transaction details. For example, in the case of the BTC blockchain, a process called "confirmation" is repeated after writing the fact of remittance. If "confirmation" is performed n times, the transaction status is set to "confirmed n". Then, when the confirmation is repeated exceeding a certain number of times N, the transaction status is set to "confirmed N+", and monitoring of the remittance is stopped thereafter. Then, the remittance processing unit 2034b transmits a payment notification with the transaction ID whose transaction status is "confirmed N+" to the store processing server 205c (S312).

The store processing server 205c can inspect the received transaction status, and when the desired number of confirmations is reached, can start a process such as shipping a product. For urgent services, the process can be started after the remittance is approved. It is up to the store to decide when to start this process.

As described above, in the present embodiment, an example in which the remittance destination address is dynamically generated has been shown. It also supports remittances in currencies other than the specified currency. It should also be mentioned that if the method adopted by the Armory Deterministic Wallet is used as the remittance destination address generation method, only the public key needs to be stored in the remittance instruction server for the remittance destination address generation.

**Fourth Embodiment**

The present embodiment 4 is a modification of the first, second, or third embodiment, and shows an example of a system with which any store or individual can trade. Further, in the fourth embodiment, remittance instruction can be given after the remittance instruction apparatus has exchanged money in a currency different from the currency selected by the customer.

The configuration of the hardware in the remittance instruction apparatus according to the fourth embodiment is similar to that of Fig. 1. Thus, the same function can be realized with a similar configuration even using other integrated circuits such as FPGAs. However, it is assumed that the processes of the remittance instruction apparatus according to the present embodiment 4 is implemented in program 1021.

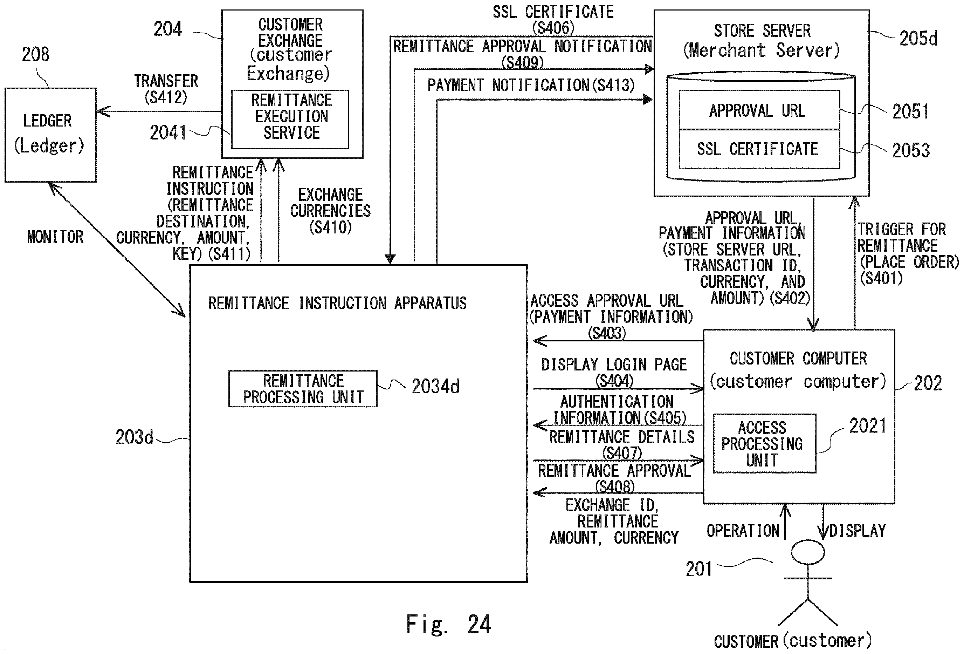

Fig. 24 shows a block diagram of a configuration and a remittance approval sequence of an information system related to remittance of virtual currency according to the present embodiment. In the present embodiment, it is assumed that the wallet function for managing deposits and the exchange functionality for exchanging currencies are performed on the same customer exchange 204. The store server 205d is a computer device that provides a website for electronic commerce. The store server 205d stores the approval URL 2051 and the SSL certificate 2053 (public key certificate) in a storage device. Here, the SSL certificate 2053 is an electronic certificate of which a trusted certificate authority has proven the authenticity of the site operating organization (and URL) of the store server 205d. The remittance instruction apparatus 203d includes a remittance processing unit 2034d in comparison with the remittance instruction apparatus 203. For other configurations for the remittance instruction apparatus 203d, configurations similar to that of remittance instruction apparatuses 203, 203a, the remittance instruction server 203b and the like can be used. Therefore, the illustrations are omitted as appropriate.

First, the customer 201 begins the ordering sequence on the store server 205d using the customer computer 202. Customer 201 performs an operation to confirm the purchase at the end of the ordering sequence. As a result, the access processing unit 2021 transmits to the store server 205d a trigger for starting remittance (S401). Then, the store server 205d returns the approval URL for approving the remittance to the customer computer 202 with the store server URL (first destination information), transaction ID, currency, and amount digitally signed with the private key of its own SSL certificate 2053 (hereinafter referred to as "payment information") as a parameter (S402). Then, the access processing unit 2021 of the customer computer 202 opens a new browser window and issues a GET request to the acquired approval URL (S403). If the customer 201 is not logged in to the remittance instruction apparatus 203d at this point, the same login process as in step S204 described above is performed (S404, S405).

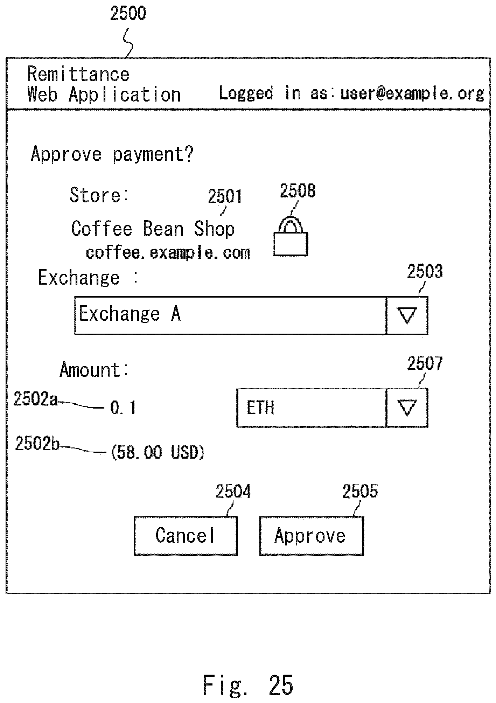

After logging in, the remittance processing unit 2034d of the remittance instruction apparatus 203d extracts the store server URL from the payment information and downloads the SSL certificate 2053 from the URL (S406). Then, the remittance processing unit 2034d verifies that the extracted payment information is digitally signed with the corresponding private key by using the public key stated in the SSL certificate 2053. After confirming that it is correctly signed digitally, the remittance processing unit 2034d generates a web page (remittance approval page 2500, display page) as shown in Fig. 25. In this case, the remittance processing unit 2034d adds the organization name obtained from the Organization (O) field of the downloaded SSL certificate 2053 as the store name 2501. Further, the remittance processing unit 2034d adds the character string extracted from the store server URL as the host name (information included in the first destination information) for the store name 2501. The information obtained from the Common Name (CN) field of the SSL certificate 2053 (information included in the public key certificate) may be used as the host name. The remittance processing unit 2034d adds an icon 2508 (information indicating that the store has been verified by the public key certificate) when indicating that the store has been verified with the SSL certificate. From the exchanges that the customer 201 has registered, the remittance processing unit 2034d sets the exchanges that can transfer money in the currency specified in the payment information as the selectable choices in the drop-down menu (exchange selection field) 2503. The remittance processing unit 2034d sets as the selectable choices for the drop-down menu (currency selection field) 2507 the currencies that can be processed by the exchange selected in the drop-down menu 2503.

Then, the remittance processing unit 2034d transmits the generated remittance approval page 2500 to the customer computer 202 as remittance details (S407). The access processing unit 2021 displays the remittance approval page 2500 received from the remittance instruction apparatus 203d on the screen. Then, when the customer 201 selects the Approve button 2505, the access processing unit 2021 notifies the remittance instruction apparatus 203d of remittance approval with the currency, the remittance amount, and the exchange displayed on the remittance approval page 2500 (S408).

Here, in the present embodiment, the currency to be remitted can be changed. For that purpose, the following operation is performed before the customer 201 presses the Approve button 2505. For example, when customer 201 selects a currency in the drop-down menu 2507, the remittance amount 2502a displays the converted amount in the selected currency. For example, the access processing unit 2021 may notify the remittance instruction apparatus 203d of the selected currency and may acquire and display the remittance approval page 2500 whose converted amount has been updated by the remittance processing unit 2034d. Alternatively, the access processing unit 2021 may update the remittance approval page 2500 by calculating the converted amount (for example, the converted amount in base currency 2502b) based on the selected currency.

If the currency selected in the drop-down menu 2507 when the customer 201 selects the Approve button 2505 is the same as the currency included in the payment information, the remittance processing unit 2034d will send money in that currency as in the other embodiments. On the other hand, if the currency selected in the drop-down menu 2507 when the customer 201 selects the Approve button 2505 is different from the currency included in the payment information (when currency exchange is involved), the remittance processing unit 2034d exchanges the selected currency for the currency in the payment information before sending the money. At this point, it is possible to place an order at the market price, but it is also possible to place an order at the limit price so that the exchange does not exceed the converted amount. The limit price at that time is the conversion rate used when calculating the converted amount. Especially in the case of a limit order, the order may not be completed, so a mechanism to cancel the order is necessary.

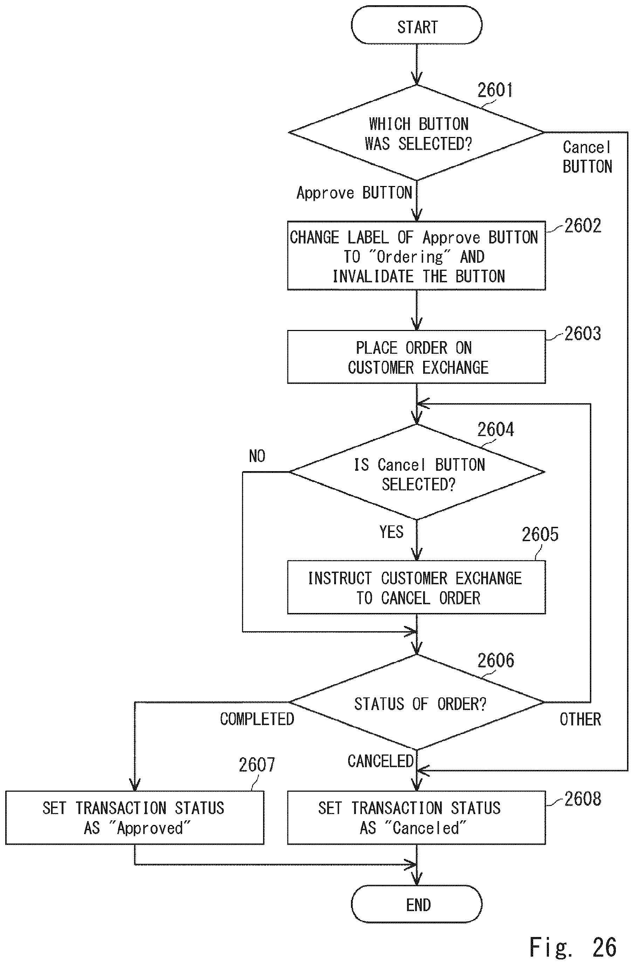

Fig. 26 shows a flowchart when a currency that is accompanied by currency exchange is selected. When the customer 201 selects the Approve button 2505 or the Cancel button 2504, the access processing unit 2021 identifies the button type in step 2601, and notifies the remittance instruction apparatus 203d of the selected button type together with the above-mentioned remittance approval. If the button type is the Cancel button 2504, the process proceeds to step 2608, and the remittance processing unit 2034d immediately cancels the payment. On the other hand, when the button type is the Approve button 2505, the access processing unit 2021 changes the label of the Approve button to "Ordering" and invalidates the button in step 2602. Then, in the next step 2603, the remittance processing unit 2034d places an order on the customer exchange 204. That is, the remittance processing unit 2034d requests the customer exchange 204 to exchange currencies (S410 in Fig. 24). Specifically, the remittance processing unit 2034d instructs the customer exchange 204 to exchange for the selected currency the remittance amount in the currency included in the payment information. After that, in step 2604, the remittance processing unit 2034d determines whether the Cancel button 2504 is selected. If the Cancel button 2504 is not selected, the process directly proceeds to step 2606. If the Cancel button 2504 is selected, in step 2605 the remittance processing unit 2034d instructs the customer exchange 204 to cancel the order. After that, in step 2606, the remittance processing unit 2034d monitors the status of the order by inquiring the customer exchange 204 or the like. If the order is completed, the transaction is treated as approved even if the customer 201 has selected the Cancel button 2504 (step 2607). If the order is canceled, it is treated as if the transaction was canceled (step 2608). If neither of these is the case, the process returns to step 2604 and the determination of whether the Cancel button 2504 is pressed is repeated.

If the transaction is treated as canceled, in step 2608, the remittance processing unit 2034d records in the database that the payment of the transaction ID of the store ID has been canceled, and the payment process is now stopped. Assuming the host name of the remittance instruction apparatus 203d is api.sender.com, the store server 205d issues a GET request to https://api.sender.com/vl/payments/{store ID}/{transaction ID}, and the status of the transaction recorded in the database can be known. Here, the {store ID} part of the URL is replaced with the store ID, and the {transaction ID} part is replaced with the transaction ID. If the status is "Canceled", it can be known that the payment has been canceled. In the present embodiment, this is a form of notification to the store server 205d.

Conversely, if the transaction is treated as complete, the remittance processing unit 2034d records the transaction status as "Approved" in step 2607. The store server 205d can acquire this state from the above URL. After setting the transaction status to "Approved", the remittance instruction apparatus 203d confirms the amount exchanged with the customer exchange 204 and instructs the customer exchange 204 to remit it to the remittance destination address in the payment information (S411). Then, the remittance execution service 2041 of the customer exchange 204 writes the fact of remittance on the ledger 208 (S412). After that, the remittance instruction apparatus 203d continues to monitor the ledger 208 and updates the transaction status. The store server 205d confirms whether the remittance approval has been granted by polling the remittance instruction apparatus 203d. As a result, the store server 205d can grasp that the remittance approval has been granted. Therefore, in Fig. 24, this is expressed as a remittance approval notification in step S409.

As described above, in the present embodiment, a remittance instruction apparatus is shown with which any store server can start a transaction even if the store account is not registered in advance on the remittance instruction apparatus. By using the SSL certificate, the authenticity of the store is evaluated, and the customer can pay with confidence. It should also be mentioned here that if the SSL certificate verification is eliminated, this is a system in which any individual who does not have a web server can request payment by writing the URL in an email or the like.

**Fifth Embodiment**

The present embodiment 5 is a modification of the first to fourth embodiments and shows an example in which a payment procedure is started by opening a URL link.

It is assumed that the hardware configuration of the remittance instruction apparatus according to the fifth embodiment is similar to that in Fig. 1. Therefore, the same functionality can be realized with similar configurations using other integrated circuits such as FPGA. However, it is assumed that the processes of the remittance instruction apparatus according to the fifth embodiment are implemented in program 1021.

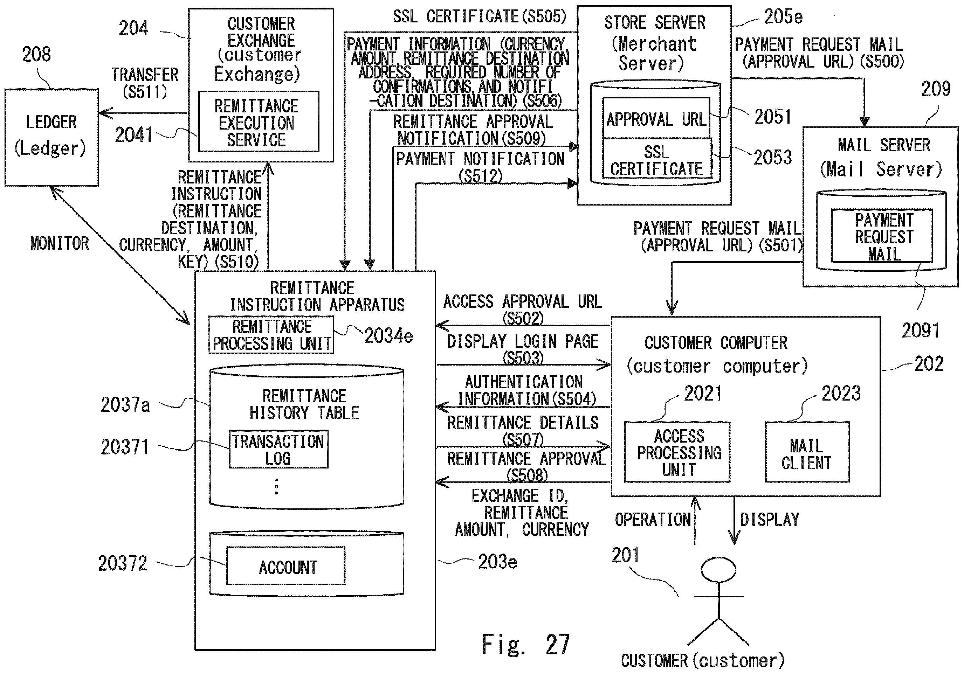

Fig. 27 is a block diagram of a configuration and a sequence for remittance approval of an information system for remittance of virtual currency according to the present embodiment. The store server 205e sends a payment request email containing the above-mentioned approval URL 2051 in the text to the mail server 209 with the email address of the customer 201 as the destination in accordance with a trigger, or other ordering sequence, from the customer computer 202 for starting a remittance (S500). Here, the approval URL 2051 is the URL (second destination information) of the website of the remittance instruction apparatus 203e. Then, the URL parameter of the approval URL 2051 points to one endpoint (first destination information) of the store server 205e. The payment request email may be sent from a terminal operated by a clerk other than the store server 205e.

The mail server 209 is a general mail server. The mail server 209 receives the payment request mail from the store server 205e and stores it in the storage device as a payment request mail 2091. The mail server 209 sends a payment request mail 2091 to the customer computer 202 in response to a mail retrieval request from the mail client 2023 of the customer computer 202.

The mail client 2023 of the customer computer 202 sends a mail retrieval request to the mail server 209 at the time of startup or the like, and receives the payment request mail 2091 including the approval URL 2051 from the mail server 209 (S501). When the customer 201 performs a click or equivalent on the approval URL described in the received mail, the access processing unit 2021 accesses the approval URL (S502). This opens the web page of the remittance instruction apparatus 203e. Here, if the customer 201 is not logged in when the remittance processing unit 2034e of the remittance instruction apparatus 203e prepares the web page, the remittance processing unit 2034e sends the login page to the customer computer 202 in the same manner as in step S204 described above (S503). When the customer 201 inputs the username and the password on this login page, the access processing unit 2021 transmits this to the remittance instruction apparatus 203e as authentication information (S504). In response to the receipt of the authentication information, the remittance processing unit 2034e of the remittance instruction apparatus 203e requests the SSL certificate from the store server URL of the store server 205e indicated by the parameter of the approval URL accessed in step S502, and obtains the SSL certificate 2053 from the store server 205e (S505). The remittance processing unit 2034e verifies the contents of the acquired SSL certificate 2053. Then, the remittance processing unit 2034e issues a GET request to the endpoint specified as a parameter of the approval URL. The store server 205e that received the GET request returns payment information including the remittance currency, the remittance amount, the remittance destination address, the required number of confirmations, and the notification destination by https (S506). Here, an example using https is shown, but when it is not necessary to keep the payment information secret, it goes without saying that tampering can be prevented, if the payment information is digitally signed by the private key of the SSL certificate 2053, even if the communication method is not encrypted. Further, as a matter of course, the same effect can be obtained by other communication methods without depending on http/https.

The payment information may be described in a predetermined structured method (structured language) such as HTML as in a web page. In that case, the remittance processing unit 2034e parses the DOM (Document Object Model) tree and extracts necessary information. For example, if the remittance currency, the remittance amount, the remittance destination address, the required number of confirmations, and the notification destination are each included in elements with unique ids, the remittance processing unit 2034e searches for and extracts them. Alternatively, if the remittance currency, remittance amount, remittance destination address, required number of confirmations, and notification destination are each associated with labels and placed on the web page, the remittance processing unit 2034e only has to first search for those labels and then extract the associated information.

Alternatively, the payment information may be described in json format, which is another structured method. In this case, since keys are assigned to the information, the implementation of the remittance processing unit 2034e becomes easy. On the contrary, when the payment information is described in HTML, there is an advantage that there is no need to have experience in implementing REST API when implementing the store server 205e, which makes it easy for the store side. In either case, by returning the payment information to the remittance instruction apparatus 203e via https, it is possible to prevent tampering of the information with a method provided as standard on the web server, and it is possible to improve efficiency of development and to also reduce the risk of vulnerabilities due to bugs associated with new development.

The remittance processing unit 2034e that has extracted the payment information adds the contents to a web page (remittance approval page 2500) as shown in Fig. 25 and transmits it to the customer computer 202 (S507). Here, the icon 2508 is an icon indicating that the SSL certificate has been verified. The store name 2501 is obtained from the Organization (O) field of the SSL certificate, and is displayed only when the verified SSL certificate is an EV (Extended Validation) certificate. The host name below it is extracted from the store server URL and matches the domain name included in the SSL certificate.

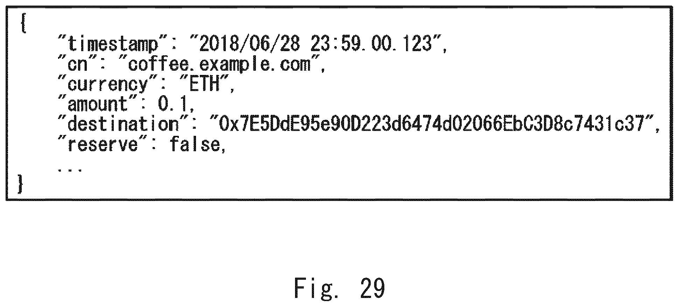

When the customer 201 confirms the payment information, the Approve button 2505 is selected, and the access processing unit 2021 of the customer computer 202 notifies the remittance instruction apparatus 203e, as a remittance approval, the fact that remittance is allowed for the currency, remittance amount and the exchange displayed or selected on the remittance approval page 2500 (S508). Then, the remittance processing unit 2034e of the remittance instruction apparatus 203e first adds the information as shown in Fig. 29 to the remittance history table 2037a as a transaction log 20371. The transaction log 20371 contains the host name ("cn") obtained from the SSL certificate, remittance currency ("currency"), remittance amount ("amount"), remittance destination address ("destination"), recording time ("timestamp"), and payment reservation flag ("reserve"), etc. Further, the remittance instruction apparatus 203e may manage the remittance destination account 20372. The account 20372 is information that uniquely identifies a store (store server 205e) and is a billing account that indicates a user (store) as the remittance destination for the remittance instruction apparatus 203e. For account 20372, for example, the host name ("cn") in the transaction log 20371, that is, the host name in the SSL certificate can be used. In addition, it is assumed that the remittance instruction apparatus 203e holds the billing conditions for charging the account 20372 and the management address described later, when the remittance instruction service is used via the remittance instruction apparatus 203e with the account 20372 as the remittance destination. For example, the billing condition may be the maximum number of remittance instructions that can be used free of charge as a remittance destination.

In other words, it can be said as follows. That is, first, the remittance processing unit 2034e receives the SSL certificate 2053 from the store server 205e in step S505, and receives the payment information digitally signed with the key of the SSL certificate 2053 in step S506. Alternatively, when the communication between the store server 205e and the remittance instruction apparatus 203e is encrypted by https or the like, the payment information does not need a digital signature. Then, when the remittance processing unit 2034e receives the remittance approval from the customer computer 202 in step S508, the remittance processing unit 2034e generates a billing account for the store server 205e using the contents of the SSL certificate, and stores the generated account in the remittance history storage unit. As a result, the remittance instruction apparatus 203e can automatically generate an account when a remittance occurs and manage the billing status for each account without requiring each store to register an account in advance. Therefore, the remittance instruction apparatus 203e can promote the spread of its own remittance instruction service through the store.

Here, the remittance processing unit 2034e should generate an account using the host name included in the SSL certificate as an identifier. Since the SSL certificate is issued for each host, the uniqueness of the store can be easily and surely guaranteed.

Further, it is desirable for the remittance processing unit 2034e to start billing the remittance destination when the number of remittance instructions to the account registered in the remittance history storage unit satisfies a predetermined billing condition (for example, when the maximum number of times is exceeded). As a result, the store, as the remittance destination, can use the remittance instruction service free of charge up to a certain number of times without registering the account on the remittance instruction apparatus 203e in advance. Then, the remittance instruction apparatus 203e can manage billing by charging the account for which the free remittance instructions exceed a certain number of times.

Then, after recording to the transaction log 20371, the remittance processing unit 2034e notifies the store server 205e that the payment has been approved (S509). Specifically, since the notification destination URL for remittance approval notification is included in the notification destination of the payment information, the remittance processing unit 2034e issues a https POST request to the notification destination URL. Even if the transaction ID is not explicitly sent to the notification destination, by incorporating the information in the URL, the same effect can be obtained without treating it as a parameter.

Then, the remittance processing unit 2034e uses the key of the customer 201 to transmit a remittance instruction including the remittance currency, the remittance amount, and the remittance destination address to the customer exchange 204 (S510). However, the remittance destination address here is based on the content recorded in the transaction log 20371. First, the remittance processing unit 2034e searches the transaction log 20371 and confirms whether or not the number of transactions for the same host name in the past fixed period (for example, one month) is less than or equal to a predetermined number. If the number of times is less than a predetermined number, the remittance processing unit 2034e uses the remittance destination address acquired from the store server 205e. At this point, for example, the remittance processing unit 2034e sets 'false' in the payment reservation flag ("reserve" key) of the corresponding transaction log 20371. On the contrary, if the number of times exceeds a predetermined number, the remittance processing unit 2034e uses the remittance destination address prepared by the remittance instruction apparatus 203e (the management address managed by the remittance instruction apparatus 203e to reserve the remittance amount).

As a result, if the number of transactions exceeds a predetermined number, the payment will be temporarily reserved at a specific address. At this time, for example, the remittance processing unit 2034e sets 'true' in the payment reservation flag ("reserve" key) of the corresponding transaction log 20371.

That is, at least, the remittance processing unit 2034e further associates the remittance destination address included in the remittance information with the generated account and registers it in the remittance history storage unit as remittance history information, and when the number of remittance instructions satisfies the billing condition, instead of issuing the remittance instruction to the remittance destination address, the remittance processing unit 2034e gives the remittance instruction for remittance of the remittance amount to the management address managed by the remittance instruction apparatus 203e. The remittance processing unit 2034e may calculate the number of remittance instructions by counting the remittance history information for the account registered in the remittance history storage unit. Alternatively, the remittance processing unit 2034e may determine whether the below condition is satisfied by performing predetermined statistical processing on the remittance history information for the account.

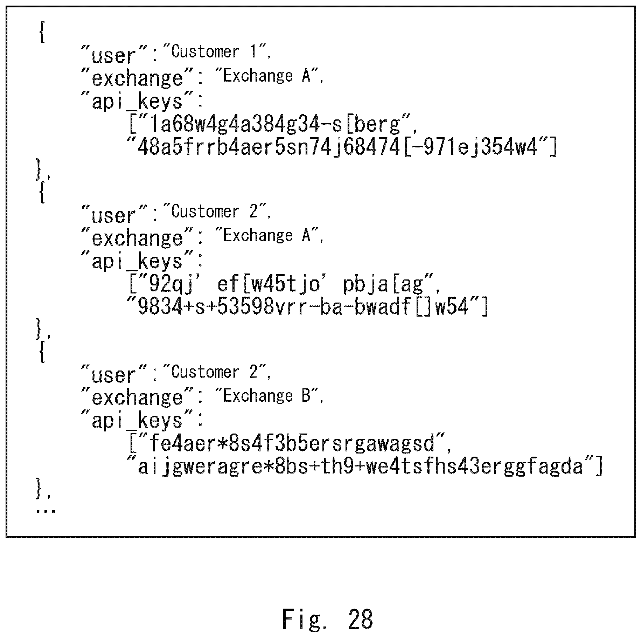

After that, the customer exchange 204 writes the fact of remittance on the ledger 208 in response to the remittance instruction (S511). Here, the key of the customer 201 is stored in advance in a NoSQL database as shown in Fig. 28, for example. In this example, the "user" key holds the customer's identifier, the "exchange" holds the customer exchange identifier, and the "api_keys" holds the customer's key. Of course, similar information can be retained in other types of databases. The usage of the key is matched to the method specified by the customer exchange. For example, one of the keys is used to digitally sign a set of (remittance currency, remittance amount and remittance destination address) and it is sent to the customer exchange.

Since the transaction ID (txid) on the ledger is obtained as a response from the customer exchange 204, the remittance processing unit 2034e of the remittance instruction apparatus 203e monitors the ledger 208 after the remittance instruction, and waits until it may be considered that the remittance has been received. When confirmation of the ledger is repeated as many times as the required number of confirmations for the payment information, the remittance processing unit 2034e of the remittance instruction apparatus 203e notifies the store server 205e of the payment (S512). Therefore, when the payment information notification destination includes the payment notification destination URL, the remittance processing unit 2034e issues a https POST request to the payment notification destination URL. The body includes the URL for withdrawal described later. In a blockchain ledger such as Bitcoin (BTC), if the ledger is confirmed repeatedly, the probability of being canceled later will decrease, but it doesn't become completely zero. Therefore, the store server 205e should adjust the required number of confirmations each time according to the remittance amount, the financial status of the store, the expected remittance time, and the like. The remittance processing unit 2034e may adjust the required number of confirmations instead of the store server 205e.

That is, the payment notification according to the present embodiment can be processed as follows, and these can also be applied to the above-described embodiments 1 to 4 as well. First, the confirmation conditions are updated for each remittance instruction. Further, the store server 205e may update the confirmation condition based on the remittance amount included in the remittance information. Further, it is desirable that the store server 205e updates the confirmation conditions based on the confirmation history of the transaction record. Further, the confirmation condition may be updated at the remittance destination based on the remittance amount included in the remittance information. In addition, the confirmation conditions may be updated based on the asset information of the remittance destination.

In addition, the remittance processing unit 2034e transmits a withdrawal URL (third destination information) as the form data of the POST request.

That is, the remittance processing unit 2034e notifies the remittance destination of a payment notification including a third destination information for withdrawing the remittance amount when the transaction record corresponding to the designated predetermined digital currency satisfies the predetermined confirmation condition.

If an email address is specified as the notification destination in the payment information instead of the payment notification destination URL, the remittance processing unit 2034e includes the withdrawal URL in the email body in addition to the payment notification text, and sends the email to the specified email address. The URL for withdrawal differs for each host name, and an expiration date can be set.

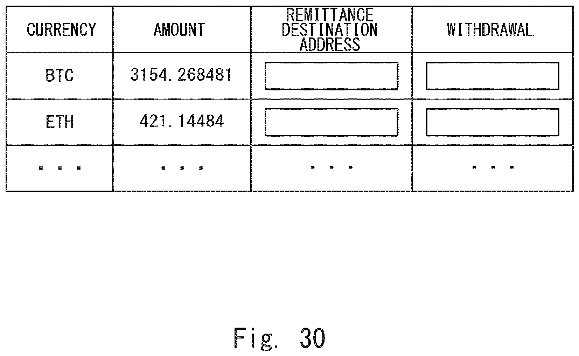

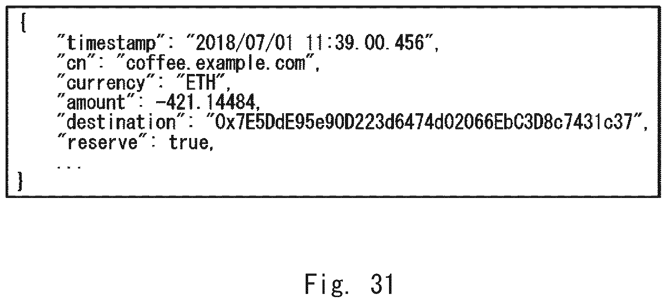

When a store employee opens this withdrawal URL with a web browser on a store server 205e or other terminal, a web page including a table as shown in Fig. 30 is displayed. Each row of the table shows the amount reserved for each currency. The store employee enters the store's remittance destination address (second remittance destination address) in the Remittance destination address column of the row of the currency he/she wants to withdraw and selects the button in the Withdrawal column. Then, the terminal transmits the remittance destination address input in the line of the selected button to the remittance instruction apparatus 203e (that is, the withdrawal request is transmitted), and the remittance processing unit 2034e of the remittance instruction apparatus 203e checks whether the entered remittance destination address has been used in the past for the host name of the store from the transaction log 20371. When the use of the remittance destination address is confirmed, the remittance processing unit 2034e sends the amount of currency (withdrawal amount), which is the reserved amount minus a fee, to the remittance destination address entered from the reserving address. Then, the remittance processing unit 2034e adds the information as shown in Fig. 31 to the transaction log 20371 with the withdrawal amount including the fee as a negative number. By doing so, the reserved balance can be calculated by taking the sum of the "amount" values of the entries whose values corresponding to the "reserve" key is 'true' for each host name and currency of the transaction log.

That is, the remittance processing unit 2034e calculates at least the amount obtained by subtracting the remittance instruction fee from the remittance amount as the withdrawal amount in response to the withdrawal request from the remittance destination, and gives the remittance instruction to remit the withdrawal amount from the management address to the remittance destination address. At this time, when the remittance processing unit 2034e accepts the input of the second remittance destination address as a withdrawal request from the remittance destination, it is desirable for the remittance processing unit 2034e to compare the remittance destination address associated with the account of the remittance destination registered in the remittance history storage unit with the second remittance destination address, and if one of the remittance destination addresses and the second remittance destination address match, to give the remittance instruction to remit from the management address to the second remittance destination address for the withdrawal amount obtained by subtracting the remittance instruction fee from the remittance amount. Further, the remittance processing unit 2034e may accept the withdrawal request while the remittance destination accesses the third destination information. As a result, the remittance instruction apparatus 203e can perform billing reliably. In addition, the store side can easily and surely obtain the withdrawal amount. The remittance instruction for these withdrawals may use the remittance execution service in another exchange or wallet or may use a remittance execution service implemented in the remittance instruction apparatus 203e.

As described above, in this embodiment, an example of a payment request by URL is shown. Since this approval URL is a URL, it can be used not only in an email but also as a link on a web page or a two-dimensional code on printed matter. With the store's https server providing payment information, many advantages including the following can be enjoyed.

- Compared to including payment information etc. in the URL parameter, the URL can be shorter, which is convenient for writing in emails and documents.
- Although the URL is short, the payment information acquired later is encrypted, so it is possible to prevent a third party from forging or falsifying the payment information, and remittance to a destination not intended by the customer can be avoided. As a usage pattern, for example, we can have the URL of this service displayed on the store site by making the remittance fee free for a predetermined number of times. Then, when the user (customer) of the store site clicks the link, the user registration screen of this service can be automatically displayed.
- There is no need to register a transaction in the remittance instruction apparatus or create an account in advance for the store to generate a URL, and the burden on the remittance instruction apparatus and the store server is light. For example, it can be realized with a one-time account.
- Since forgery and falsification are difficult and the burden on the remittance instruction apparatus is light, the approval URL can be disclosed to an unspecified number of people to request remittance. For example, it is also suitable for the remittance destinations of donations, small businesses, or individuals to use for their own payment as the store side.
- A store server implementer can realize a payment function simply by embedding an approval URL in a web page and preparing a page that describes payment information. The store server is easy to implement, and the user only clicks the link, which is highly convenient for the user. Therefore, usage of this service can be promoted.

In addition, the following advantages can be enjoyed by using the information in the SSL certificate.

- It is possible to charge using the remittance instruction apparatus without the need for store employees to create an account.
- There is no need to collect personal information such as email addresses, names and passwords to create an account.
- Since the identity can be guaranteed without manually creating a store account, there is no cost to confirm the identity.

The remittance instruction apparatus according to the present embodiment may be any apparatus that receives remittance information at least based on the public key certificate regarding the remittance destination. For example, cases are included where the remittance instruction apparatus receives the remittance information by encrypted communication using the public key certificate (for example, https), or when it receives the remittance information digitally signed by the key of the public key certificate at the remittance destination.

**Sixth Embodiment**

In the sixth embodiment, an example of applying each of the above-described embodiments to the remittance execution service will be shown.

It is assumed that the hardware configuration of the remittance execution apparatus according to the sixth embodiment is the same as that of Fig. 1. Therefore, the same functionality can be realized with the same configuration with other integrated circuits such as FPGA. However, it is assumed that the processes of the remittance execution apparatus according to the sixth embodiment is implemented in the program 1021.

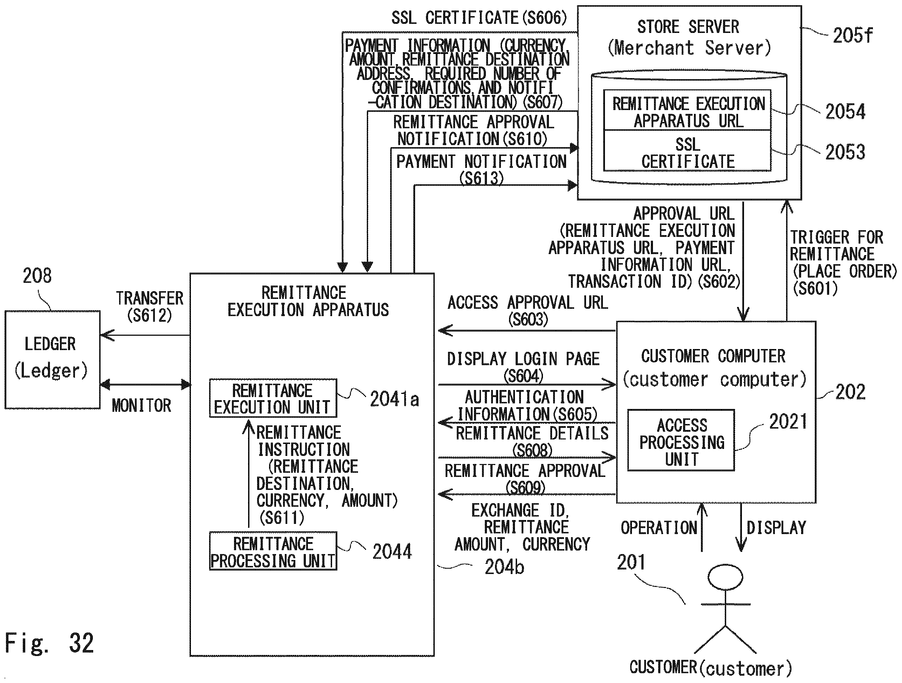

Fig. 32 shows a block diagram of a configuration and a remittance approval sequence of an information system related to remittance of virtual currency according to the sixth embodiment. Compared with other embodiments, the large difference is that the function of the remittance instruction apparatus and the function of the remittance execution service are both performed by the remittance execution apparatus 204b. The remittance execution apparatus 204b does not require the key definition table 2031 and the key registration processing unit 2033 described above. The store server 205f is a computer device that provides a website for electronic commerce. The store server 205f stores the URL 2054 and the SSL certificate 2053 of the remittance execution apparatus 204b in the storage device.

First, the customer 201 starts the ordering sequence on the store server 205f using the customer computer 202. Customer 201 performs an operation to confirm the purchase at the end of the ordering sequence. As a result, the access processing unit 2021 transmits a trigger to the store server 205f for starting remittance (S601). Alternatively, in the case of a physical store, the clerk instead may do this on a computer other than the customer computer 202. Then, the store server 205f creates a new URL by combining the following information as URL parameters with the URL 2054 (second destination information) of the remittance execution apparatus 204b. In the present embodiment, this will be referred to as an approval URL.

- the URL of a web page that describes payment information (payment information URL) (first destination information)
- the identifier (transaction ID) that identifies this payment Here, the payment information URL may point to one endpoint of the store server 205f. Or, other servers may be used. In the sixth embodiment, the description will be continued assuming that it points to one endpoint of the store server 205f.

Then, the store server 205f transmits this approval URL to the customer computer 202 (S602). Further, when the customer computer 202 has a camera, the approval URL can be read via a two-dimensional code. Further, the same applies to other communication methods such as infrared communication and short-range wireless communication. Then, the access processing unit 2021 of the customer computer 202 issues a GET request to the acquired approval URL (S603). If the customer 201 is not logged in to the remittance execution apparatus 204b at this point, the same login process as in step S204 described above is performed (S604, S605).

After logging in, the remittance processing unit 2044 of the remittance execution apparatus 204b requests the SSL certificate from the payment information URL acquired from the URL parameter of the approval URL, and acquires the SSL certificate 2053 from the store server 205f (S606). The remittance processing unit 2044 verifies the contents of the acquired SSL certificate. Then, the remittance processing unit 2044 issues a GET request to the payment information URL. The store server 205f that received the GET request returns payment information including the remittance currency, the remittance amount, the remittance destination address, the required number of confirmations, and the notification destination by https (S607).

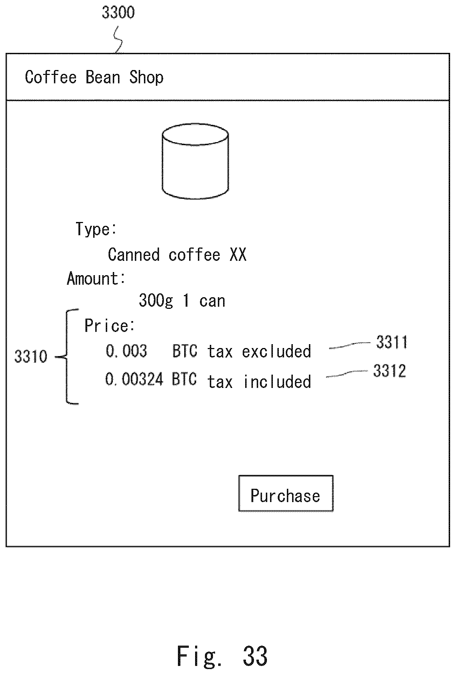

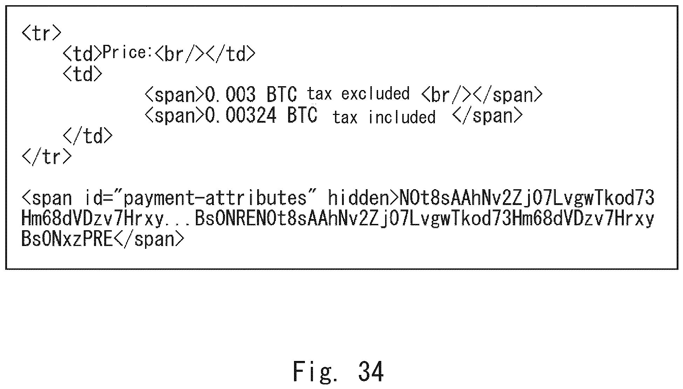

By allowing the payment information to be written in HTML, the store server 205f need only provide a web page explaining the product (service) for the URL parameter above. Fig. 33 is an example of the product page 3300 of the store server. Price information (Tax-excluded price section 3311 and Tax-included price section 3312) of the product appears in the area (Price display section 3310) displayed as "Price:". When this part is extracted in HTML format, it becomes, for example, as in Fig. 34. In this example, the remittance currency and the remittance amount can be extracted by the following procedure.

1. The remittance processing unit 2044 searches the page for a 'td' element containing the character string "Price:".
2. The remittance processing unit 2044 searches for the element including the character string "tax included" from the elements belonging to the 'tr' element including the 'td' element above.
3. The remittance processing unit 2044 uses the character string representing a numerical value in the character string of the element (Tax-included price section 3312) including the "tax included" above as the remittance amount. (0.00324 in this example.)
4. If there is a character string representing a currency that can be remitted in the character string of the element including the "tax included" above, the remittance processing unit 2044 uses it as the remittance currency. (BTC in this example.)

In addition, this product page 3300 has an element whose id is "payment-attributes", and the character string is the remittance destination address, notification destination, and required number of confirmations encrypted with the public key of the remittance execution apparatus 204b. By encrypting the remittance destination address, it is possible to prevent the customer 201 from sending money to the remittance destination address without following a predetermined procedure. In addition, by encrypting the notification destination, unnecessary spam mail and the like can be avoided.

The remittance processing unit 2044, which has extracted the payment information, adds the contents to the web page (remittance approval page 2500) as shown in Fig. 25 and transmits it to the customer computer 202 (S608). The store name 2501 is obtained from the Organization (O) field of the SSL certificate. The host name below it is the domain name included in the SSL certificate.

After confirming the payment information, the customer 201 selects the Approve button 2505, and the access processing unit 2021 of the customer computer 202 notifies the remittance execution apparatus 204b of the approval of remittance for the currency, remittance amount and exchange displayed or selected on the remittance approval page 2500 (S609). Then, the remittance processing unit 2044 of the remittance execution apparatus 204b notifies the store server 205f that the payment has been approved (S610). Specifically, since the email address is included in the notification destination of the payment information, the remittance processing unit 2044 sends an email to this email address to the effect that the payment has been approved. By including the transaction ID, which was acquired before as a URL parameter, in the email body, the recipient of the email can recognize which transaction has been approved. This email is electronically signed or encrypted with the private key of the remittance execution apparatus 204b to prevent tampering.

Then, the remittance processing unit 2044 issues a remittance instruction including the remittance currency, the remittance amount, and the remittance destination address to the remittance execution unit 2041a (S611). Then, the remittance execution unit 2041a writes the fact of remittance on the ledger 208 in response to the remittance instruction (S612). At this time, for a currency such as BTC in which a plurality of remittance destination addresses can be specified, the remittance execution unit 2041a collects a remittance execution fee. Specifically, the remittance execution unit 2041a remits to the remittance destination address specified by the store server 205f the specified amount minus the commission and remits the remittance execution commission to another remittance destination address held by the remittance execution apparatus 204b. When writing to the ledger 208, an identifier (transaction ID; txid) on the ledger is obtained. Therefore, after the remittance instruction, the remittance processing unit 2044 monitors the ledger 208 and waits until it is considered that the money has been received. When confirmation of the ledger is repeated the number of times specified as the required number of confirmations, the remittance processing unit 2044 sends an email to the email address specified before for the notification destination notifying that the payment has arrived (S613). It includes the transaction ID in the body of the email. As with the previous notification, emails can be encrypted or digitally signed.

As described above, in the sixth embodiment, an example in which both remittance execution and remittance processing are performed by one apparatus has been shown. It has been shown that the advantages of the above-described first to fifth embodiments can be enjoyed even if the remittance execution and the remittance processing are not implemented in separate apparatuses.

**Seventh Embodiment**

This embodiment is a modification of the above-described first to sixth embodiments and shows an example of a system in which the present invention is implemented on apparatuses of customers and stores such as smartphone applications.

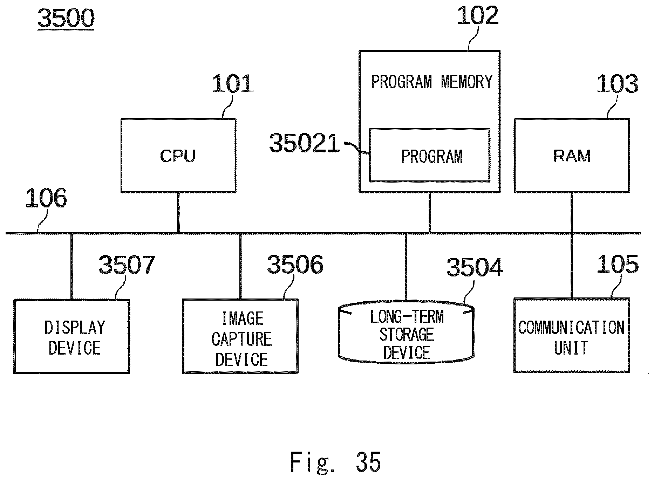

Fig. 35 is a block diagram showing a hardware configuration in the remittance instruction apparatus 3500 according to the seventh embodiment. In the figure, the CPU 101 executes the program 35021 in which the processes of the remittance instruction apparatus according to the present embodiment are implemented. The program memory 102 stores the program 35021 executed by the CPU 101. The RAM 103 is a volatile storage device that temporarily stores various information when the program is executed by the CPU 101. When the program is executed by the CPU 101, by storing the program 35021 in the RAM 103, the RAM 103 can be implemented to serve as the program memory 102. The long-term storage device 3504 is a nonvolatile storage device such as flash memory that stores various information for a longer period than the RAM 3503. The communication unit 105 is used to communicate with other devices. The image capture device 3506 is used for photographing the surrounding environment outside the apparatus and acquiring it as an image. When reading a barcode, a barcode reader may be provided. The CPU 101, the program memory 102, the RAM 103, the long-term storage device 3504, the communication unit 105, the display device 3507, and the image capture device 3506 are connected by the bus 106, which is used to transfer data and control signals to each other. Although program execution by a CPU will be described in this specification, the same functionality can be implemented with an integrated circuit such as an FPGA.

The payment information presenting apparatus described later in the present embodiment can have the same configuration as the remittance instruction apparatus 3500. Further, in the present embodiment, database functionality is used, and the data in the database is stored in the long-term storage device 3504, the RAM 103, or the like. Even if it is stored by other means, the essence of the invention is not impaired. If the remittance instruction apparatus 3500 and the payment information presentation apparatus are considered to be implemented as smartphones and tablets, it will be easy to imagine the usage situation.

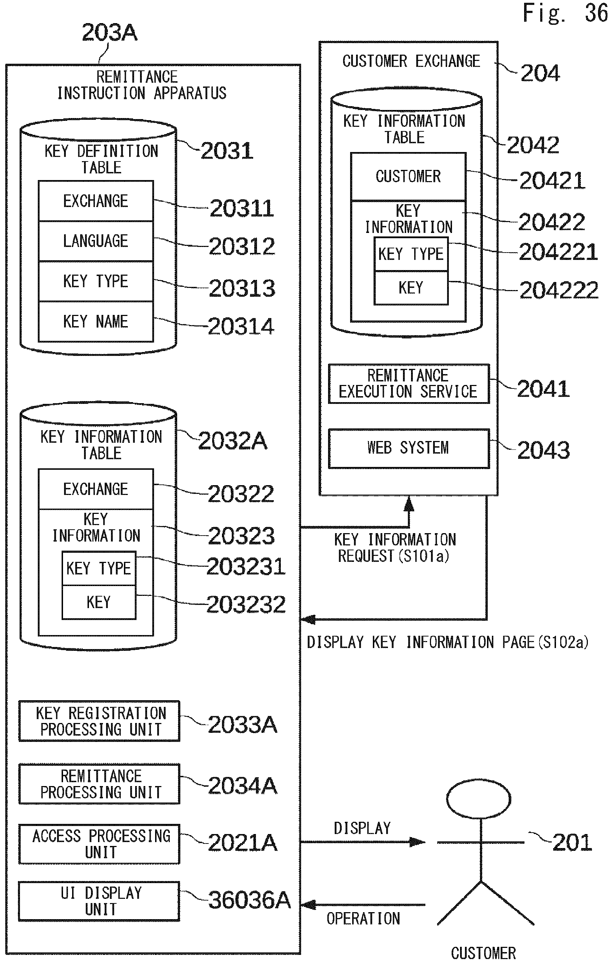

Fig. 36 is a block diagram showing a configuration of an information system related to remittance of virtual currency according to the present embodiment and of a sequence when registering a customer's key. Here, the customer exchange 204 is an information system operated by a virtual currency exchange company that mediates remittance of one or more types of virtual currencies (including transactions such as exchanges between currencies). The customer exchange 204 includes a remittance execution service 2041 that provides a service for remittance of a plurality of virtual currencies to each of a plurality of (registered) users (for example, customer 201) managed by the customer exchange 204. Here, it is assumed that the customer exchange 204 and the remittance execution service 2041 have a one-to-one correspondence. Then, the customer exchange 204 stores the key information table 2042, and the key information table 2042 stores the key information 20422 in association with each customer 20421. The key information 20422 includes a plurality of combinations of a key (API key or the like) 204222 for using the API provided as the remittance execution service 2041 and a key type 204221 which is its type. That is, the customer 20421 and the key information 20422 have a one-to-one correspondence, and the key information 20422 includes one or more pairs of the key type 204221 and the key 204222. Therefore, each key 204222 is different for each customer 20421. Then, the customer exchange 204 has a function as a web system 2043, and in response to a key information request from the customer 201, it reads out and outputs the key information 20422 (a set of key type 204221 and key 204222) in which the customer 201 is associated with the customer 20421 from the key information table. However, the key storage method and output method are not limited to this.

The remittance instruction apparatus 203A is a computer terminal operated by the customer 201 (predetermined user), and is a personal computer, a smartphone, a tablet, or the like which runs, for example, a browser or the like (access processing unit 2021A), or an application software or the like (UI display unit 36036A, remittance processing unit 2034A, or key registration processing unit 2033A, or access processing unit 2021A). The customer 201 is an example of a "remittance source" and a user who uses a predetermined remittance execution service.

Further, the remittance instruction apparatus 203A is an information processing apparatus capable of managing key information for each exchange on which the customer 201 has an account and can give remittance instructions to a plurality of exchanges. The remittance instruction apparatus 203A includes a key definition table 2031, a key information table 2032A, a key registration processing unit 2033A, a remittance processing unit 2034A, an access processing unit 2021A, and a UI display unit 36036A. The key definition table 2031 is a table that stores definitions related to the keys for each of the plurality of remittance execution services. Here, the key definition table 2031 is a table for managing per key type the character strings for the names of the keys used on the information systems of the exchanges, for the keys required when using the APIs of the remittance execution services provided by the exchanges, for each exchange and language. The key definition table 2031 associates the exchange 20311, the language 20312, the key type 20313, and the key name 20314. There may be at least 1 or more key names for each exchange. As a matter of course, the key type 20313 does not have to have the same contents as the key type 204221, and the key type may be represented by a position in the array. Further, the key definition table 2031 may be a separate table for each language.

The key information table 2032A is a table that manages key information 20323 for each exchange 20322. The key information 20323 includes a plurality of pairs of the key type 203231 and the key 203232. Further, the key information 20323 is different for each exchange 20322 and may include at least one key and information that can uniquely identify the customer 201 on the exchange 20322. For example, one of the keys is the user identifier of the customer 201 on the exchange 20322, or information that can be converted into the user identifier. Further, for example, another key is a private key for encryption or digital signature used for communicating with the exchange 20322. Here, the key information table 2032A is an example of a key information storage unit, and stores each of a plurality of key information for predetermined users to use each remittance execution service by at least associating each of a plurality of remittance execution services.

The key registration processing unit 2033A generates and returns a key registration page by referring to the key definition table 2031 in response to a key registration request from the customer, and stores the key input via the key registration page to the key information table 2032A. In response to the remittance request from the customer, the remittance processing unit 2034A gives a remittance instruction to the specified exchange for the specified virtual currency and amount for remitting to the remittance destination using the key registered in the key information table 2032A.

Subsequently, the flow of the process of registering the customer's key will be described with reference to Fig. 36. First, the access processing unit 2021A of the remittance instruction apparatus 203A transmits a key information request to the customer exchange 204 in response to the operation of the customer 201 (S101a). For example, the remittance instruction apparatus 203A logs in to the website of the customer exchange 204 on which the customer 201 has an account, and the web system 2043 of the customer exchange 204 refers to the key information table 2042 and reads the key information 20422 associated with the customer 201, and generates a key information page in which the key 204222 is associated with the character string of the name of the key type 204221, and transmits the key information page for display on the customer computer 202 (S102a). Since the communication method between the customer exchange 204 and the remittance instruction apparatus 203A is not covered by the present invention, the description thereof will be omitted. The access processing unit 2021A displays the key information page received from the customer exchange 204 on the display apparatus 3507. The key information page 300 displayed on the remittance instruction apparatus 203A has two keys as shown in Fig. 3, for example, and has the key name 311 "API key" and the key name 321 "private key", respectively. It shows that the key information page 300 displays the key 312 associated with the key name 311 and the key 322 associated with the key name 321. Therefore, the customer 201 can obtain the keys by visually observing and copying the character strings of the keys for each key name from the key information page 300 displayed on the screen of the customer computer 202.

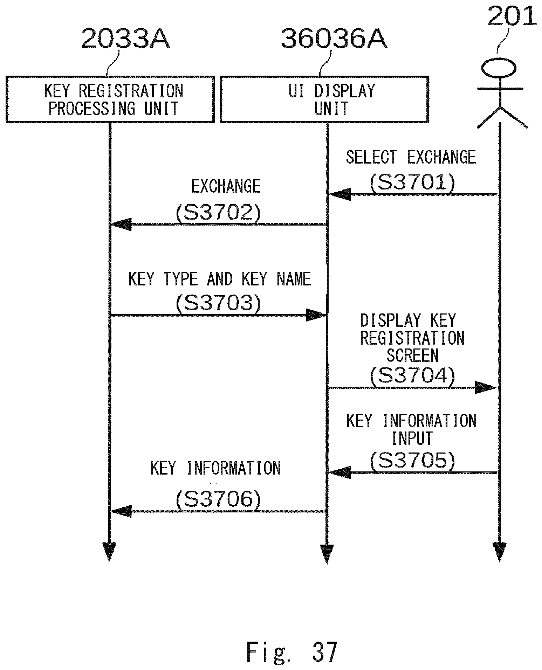

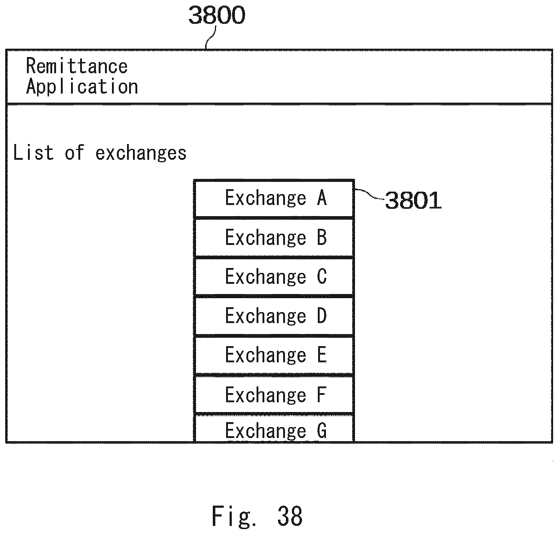

Next, the customer 201 operates the remittance instruction apparatus 203A to register the key obtained earlier. At this point, it is assumed that the lock for using the remittance instruction apparatus 203A and the application has already been released. Here, a sequence for displaying the key registration screen for the exchange to be registered will be described with reference to Fig. 36 and Fig. 37. The key registration screen is displayed after selecting the button 3801 representing the exchange to be registered on the exchange list screen 3800 (S3701) as shown in Fig. 38, for example. At this point, the key registration processing unit 2033A refers to the key definition table 2031, reads out the key type 20313 and the key name 20314 based on the selected exchange (S3702) and the display language of the UI display unit 36036A, and passes them to the UI display unit 36036A (S3703). Then, the UI display unit 36036A displays a key registration screen on the display apparatus 3507 including a key input field corresponding to the key name 20314 based on the passed information (S3704).

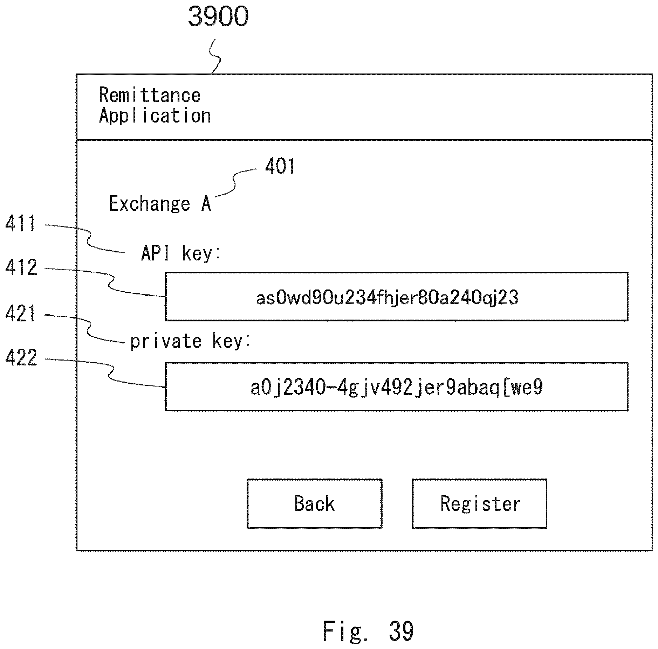

The key registration screen 3900 displayed on the remittance instruction apparatus 203A includes text boxes (key entry fields 412 and 422) for inputting the keys corresponding to the key name 411 "API key" and the key name 421 "private key" for the exchange name 401, for example, as shown in Fig. 39. The customer 201 inputs the information copied from Fig. 3 into the key input fields 412 and 422 corresponding to the "API key" and the "private key" on the key registration screen 3900 displayed on the remittance instruction apparatus 203A. Here, the "API key" is an identifier that identifies the customer 201 on the customer exchange 204.

Here, the names (key names) of "API key" and "private key" are matched with the expressions (character strings) handled on the information system of the customer exchange 204. This is possible because the key definition table 2031 stores the name of the key for each exchange and language. By doing so, once the implementation of displaying the key registration screen in the key registration processing unit 2033A is completed, even a programmer who does not know UI display technology can write a program corresponding to a new exchange, and the key registration screen can be displayed simply by describing the correspondence with the key names. This is particularly important because it allows a small number of people to respond quickly to more exchanges. In addition, since the key names are consistent between the key registration screen and the key information page of the exchange, the customer does not have to wonder which key to enter, which is helpful from the viewpoint of usability.

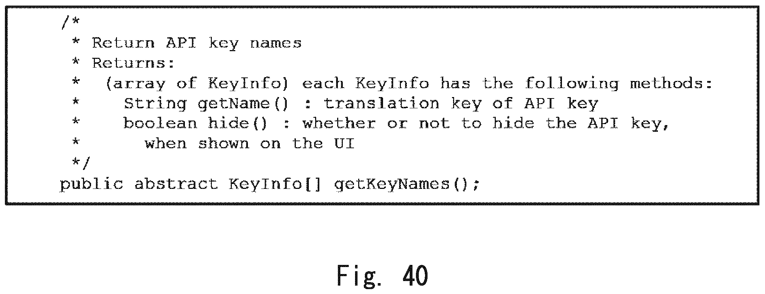

One way to achieve this is to use object-oriented inheritance and internationalization technology. Here, Fig. 40 shows a specific example in the Java (registered trademark) language. The programmer only needs to define the method in Fig. 40 for all exchange classes. Here, the exchange class is defined for each customer exchange and holds information about each exchange. The method of Fig. 40 performs the process of arranging and returning information ('KeyInfo') related to key names in an array. Here, each element of the array corresponds to one key. Therefore, when there are two types of keys, the length of the array is 2. Each element of the array is an instance that holds a String and a boolean value.

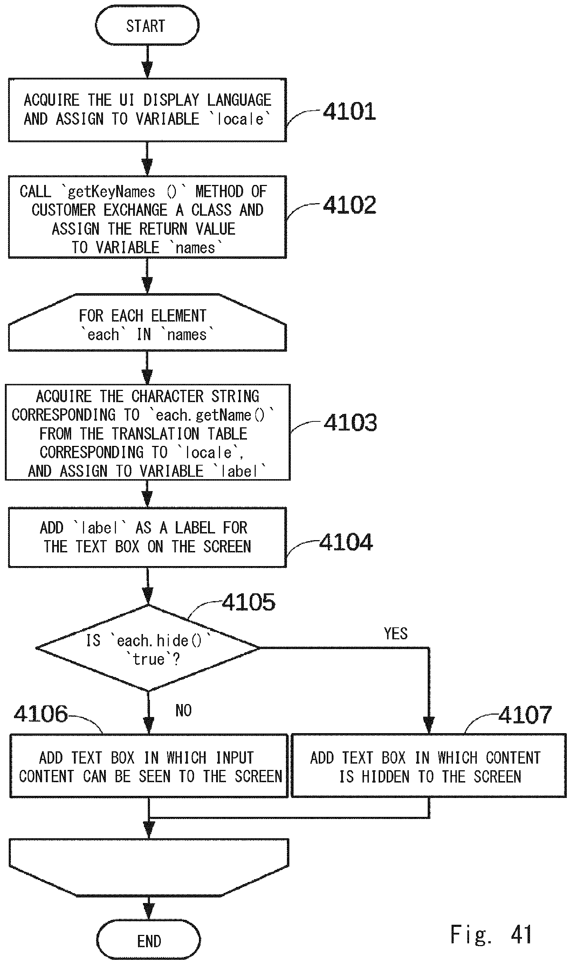

The UI display unit 36036A displays the screen in Fig. 39 based on this information. Here, Fig. 41 shows a procedure for adding text boxes for inputting keys to the screen in the process of generating the key registration screen. As a premise, at the beginning of the procedure, it is assumed that the part above the text boxes on the screen has already been generated. Further, the UI display unit 36036A has identified the identifier (exchange ID) of the exchange selected in step S3701. First, in step 4101, the UI display unit 36036A acquires the display language selected in advance and assigns it to the variable 'locale'. Next, in step 4102, the UI display unit 36036A calls the method of Fig. 40 and assigns the obtained array to a variable called 'names'. Then, step 4103 to step 4106 or step 4107 is repeated for each element of the array 'names' (that is, as 'each'). In step 4103, the UI display unit 36036A first uses the translation table (key definition table 2031) corresponding to 'locale' and gets the character string corresponding to the key returned by 'each.getName()' and assigns it to the variable 'label'. The translation table will be described later. In the next step 4104, the UI display unit 36036A adds the character string assigned to the variable 'label' as a label attached to a text box on the screen. Here, 'each.hide()' represents an attribute of the text box. When the UI display unit 36036A determines that 'each.hide()' is 'true' in the step 4105, a text box in which the character string input by the customer 201 in step 4107 is displayed as hidden characters is added to the screen. On the contrary, when 'each.hide()' is 'false', the UI display unit 36036A adds a text box in which the input content can be seen on the screen. After the loop above, the UI display unit 36036A adds the rest of the screen to complete the screen.

Here, the above-mentioned translation table (key definition table 2031) is a lookup table as shown in Fig. 7, for example, and has the format in which the character string in the left column (key) is searched, and the character string in the right column (key name 20314) is obtained. Here, the "key" is, for example, a combination of the exchange 20311 and the key type 20313 but is not limited thereto. Fig. 7 is an example of a Japanese translation table, and this translation table is prepared for the number of supported languages (language 20312). A translation table may be prepared for each exchange and each language, but in this example, the character strings of the key names 20314 used in all the exchanges is held in one translation table. Character strings in the left column (key) are the character strings returned by the method of Fig. 40. The translation table may be read from a file in the long-term storage device 3504 or a table in the database, regardless of the storage location. By having a translation table in a place other than the program, even a person in charge who is not a programmer can follow the expression on the key registration page when the expression on the exchange changes.

Explanation will be continued by returning to Fig. 36 and Fig. 37. The UI display unit 36036A passes to the key registration processing unit 2033A the key information (S3706), which associates the key character strings of the key input (S3705) in the key input fields 412 and 422 of the key registration screen 3900 of Fig. 39 and the key types corresponding to each of the key names 411 and 421. The key registration processing unit 2033A then registers the received key information in the key information table 2032A. For example, the key registration processing unit 2033A uses the exchange ID as the exchange 20322 and adds or updates it to the key information table 2032A in association with the set of the key type 203231 and the key 203232 included in the received key information.

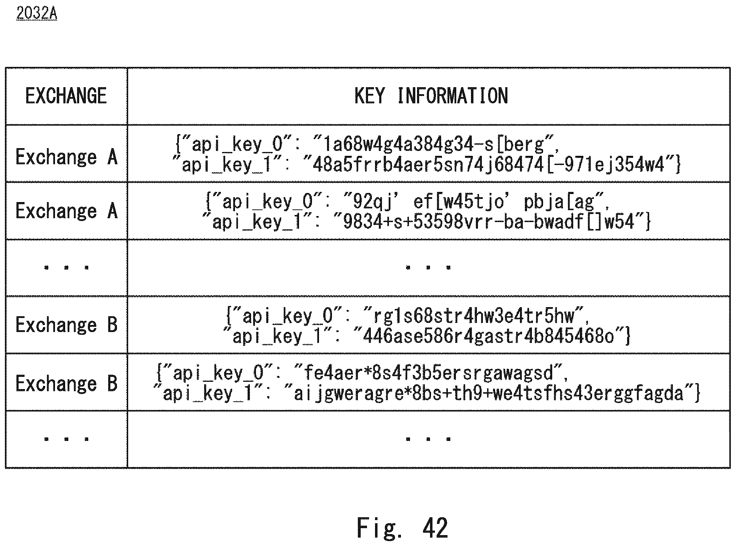

Here, an example of the key information table 2032A is shown in Fig. 42. An identifier (exchange ID, etc.) representing an exchange is held in the Exchange column. In the Key information column, the key input in Fig. 4 is held in json (Javascript (registered trademark) Object Notation) format. Each pair in j son format is the internal name of the key and the value of the key entered in Fig. 39. The key information may be an array, but the reason why the key information is held in the structure with a variable number of elements is because the number of keys differs depending on the exchange. The key information should be encrypted to ensure security, but the description will be omitted because commonly known techniques can be used for the encryption method. Further, for exchanges where there is a method of obtaining access tokens by methods such as OAuth, the access token can be obtained by such method and registered in the key information table 2032A using this as the key. Needless to say, the key information 20422 may be automatically acquired by logging in to the customer exchange 204 on behalf of the customer 201. As in the second embodiment described above, the number of keys may be managed in the key definition table in the seventh embodiment as well. In this case, this can be realized by modifying the key information table and the key registration processing unit of the seventh embodiment with the process to use the number of keys based on the configuration of the second embodiment.

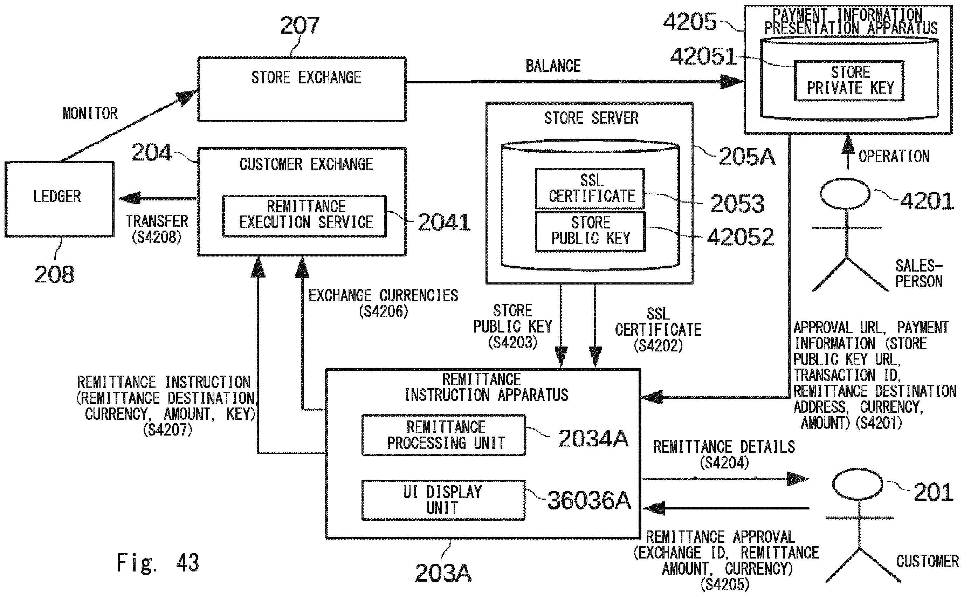

Fig. 43 shows a block diagram of a configuration and a remittance approval sequence of an information system related to remittance of virtual currency according to the present embodiment. In the present embodiment, it is assumed that the wallet function for managing deposits and the exchange function for exchanging currencies are performed on the same customer exchange 204. The store server 205A is a computer device that provides the official website of the store. The store server 205A stores the SSL certificate 2053 (public key certificate) in the storage device. Here, the SSL certificate 2053 is an electronic certificate in which a trusted certificate authority has proven the credibility of the URL (and the site operating organization) of the store server 205A. The remittance instruction apparatus 203A of Fig. 43 is the same as the remittance instruction apparatus 203A of Fig. 36, but a part of the configuration is omitted.

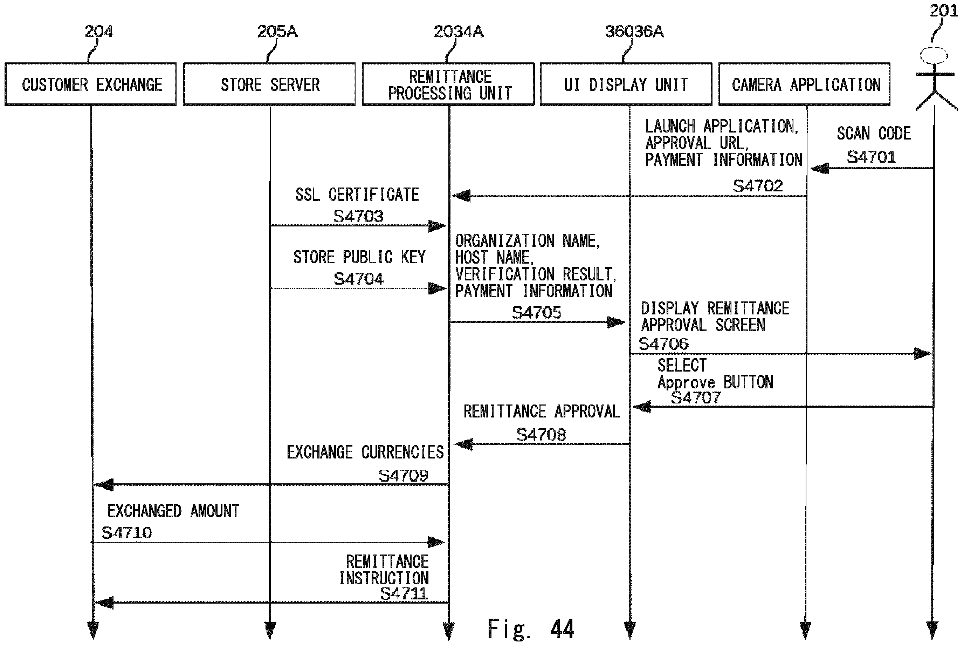

The sequence for performing a remittance instruction will be described with reference to Fig. 43 and Fig. 44. First, the salesperson 4201 operates the payment information presentation apparatus 4205 to present a two-dimensional code to the customer 201. The payment information presentation apparatus 4205 with a display such as a tablet makes it easy to imagine the usage situation, but it may be another information processing apparatus such as a personal computer, a smartphone, or a dedicated terminal. The two-dimensional code encodes an approval URL which has, as its parameter, information (hereinafter referred to as "payment information") in which the set of the store public key URL (first destination information), transaction ID, remittance destination address, currency, and amount is digitally signed with the store private key 42051. (Hereinafter, when describing "digitally signing", the same or better effect can be obtained by "encrypting", so "digitally signing or encrypting" is represented and only described as "digitally signing".) Customer 201 operates the remittance instruction apparatus 203A to have it read by the image capture apparatus 3506 (S4201, S4701). Here, an example using a two-dimensional code is shown, but other optical information such as a bar code may be used. Further, the payment information may be received by other means using the communication unit 105. Here, the store public key URL is a URL using the host name and domain name of the store server (where the public key of the store is stored), and describes the public key of the store as a directory and a path name. For example, when the URL of the store server 205A is "https://example.com" and the public key of the store is "XY ... Z", the store public key URL can be written as "https://example.com/XY ... Z". Therefore, it can be said that the store public key URL includes the store server URL. When the remittance instruction apparatus 203A decodes the approval URL, the remittance instruction apparatus 203A activates the remittance instruction application software including the remittance processing unit 2034A and the UI display unit 36036A with the deep link function (S4702).

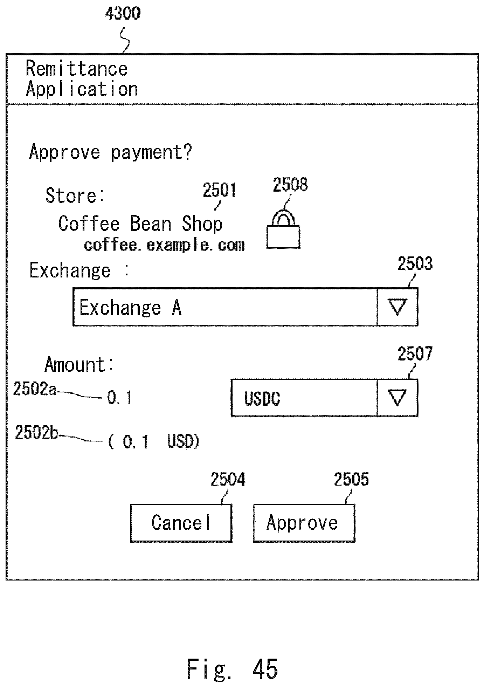

After the remittance instruction application software is launched, the remittance processing unit 2034A extracts the store public key URL from the payment information, and downloads the SSL certificate 2053 of the store server 205A indicated by the host name (store server URL) of the URL by the method specified by https communication, and its validity is verified (S4202, S4703). Then, the remittance processing unit 2034A downloads the store public key 42052 from the store public key URL with https communication, and verifies that the extracted payment information is digitally signed with the store private key 42051 corresponding to the store public key 42052 (in the payment information presentation apparatus 4205) (S4203, S4704). After confirming that it was digitally signed correctly, the remittance processing unit 2034A passes the information necessary for generating the screen as shown in Fig. 45 (remittance approval screen 4300) to the UI display unit 36036A (S4705). At this time, if the downloaded SSL certificate 2053 is an EV certificate, the UI display unit 36036A adds the organization name obtained from the Organization (O) field as the store name 2501 to the screen. Further, the remittance processing unit 2034A adds the character string extracted from the store server URL as the host name (information included in the first destination information) under the store name 2501. For the host name, the one obtained from the Common Name (CN) field of the SSL certificate 2053 (information included in the public key certificate) may be used. The remittance processing unit 2034A adds an icon 2508 (information indicating that the store has been verified by the public key certificate) when indicating that the store has been verified by the SSL certificate. The remittance processing unit 2034A chooses from the exchanges registered by the customer 201 those that can remit in the currency specified in the payment information and sets them as options in the drop-down menu (exchange selection field) 2503. The remittance processing unit 2034A chooses the currencies that can be handled by the exchange selected with the drop-down menu 2503 and sets them as options in the drop-down menu (currency selection field) 2507.

Then, the UI display unit 36036A displays the generated remittance approval screen 4300 on the screen (S4204, S4706). Then, when the customer 201 selects the Approve button 2505 (S4707), the UI display unit 36036A notifies the remittance processing unit 2034A of the remittance approval including the currency, the remittance amount, and the transaction ID displayed on the remittance approval screen 4300 (S4205, S4708).

Now, the character string pattern may be restricted in the path of the store public key URL. For example, if the store public key URL can contain only up to three single-byte slashes (/), it will be difficult to appropriate the SSL certificate of the website hosting service (that is, another company). In addition, the use of specific domains may be prohibited, and the restriction on the character string pattern may be changed or lifted for specific domains.

In this embodiment, the currency to be remitted can be changed. For that purpose, the following operation is performed before the customer 201 presses the Approve button 2505. For example, when customer 201 selects a currency in the drop-down menu 2507, the remittance amount 2502a displays the converted amount in the selected currency. For example, the UI display unit 36036A may notify the remittance processing unit 2034A of the selected currency, obtain the converted amount calculated by the remittance processing unit 2034A, and display the updated remittance approval screen 4300.

If the currency selected in the drop-down menu 2507 when the customer 201 selects the Approve button 2505 is the same as the currency included in the payment information, the remittance processing unit 2034A will send currency in that currency as in the other embodiments. More specifically, as the identifying unit, the remittance processing unit 2034A identifies and reads the key information 20323 associated with the exchange ID (remittance execution service) included in the remittance approval from the key information table 2032A. Then, the remittance processing unit 2034A uses the identified key information to transmit a remittance instruction to the remittance execution service 2041 of the selected exchange (here, the customer exchange 204) to transfer the approved digital currency and remittance amount to the remittance destination address of the store that is the remittance destination (S4207, S4711).

On the other hand, if the currency selected in the drop-down menu 2507 when the customer 201 selects the Approve button 2505 is different from the currency included in the payment information (if accompanied by currency exchange), the remittance processing unit 2034A sends the currency after exchanging the selected currency for the currency of the payment information (S4206, S4709). At this time, it is possible to place an order at the market price, but it is also possible to place an order at a limit price so that the exchange does not exceed the converted amount. The limit price at that time is the conversion rate used when calculating the converted amount.

After the currency exchange is performed, the remittance processing unit 2034A confirms the exchanged amount with the customer exchange 204 (S4710), and transmits a remittance instruction for the customer exchange 204 to transfer the exchanged amount to the remittance destination address in the payment information (S4207, S4711). Then, the remittance execution service 2041 of the customer exchange 204 writes the fact of remittance on the ledger 208 (S4208). After that, because the store exchange 207 can monitor the ledger 208, the store exchange 207 can monitor the ledger 208, detect payment to the remittance destination address of the store, and transfer the balance of the remittance destination address to the payment information presentation apparatus 4205, the payment information presentation apparatus 4205 can know the payment by checking the balance. If the store has multiple payment information presentation apparatuses, assigning a remittance destination address to each apparatus makes it easier to monitor payments. Alternatively, if memory capacity allows, the payment information presentation apparatus 4205 may directly monitor the ledger 208. At that point, if the identifier (Transaction ID; txid) on the ledger at the time of remittance is acquired from the remittance instruction apparatus 203A with a two-dimensional code or the like, monitoring can become more efficient. Alternatively, if a new remittance destination address is generated for each transaction, the correspondence between the customer and the transaction can be clarified. Alternatively, if the txid is transmitted to the notification destination of the store server 205A by the method shown in the eighth embodiment, the store side can surely detect the deposit.

As described above, in the present embodiment, the remittance instruction apparatus that allows any store server to start a transaction even if the store information (store name, remittance destination address, etc.) is not registered in advance in the remittance instruction apparatus is shown. By using the SSL certificate, the credibility of the store can be evaluated, and the customer can pay with confidence. In addition, this can prevent fraudulent acts such as putting a fake sticker on the two-dimensional code of the store. Further, in the present embodiment, the signature source of the payment information can be guaranteed by placing the public key for verifying the digital signature of the payment information on the https server assured by the SSL certificate. By making this possible without sharing the private key of the SSL certificate with the payment information presenting apparatus, the risk of leaking the private key of the SSL certificate is reduced. Further, in order to invalidate the approval URL issued so far, it is only necessary to delete the public key on the store server.

It should also be mentioned here that if the SSL certificate and the verification of the digital signature are eliminated, any individual who does not have a web server can request payment with a apparatus having the same configuration as the payment information presenting apparatus. That is, the refund process can be easily performed by the customer side presenting the two-dimensional code and the store side using the remittance instruction apparatus.

Also, of the multiple elements included in the payment information (store public key URL, transaction ID, remittance destination address (remittance destination account), currency, amount, notification destination, etc.), which elements are used as the parameter of the approval URL and which elements are provided by the store server may be changed. Further, the customer may input some of the elements. For example, as in the second embodiment, the transaction ID may be included as a parameter of the approval URL, and the other elements described above may be provided from the store server 205A. In this case, the payment information presentation apparatus 4205 notifies the store server 205A (corresponding to the store server URL) of payment information (and transaction ID) including the remittance destination address, currency, amount, notification destination, etc. in advance. (The transaction ID may be issued by the store server 205A.) Then, the payment information presentation apparatus 4205 outputs an approval URL in which the store server URL and the transaction ID are specified as parameters to the remittance instruction apparatus 203A. When the remittance processing unit 2034A of the remittance instruction apparatus 203A acquires the approval URL, it extracts the store server URL and the transaction ID from the parameters of the approval URL, and sends a payment information request to the store server 205A using the store server URL and the transaction ID. The store server 205A returns payment information (generated as necessary) to the remittance instruction apparatus 203A based on the transaction ID received from the remittance instruction apparatus 203A. Alternatively, as in the fifth and sixth embodiments, the payment information can be provided from the store server 205A to the remittance instruction apparatus 203A by including the payment information URL (URL of the web page in which the payment information is described) in the parameter of the approval URL. In this case, the payment information presentation apparatus 4205 outputs an approval URL in which the payment information URL is specified as a parameter to the remittance instruction apparatus 203A. When the remittance processing unit 2034A of the remittance instruction apparatus 203A acquires the approval URL, it extracts the payment information URL from the parameters of the approval URL and transmits the payment information request to the store server 205A using the payment information URL. The store server 205A returns payment information to the requesting remittance instruction apparatus 203A in response to the payment information request for the payment information URL.

Further, it can be said that the payment information presenting apparatus at least outputs payment information specifying information for specifying payment information. Here, the payment information specifying information may be the payment information itself or access information to the payment information (for example, payment information URL, transaction ID, store server URL, store public key URL, etc.). Further, the payment information specifying information may be represented by electronic information such as an approval URL in which payment information or access information to payment information is specified as a parameter, or visual information that expresses this such as two-dimensional code. In these cases, the remittance processing unit 2034A of the remittance instruction apparatus 203A identifies the payment information based on the payment information specifying information acquired from the payment information presentation apparatus 4205, and issues the remittance instruction based on the identified payment information. For example, when the payment information specifying information is access information to the payment information, the remittance processing unit 2034A can extract the access information from the payment information specifying information and acquire the payment information from the store server with the access information.

The method of outputting the payment information specifying information by the payment information presenting apparatus includes the following. For example, the payment information presenting apparatus may output the payment information specifying information to be displayed on a display mounted on or connected to the payment information presenting apparatus. In this case, as described above, the remittance instruction apparatus can acquire the payment information specifying information displayed on the display via the reading unit such as a camera mounted on the apparatus. Alternatively, the payment information presenting apparatus may output the payment information specifying information by transmitting the payment information specifying information to the remittance instruction apparatus by wired or wireless communication. In this case, the remittance instruction apparatus may display the payment information specifying information received from the payment information presenting apparatus on its own display unit. Alternatively, the remittance instruction apparatus may send a payment information specifying information acquisition request to the payment information presenting apparatus, and the payment information presenting apparatus may return the payment information specifying information in response to the acquisition request. In this case as well, the remittance instruction apparatus may display the received payment information specifying information on its own display unit. Alternatively, the remittance instruction apparatus may extract payment information or access information from the received payment information specifying information.

In this embodiment, in particular, since the company that provides the remittance instruction service does not need to manage any server, and the key management can be left to the customer, the remittance can be performed at an extremely low cost. Further, since the payment information presenting apparatus does not need to communicate with the server when presenting the payment information, it is also an advantage that the payment information can be presented without delay. At the same time, payment information is prepared by each store server, and remittance instructions are also processed by each customer terminal, so the processing load is distributed, and the remittance execution service is usually designed to withstand high loads, so it is possible to provide a comprehensive payment service with high processing capacity at an extremely low cost.

In this embodiment, an example in which the remittance instruction application software is launched with the deep link function is shown, but the processing of the remittance processing unit can also be started by implementing functionality of photographing and recognizing a two-dimensional code in the remittance instruction application software itself.

Further, also in the present embodiment, as in the above-described first to sixth embodiments, payments from a plurality of payment companies can be comprehensively handled to improve customer convenience.


**Eighth Embodiment**

This embodiment is a modification of the other embodiments and shows an example in which a payment procedure is started by opening a URL link. It is assumed that remittances are handled by financial institutions and payment services that handle electronic money, shopping points, legal tender, etc. and that remittances and payments can be instructed through APIs. These financial institutions and payment services will be collectively referred to as "financial institutions". In addition, terms related to sending digital currencies such as remittance, transfer, payment, settlement, and remittance reservation will also be collectively referred to as "remittance".

The hardware configuration of the remittance instruction apparatus according to the present embodiment is similar to that shown in Fig. 35. Therefore, the same functionality can be realized with the same configuration with other integrated circuits such as FPGA. However, it is assumed that the processes of the remittance instruction apparatus according to the present embodiment is implemented in the program 35021.

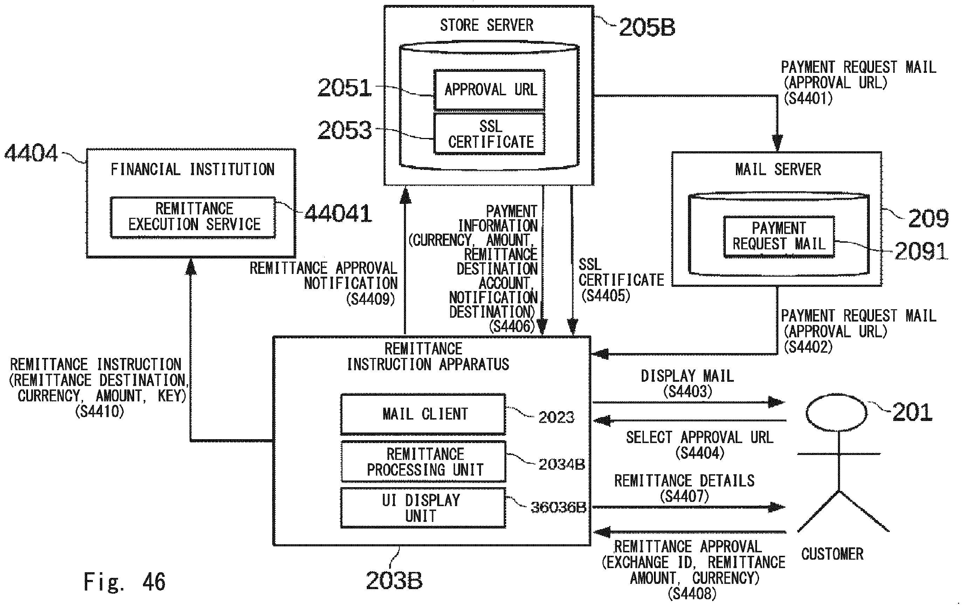

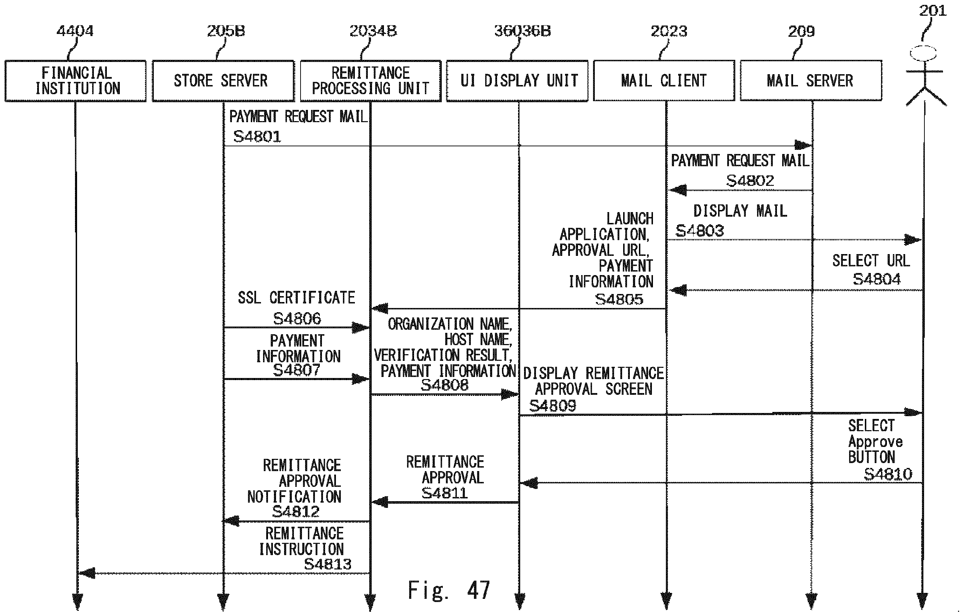

Fig. 46 is a block diagram of a configuration and a remittance approval sequence of an information system for remittance of digital currency according to the present embodiment. The flow for remittance in the present embodiment will be described with reference to the sequence diagrams of Fig. 46 and Fig. 47. The store server 205B sends a payment request email with the approval URL 2051 in the body to the mail server 209 with the email address of the customer 201 as the destination in accordance with the trigger to start remittance from the remittance instruction apparatus 203B or other ordering sequence (S4401, S4801). At this time, the approval URL 2051 is a deep link for activating the remittance instruction application software (hereinafter, remittance instruction application) including the remittance processing unit 2034B and the UI display unit 36036B. (If the remittance instruction application is not installed, the approval URL refers to the web page that recommends installing the remittance instruction application, or the remittance instruction apparatus installed on the web server.) The payment request email may be transmitted from a terminal operated by a clerk other than the store server 205B.

The mail server 209 is a general mail server. The mail server 209 receives the payment request mail from the store server 205B and stores it in the storage device as a payment request mail 2091. The mail server 209 sends the payment request mail 2091 to the remittance instruction apparatus 203B in response to the mail retrieval request from the mail client 2023 of the remittance instruction apparatus 203B.

The mail client 2023 of the remittance instruction apparatus 203B sends a mail retrieval request to the mail server 209 at the time of startup or the like, and receives the payment request mail 2091 including the approval URL 2051 from the mail server 209 (S4402, S4802). The received payment request mail 2091 is displayed to the customer 201 (S4403, S4803). When the customer 201 selects the approval URL written in the received email (S4404, S4804), the remittance instruction application is launched (S4805). When the remittance instruction application is launched, it is possible to demand an authentication procedure such as password input or biometric authentication of customer 201. After starting the remittance instruction application, the remittance processing unit 2034B requests the SSL certificate from the store server URL of the store server 205B pointed to by the parameter (or its redirect destination) of the approval URL selected in step S4404 before (S4804). Then, the SSL certificate 2053 is obtained from the store server 205B (S4405, S4806). The remittance processing unit 2034B verifies the contents of the acquired SSL certificate 2053. If the verification is successful, the remittance processing unit 2034B issues a GET request to the endpoint specified as the parameter (or its redirect destination) of the approval URL. The store server 205B that receives the GET request returns by https payment information including the remittance currency, the remittance amount, the remittance destination address (remittance account), and the notification destination (S4406, S4807). Here, an example using https is shown, but when it is not necessary to keep the payment information secret, if the payment information is digitally signed by the private key of the SSL certificate 2053, it goes without saying that tampering can be prevented even if the communication is not encrypted. Further, as a matter of course, the same effect can be obtained by other communication methods without depending on http/https.

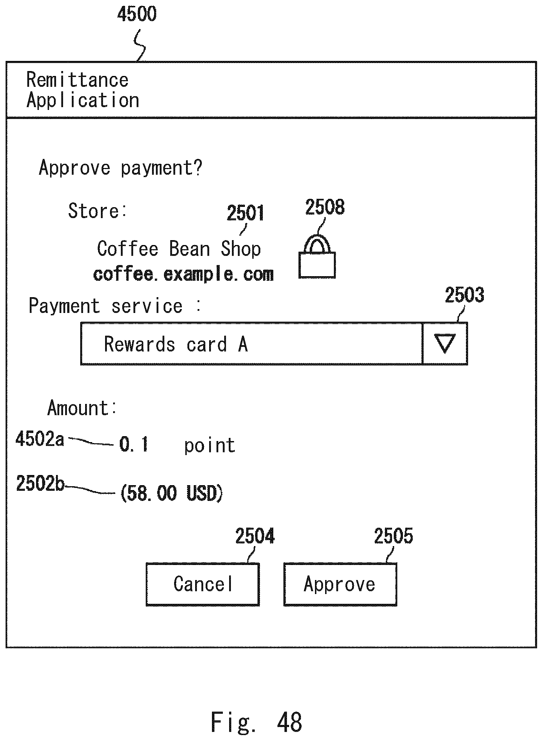

The remittance processing unit 2034B passes the acquired payment information and the contents of the SSL certificate to the UI display unit 36036B (S4808), and the UI display unit 36036B displays the contents on the screen as shown in Fig. 48 (remittance approval screen 4500) (S4407, S4809). Here, the icon 2508 is an icon indicating that the SSL certificate has been verified. The store name 2501 is obtained from the Organization (O) field of the SSL certificate, and is displayed only when the verified SSL certificate is an EV certificate or an OV (Organizational Validation) certificate. The host name below it is extracted from the store server URL and matches the domain name included in the SSL certificate. In the drop-down menu 2503, the financial institution (payment service) to transfer currency can be selected. (In Fig. 48, "Rewards card A" is selected as the financial institution.) For the amount 4502a, the converted amount in the currency handled by the financial institution selected in the drop-down menu 2503 is displayed.

When the customer 201 confirms the payment information, the Approve button 2505 is selected (S4810), and the UI display unit 36036B notifies the remittance processing unit 2034B to that effect (S4408, S4811). The remittance processing unit 2034B notifies the store server 205B of the fact that the remittance is approved for the financial institution and the remittance amount displayed or selected on the remittance approval screen 4500 (S4409, S4812). Specifically, since the notification destination of the payment information above includes the notification destination URL of the remittance approval notification, the remittance processing unit 2034B issues a https POST request to the notification destination URL. Even if the transaction ID is not explicitly sent to the notification destination, by incorporating the information in the URL, the same effect can be obtained without treating it as a parameter.

If a telephone number is specified as the notification destination of the payment information instead of the notification destination URL, the remittance processing unit 2034B sends a remittance approval notification text to the telephone number as SMS. Alternatively, a voice call may be made to the telephone number as an automatic voice message.

Then, the remittance processing unit 2034B transmits a remittance instruction to the financial institution 4404 using the key of the customer 201 (S4410, S4813). The usage of the key conforms to the method specified by the financial institution. For example, one of the keys (private key) is used to digitally sign the set of (another key, remittance amount, and remittance destination account) and it is sent to the financial institution to give a remittance instruction. The other key is an identifier that represents the remittance source account. After that, the remittance execution service 44041 of the financial institution 4404 that received the remittance instruction performs the remittance.

As described above, in this embodiment, an example of remittance using a URL has been shown. In the present embodiment, an example of transmitting the URL by email is shown, but of course it is also possible to write the URL on a web page.

Further, also in the present embodiment, as in the above-described first to seventh embodiments, payments from a plurality of payment companies can be comprehensively handled to improve customer convenience.

**Other Embodiments**

The above-mentioned remittance destination address, encrypted character string, and the like are merely examples.

Further, the above-mentioned confirmation of transaction records is not limited to Proof of Work (PoW), and Proof of Stake (PoS), Proof of Importance (PoI), Proof of Human-Work (PoH) and other methods may be used.

In addition, the remittance instruction apparatus or the remittance execution apparatus of each of the above-described embodiments may have the following configurations. Here, what is described as "page" may be a page of a web page or a screen of application software.

That is, a conversion unit for calculating the converted amount obtained by converting the remittance amount into another currency based on the conversion rate between the predetermined digital currency and the other currency can be further provided.

Then, a display information generation unit can be further provided for adding the converted amount to the display page to be displayed on the user's terminal.

Then, the display information generation unit can select at least a part of the plurality of remittance execution services based on the confirmation history of the transaction record corresponding to each of the plurality of digital currencies, and the list of selected remittance execution services may be further added to the display page as options for the user.

In addition, when the user selects another currency, the remittance instruction unit may give a remittance instruction to the predetermined remittance execution service for the exchanged amount after exchanging the remittance amount from the predetermined digital currency to the selected other currency.

Further, when another remittance execution service is selected by the user, the identification unit newly identifies the other remittance execution service and the key associated with the user from the key information storage unit. Instead of the predetermined remittance execution service, the remittance instruction unit may use the newly identified key to give the remittance instruction to the other remittance execution service for remitting the converted amount.

The conversion unit may calculate the converted amount in consideration of the remittance fee of the predetermined remittance execution service.

Alternatively, the remittance instruction unit may give instruction to exchange the remittance amount from the predetermined digital currency to the other currency when the converted amount has a lower total cost in the user's base currency than the remittance amount, and to remit the amount of currency after the exchange to the remittance destination address.

In addition, the conversion unit may calculate the converted amount using the conversion rate obtained from the exchange for the digital currency.

Further, the conversion unit may calculate the conversion rate from the board information acquired from the exchange for the digital currency.

Further, the conversion unit may calculate the conversion rate in consideration of the transaction volume in currency trading included in the board information.

Further, the other currency may be the base currency of the user.

Alternatively, if the expected processing time for when the remittance amount is exchanged from the predetermined digital currency to another currency is within a specified time, the remittance instruction unit may have the remittance execution service exchange the remittance amount from the predetermined digital currency to the other currency, and give a remittance instruction to send the amount after the exchange.

Further, the payment information may be digitally signed with the store private key instead of the SSL certificate private key.

Also, of the multiple elements included in the payment information (store server URL, transaction ID, remittance destination address (remittance destination account), currency, amount, notification destination, etc.), which element is used as the parameter of the approval URL and which element is provided by the store server may be changed. Further, the customer may input some of the elements. In particular, if the "amount", which is one of the elements in the payment information, is provided by the store server, the approval URL can be fixed at the store or cash register, and a sticker can be attached if it is a two-dimensional code. Alternatively, even if the "amount" is included in the approval URL, it is possible to fix the approval URL for each product.

The remittance instruction apparatus according to the first, second, fourth, and fifth embodiments described above may be realized as an application running on the OS executed on the customer computer 202. In that case, the storage device in the customer computer 202 may store a program in which a key definition table, a key information table and other various tables, and a key registration processing unit, a remittance processing unit and other various processing units are implemented. Then, the processor in the customer computer 202 reads the program from the storage device into the memory and executes the program, so that the customer computer 202 operates as a key registration processing unit, a remittance processing unit, and various other processing units. In this case, the communication between the customer computer 202 and the remittance instruction apparatus 203 and the like is replaced with the communication inside the customer computer 202. Further, when the key information table is placed on the customer computer, the user is uniquely determined, and the process of identifying the customer may not be required.

In the above-described embodiment, the description is made as a hardware configuration, but the present invention is not limited to this. The present disclosure can also be realized by having the CPU execute computer programs for arbitrary processing.

In the above example, the program can be stored and supplied to a computer using various types of non-transitory computer readable media. Non-transitory computer-readable media include various types of tangible storage media. Examples of non-transitory computer-readable media include magnetic recording media (e.g., flexible disks, magnetic tapes, hard disk drives), magneto-optical recording media (e.g., magneto-optical disks), CD-ROMs (Read Only Memory), CD-Rs, CD-R/Ws, DVDs (Digital Versatile Disc), semiconductor memory (e.g., mask ROM, PROM (Programmable ROM), EPROM (Erasable PROM), flash ROM, and RAM (Random Access Memory)). The program may also be supplied to the computer by various types of temporary computer readable media (transitory computer readable medium). Examples of temporary computer-readable media include electrical signals, optical signals, and electromagnetic waves. The temporary computer-readable medium can supply the program to the computer via a wired communication path such as an electric wire and an optical fiber, or a wireless communication path.

The present disclosure is not limited to the above embodiment and can be appropriately modified without departing from the spirit. Further, the present disclosure may be carried out by appropriately combining the respective embodiments.

This application claims priority based on Japanese Unexamined Patent Application No. 2018-156010 filed on August 23, 2018 and Japanese Unexamined Patent Application No. 2018-235584 filed on December 17, 2018, and all of the disclosures are incorporated here.

**Claims**

1. A remittance instruction apparatus comprising:

   a key information storage unit configured to store each of a plurality of key information for a given user to use each remittance execution service in association with each of a plurality of remittance execution services for providing services to a plurality of registered users services for remittance of digital currency;
   an identification unit configured to identify the key information in the key information storage unit based on the predetermined remittance execution service designated by the given user; and
   a remittance instruction unit configured to, based on remittance information in which a remittance amount in a predetermined digital currency and a remittance destination are specified, give a remittance instruction to the predetermined remittance execution service, the remittance instruction to remit the specified remittance amount in the predetermined digital currency to a remittance destination address corresponding to the specified remittance destination using the identified key information,
   wherein, each of the plurality of key information includes one or more keys that differ for each remittance execution service and includes information that can uniquely identify the given user in the remittance execution service.

2. The remittance instruction apparatus according to Claim 1, further comprising a remittance notification unit for notifying the remittance destination of a payment notification when a transaction record corresponding to the predetermined digital currency based on the remittance instruction satisfies a predetermined confirmation condition, wherein the predetermined confirmation condition is a confirmation condition for determining whether the transaction record has been confirmed by one or more other apparatuses and is updated in the remittance instruction apparatus or externally.

3. The remittance instruction apparatus according to Claims 1 or 2 further comprising:

   a key definition storage unit for storing definitions related to each key included in the key information for each of the plurality of remittance execution services; and
   a key registration unit for receiving key information which the user can use for a specific remittance execution service from the given user, by using the key definition storage unit, and registering each key included in the received key information in the key information storage unit in association with the specific remittance execution service.

4. The remittance instruction apparatus according to any one of Claims 1 through 3 further comprising a remittance information acquisition unit for acquiring the remittance information including the remittance destination address from the remittance destination.

5. The remittance instruction apparatus according to any one of Claims 1 through 4 further comprising a conversion unit for calculating the converted amount converted from the remittance amount to another currency based on the conversion rate between the predetermined digital currency and the other currency.

6. The remittance instruction apparatus according to any one of Claims 1 through 5 wherein the remittance instruction unit gives the remittance instruction to the remittance execution service for the exchanged amount after exchanging the remittance amount of the predetermined digital currency to another currency, if the expected processing time when the remittance amount is exchanged from the predetermined digital currency to the other currency is within a designated time.

7. A remittance instruction method for a computer comprising:

an identifying step for identifying key information from a key information storage unit based on a predetermined remittance execution service specified by a given user, the key information storage unit storing each of a plurality of key information for the given user to use each remittance execution service in association with each of a plurality of remittance execution services for providing services to a plurality of registered users for remittance of digital currency;

a remittance instruction step for giving a remittance instruction to the predetermined remittance execution service, the remittance instruction to remit the specified remittance amount in the predetermined digital currency to a remittance destination address corresponding to the specified remittance destination using the identified key information based on remittance information that specifies the remittance destination and the remittance amount in the specified digital currency,

wherein, each of the plurality of key information includes one or more keys that differ for each remittance execution service and includes information that can uniquely identify the given user in the remittance execution service.

8. A remittance instruction program causing a computer to execute:

an identifying process for identifying key information from a key information storage unit based on a predetermined remittance execution service specified by the given user, the key information storage unit storing each of a plurality of key information for the given user to use each remittance execution service in association with each of a plurality of remittance execution services for providing services to a plurality of registered users for remittance of digital currency;

a remittance instruction process for giving a remittance instruction to the predetermined remittance execution service, the remittance instruction to remit the specified remittance amount in the predetermined digital currency to a remittance destination address corresponding to the specified remittance destination using the identified key information based on remittance information that specifies the remittance destination and the remittance amount in the predetermined digital currency,

wherein, each of the plurality of key information includes one or more keys that differ for each remittance execution service and includes information that can uniquely identify the given user in the remittance execution service.

9. A remittance instruction system comprising:

a remittance instruction terminal that includes a key information storage unit that stores each of a plurality of key information for a given user to use each remittance execution service in association with each of a plurality of remittance execution services for providing services to a plurality of registered users for remittance of digital currency; and

a payment information presentation apparatus for outputting payment information specification information to specify payment information, wherein the remittance instruction terminal includes:

an identification unit configured to identify the key information in the key information storage unit based on the predetermined remittance execution service designated by the given user; and

a remittance instruction unit configured to, based on the payment information specified by the payment information specification information, give a remittance instruction to the predetermined remittance execution service, the remittance instruction to remit a remittance amount in a predetermined digital currency to a remittance destination address corresponding to the payment information using the identified key information,

wherein, each of the plurality of key information includes one or more keys that differ for each remittance execution service and includes information that can uniquely identify the given user in the remittance execution service.

100

101

CPU

102

PROGRAM MEMORY

1021 PROGRAM

103

RAM

106

104

HARD DISK

105

COMMUNICATION
UNIT

Fig. 1

CUSTOMER EXCHANGE
(customer Exchange) — 204

2041 — REMITTANCE EXECUTION SERVICE

— 2042

CUSTOMER — 20421

KEY INFORMATION — 20422

KEY TYPE — 204221

KEY — 204222

2043 — WEB SYSTEM

203

REMITTANCE INSTRUCTION APPARATUS

KEY DEFINITION TABLE — 2031

EXCHANGE — 20311

LANGUAGE — 20312

KEY TYPE — 20313

KEY NAME — 20314

KEY INFORMATION TABLE — 2032

CUSTOMER — 20321

EXCHANGE — 20322

KEY INFORMATION — 20323

KEY TYPE — 203231

KEY — 203232

KEY REGISTRATION PROCESSING UNIT — 2033

REMITTANCE PROCESSING UNIT — 2034

KEY INFORMATION REQUEST (S101)

DISPLAY KEY INFORMATION PAGE (S102)

ACCESS KEY REGISTRATION URL (S111)

DISPLAY LOGIN PAGE (S112)

AUTHENTICATION INFORMATION (+EXCHANGE ID) (S113)

DISPLAY KEY REGISTRATION PAGE (S114)

KEY INFORMATION (S115)

202

CUSTOMER COMPUTER (customer computer)

2021

ACCESS PROCESSING UNIT

OPERATION

DISPLAY

201

CUSTOMER (customer)

Fig. 2

300

Exchange A
Web Application　　　　　　Logged in as : user@example.org

311

API key :

312

321　asOwd90u234fhjer80a240qj23

private key :

322

a0j2340-4gjv492jer9abaq[we9

Close

Fig. 3

400

Remittance
Web Application　　　Logged in as : user@example.org

401

Exchange A

411　　API key :

412　　as0wd90u234fhjer80a240qj23

421　private key:

422　　a0j2340-4gjv492jer9abaq[we9

Back　　　Register

Fig. 4

```
@abstractmethod
def get_key_names(self):
    """

    [Public API]
    Return API key names
    Returns:
        (list of tuple) each tuple contains the following
        values:
            name -- (str) translation key of API key
            hide -- (bool) whether or not to hide the API key,
                when shown on the UI
    """

    ...
```

Fig. 5

START

ACQUIRE THE BROWSER DISPLAY
LANGUAGE AND ASSIGN TO VARIABLE `locale` — 601

CALL `get_key_names()` METHOD OF
CUSTOMER EXCHANGE CLASS AND ASSIGN
THE OBTAINED VALUE TO VARIABLE `names` — 602

FOR EACH ELEMENT `each` IN `names`

ACQUIRE THE CHARACTER STRING
CORRESPONDING TO `each[0]` FROM THE
TRANSLATION TABLE CORRESPONDING TO
`locale`, AND ASSIGN TO VARIABLE `label` — 603

ADD `label` AS A LABEL FOR
THE TEXT BOX ON THE WEB PAGE — 604

IS `each[1]`
`True`? — 605

YES

NO          606

ADD TEXT BOX IN WHICH INPUT
CONTENT CAN BE SEEN ON WEB PAGE — 606

607

ADD TEXT BOX IN WHICH CONTENT
IS HIDDEN ON THE WEB PAGE — 607

END

Fig. 6

<u>2031</u>

| IDENTIFIER | CHARACTER STRING |
|---|---|
| api_key_form:exchange_a:api_key_0 | API キー |
| api_key_form:exchange_a:api_key_1 | 秘密鍵 |
| api_key_form:exchange_b:api_key_0 | API key |
| api_key_form:exchange_b:api_key_1 | Secret |
| . . . | . . . |

Fig. 7

2032

| CUSTOMER | EXCHANGE | KEY INFORMATION |
|---|---|---|
| Customer 1 | Exchange A | {"api_key_0": "1a68w4g4a384g34-s[berg", "api_key_1": "48a5frrb4aer5sn74j68474[-971ej354w4"} |
| Customer 2 | Exchange A | {"api_key_0": "92qj' ef[w45tjo' pbja[ag", "api_key_1": "9834+s+53598vrr-ba-bwadf[]w54"} |
| . . . | . . . | . . . |
| Customer 1 | Exchange B | {"api_key_0": "rg1s68str4hw3e4tr5hw", "api_key_1": "446ase586r4gastr4b845468o"} |
| Customer 2 | Exchange B | {"api_key_0": "fe4aer*8s4f3b5ersrgawagsd", "api_key_1": "aijgweragre*8bs+th9+we4tsfhs43erggfagda"} |
| . . . | . . . | . . . |

Fig. 8

EP 3 843 021 A1

Fig. 9

1000

Remittance
Web Application        Logged in as :   user@example.org

Approve payment?

  Store:

     Coffee Bean Shop  〜 1001

Amount:

    0.001 ฿  〜 1002

                                          1003
Exchange:

| Exchange A | ▽ |

1004 〜 Cancel          Approve 〜 1005

Fig. 10

44

2035

20351

| STORE ID | STORE NAME | NOTIFICATION URL | PUBLIC KEY |
|---|---|---|---|
| 1 | {"ja": "コーヒー豆販売店", "en": "The Coffee Bean Shop", "default": "The Coffee Bean Shop"} | https://payment.coffee. example.com/notification | Rq4ta4gag4354sgdare grwa |
| 2 | {"ja": "国際銀行", "en": "International Bank", "default", "International Bank"} | https://pay.intbank. example.org/not | [aksjdf90rgfdfj0pfasjvja' bab |
| . . . | . . . | . . . | . . . |

Fig. 11

EP 3 843 021 A1

Fig. 12

2031a

| EXCHANGE | NUMBER OF KEYS |
|---|---|
| Exchange A | 2 |
| Exchange B | 2 |
| Exchange C | 3 |
| . . . | . . . |

Fig. 13

2032a

| CUSTOMER | EXCHANGE | KEY INFORMATION |
|---|---|---|
| Customer 1 | Exchange A | ["1a68w4g4a384g34-s[berg", "48a5frrb4aer5sn74j68474[-971ej354w4"] |
| Customer 2 | Exchange A | ["92qj' ef[w45tjo' pbja[ag", "9834+s+53598vrr-ba-bwadf[]w54"] |
| . . . | . . . | . . . |
| Customer 2 | Exchange B | "fe4aer*8s4f3b5ersrgawagsd", "aijgweragre*8bs+th9+we4tsfhs43erggfagda"] |
| . . . | . . . | . . . |

Fig. 14

START

SET THE NUMBER OF KEYS FOR THE CUSTOMER EXCHANGE CLASS TO VARIABLE `key_count` ⌐1401

REPEAT `key_count` TIMES WITH `d` AS THE LOOP COUNTER VARIABLE

ASSIGN 'Key %d' TO VARIABLE `label` ⌐1402

ADD `label` TO THE WEB PAGE AS A LABEL FOR A TEXT BOX ⌐1403

ADD A TEXT BOX OF WHICH ITS CONTENT IS VISIBLE ON THE WEB PAGE ⌐1404

END

Fig. 15

400a

Remittance
Web Application          Logged in as: user@example.org

Exchange A ⟋—401

Key 1 :⟋—411a

412 —⟋|  as0wd90u234fhjer80a240qj23  |

Key 2 :⟋—421a

422 —⟋|  a0j2340-4gjv492jer9abaq[we9  |

|  Back  |    |  Register  |

Fig. 16

1000a

Remittance
Web Application

Approve payment?

Store:

Coffee Bean Shop ∿ 1001

Amount:

0.1 ETH ∿ 1002a

≈ 58.00 | USDT | ▽ | ⌐1002c

1002b

1006

Username:

Password:

1004 ⌐ Cancel     Approve ⌐1005

Fig. 17

START

ASSIGN BOARD INFORMATION
TO ARRAY `board`          ⟋1700

CONVERT REMITTANCE AMOUNT
LINEARLY AND ASSIGN TO
VARIABLE `size`           ⟋1701

REPEAT WITH `i`
AS LOOP COUNTER VARIABLE

askbid = board[i]         ⟋1702

size = size - askbid.volume   ⟋1703

1704
size > 0 ?        NO

YES

USE `askbid.price`
AS THE CONVERSION RATE    1705

END

Fig. 18

52

Fig. 19

EP 3 843 021 A1

2000

Remittance
Application

Approve payment?

Store:

Coffee Bean Shop —— 2001

Exchange :                              2003

| Exchange A | ▽ |

Amount:                                 2007

2002a—— 0. 1        | ETH | ▽ |

2002b—— (58. 00 USD)

2004           2005

| Cancel |    | Approve |

Fig. 20

2035a        20352

| STORE ID | STORE NAME | MAXIMUM REMITTANCE TIME | · · · |
|---|---|---|---|
| 1 | {"ja": "コーヒー豆販売店", "en": "The Coffee Bean Shop", "default": "The Coffee Bean Shop"} | 5 minutes | · · · |
| 2 | {"ja": "国際銀行", "en": "International Bank", "default", "International Bank"} | 1 day | · · · |
| · · · | · · · | · · · | · · · |

Fig. 21

EP 3 843 021 A1

2038

| CURRENCY | DYNAMIC ADDRESS GENERATION |
|----------|----------------------------|
| BTC | true |
| XRP | false |
| . . . | . . . |

Fig. 22

2039

| STORE ID | CURRENCY | ADDRESS GENERATION KEY OR REMITTANCE DESTINATION ADDRESS |
|---|---|---|
| 1 | BTC | 4a8ad4b379aef33474c… |
| 1 | XRP | rMHFt6GkipBMEyQP… |
| ... | ... | ... |
| 2 | BTC | ae4508ce98d7356dda15… |
| 2 | XRP | rSG3ZL6u94TgMnjKXe… |
| ... | ... | ... |

Fig. 23

Fig. 24

2500

Remittance
Web Application    Logged in as: user@example.org

Approve payment?

Store:          2501    2508
Coffee Bean Shop
  coffee.example.com
Exchange :                        2503
[Exchange A                    ▽]

Amount:                          2507
2502a——— 0.1        [ETH        ▽]

2502b——— (58.00 USD)

        2504          2505
    [Cancel]      [Approve]

Fig. 25

Fig. 26

Fig. 27

EP 3 843 021 A1

EP 3 843 021 A1

```
{
    "user":"Customer 1",
    "exchange": "Exchange A",
    "api_keys":
        ["1a68w4g4a384g34-s[berg",
        "48a5frrb4aer5sn74j68474[-971ej354w4"]
},
{
    "user":"Customer 2",
    "exchange": "Exchange A",
    "api_keys":
        ["92qj' ef[w45tjo' pbja[ag",
        "9834+s+53598vrr-ba-bwadf[]w54"]
},
{
    "user":"Customer 2",
    "exchange": "Exchange B",
    "api_keys":
        ["fe4aer*8s4f3b5ersrgawagsd",
        "aijgweragre*8bs+th9+we4tsfhs43erggfagda"]
},
...
```

Fig. 28

62

```
{
    "timestamp": "2018/06/28 23:59.00.123",
    "cn": "coffee.example.com",
    "currency": "ETH",
    "amount": 0.1,
    "destination": "0x7E5DdE95e90D223d6474d02066EbC3D8c7431c37",
    "reserve": false,
    ...
}
```

Fig. 29

| CURRENCY | AMOUNT | REMITTANCE DESTINATION ADDRESS | WITHDRAWAL |
|---|---|---|---|
| BTC | 3154. 268481 | | |
| ETH | 421. 14484 | | |
| . . . | . . . | . . . | . . . |

Fig. 30

```
{
    "timestamp": "2018/07/01 11:39.00.456",
    "cn": "coffee.example.com",
    "currency": "ETH",
    "amount": -421.14484,
    "destination": "0x7E5DdE95e90D223d6474d02066EbC3D8c7431c37",
    "reserve": true,
    ...
}
```

Fig. 31

EP 3 843 021 A1

SSL CERTIFICATE (S606)

STORE SERVER
(Merchant Server) — 205f

PAYMENT INFORMATION (CURRENCY, AMOUNT, REMITTANCE DESTINATION ADDRESS, REQUIRED NUMBER OF CONFIRMATIONS, AND NOTIFI -CATION DESTINATION) (S607)

REMITTANCE EXECUTION APPARATUS URL — 2054

SSL CERTIFICATE — 2053

REMITTANCE APPROVAL NOTIFICATION (S610)

PAYMENT NOTIFICATION (S613)

APPROVAL URL (REMITTANCE EXECUTION APPARATUS URL, PAYMENT INFORMATION URL, TRANSACTION ID) (S602)

TRIGGER FOR REMITTANCE (PLACE ORDER) (S601)

208

TRANSFER (S612)

REMITTANCE EXECUTION APPARATUS

ACCESS APPROVAL URL (S603)

LEDGER (Ledger)

MONITOR

REMITTANCE EXECUTION UNIT — 2041a

DISPLAY LOGIN PAGE (S604)

CUSTOMER COMPUTER (customer computer) — 202

AUTHENTICATION INFORMATION (S605)

REMITTANCE DETAILS (S608)

ACCESS PROCESSING UNIT — 2021

REMITTANCE INSTRUCTION (REMITTANCE DESTINATION, CURRENCY, AMOUNT) (S611)

REMITTANCE APPROVAL (S609)

REMITTANCE PROCESSING UNIT — 2044

EXCHANGE ID, REMITTANCE AMOUNT, CURRENCY

OPERATION    DISPLAY

204b

201

Fig. 32

CUSTOMER (customer)

3300

Coffee Bean Shop

Type:
　Canned coffee XX
Amount:
　　300g 1 can
3310 { Price:
　　0.003　BTC tax excluded —— 3311
　　0.00324 BTC tax included —— 3312

Purchase

Fig. 33

```
<tr>
    <td>Price:<br/></td>
    <td>
            <span>0.003 BTC tax excluded <br/></span>
            <span>0.00324 BTC  tax included </span>
    </td>
</tr>

<span id="payment-attributes" hidden>NOt8sAAhNv2Zj07LvgwTkod73
Hm68dVDzv7Hrxy...BsONRENOt8sAAhNv2Zj07LvgwTkod73Hm68dVDzv7Hrxy
BsONxzPRE</span>
```

Fig. 34

3500

102

101

PROGRAM MEMORY

103

CPU

35021

PROGRAM

RAM

106

3507

3506

3504

105

| DISPLAY DEVICE | IMAGE CAPTURE DEVICE | LONG-TERM STORAGE DEVICE | COMMUNICATION UNIT |

Fig. 35

Fig. 36

203A

REMITTANCE
INSTRUCTION APPARATUS

KEY DEFINITION
TABLE — 2031

| EXCHANGE | — 20311 |
| LANGUAGE | — 20312 |
| KEY TYPE | — 20313 |
| KEY NAME | — 20314 |

KEY INFORMATION
TABLE — 2032A

| EXCHANGE | — 20322 |
| KEY INFORMATION | — 20323 |

| KEY TYPE | — 203231 |
| KEY | — 203232 |

| KEY REGISTRATION PROCESSING UNIT | — 2033A |
| REMITTANCE PROCESSING UNIT | — 2034A |
| ACCESS PROCESSING UNIT | — 2021A |
| UI DISPLAY UNIT | — 36036A |

CUSTOMER EXCHANGE — 204

KEY INFORMATION
TABLE — 2042

| CUSTOMER | — 20421 |
| KEY INFORMATION | — 20422 |

| KEY TYPE | — 204221 |
| KEY | — 204222 |

| REMITTANCE EXECUTION SERVICE | — 2041 |
| WEB SYSTEM | — 2043 |

KEY INFORMATION
REQUEST (S101a)

DISPLAY KEY INFORMATION PAGE (S102a)

DISPLAY

— 201

OPERATION

CUSTOMER

70

2033A                    36036A                    201

| KEY REGISTRATION PROCESSING UNIT | UI DISPLAY UNIT |
|---|---|

SELECT EXCHANGE
(S3701)

EXCHANGE
(S3702)

KEY TYPE AND KEY NAME
(S3703)

DISPLAY KEY
REGISTRATION
SCREEN
(S3704)

KEY INFORMATION
INPUT
(S3705)

KEY INFORMATION
(S3706)

Fig. 37

3800

Remittance
Application

List of exchanges

| |
|---|
| Exchange A |
| Exchange B |
| Exchange C |
| Exchange D |
| Exchange E |
| Exchange F |
| Exchange G |

3801

Fig. 38

3900

Remittance
Application

401

Exchange A

411

API key:

412

as0wd90u234fhjer80a240qj23

421

private key:

422

a0j2340-4gjv492jer9abaq[we9

Back          Register

Fig. 39

```
/*
 * Return API key names
 * Returns:
 *   (array of KeyInfo) each KeyInfo has the following methods:
 *      String getName() : translation key of API key
 *      boolean hide() : whether or not to hide the API key,
 *         when shown on the UI
 */
public abstract KeyInfo[] getKeyNames();
```

Fig. 40

EP 3 843 021 A1

START

ACQUIRE THE UI DISPLAY LANGUAGE
AND ASSIGN TO VARIABLE `locale` — 4101

CALL `getKeyNames ()` METHOD OF
CUSTOMER EXCHANGE A CLASS AND
ASSIGN THE RETURN VALUE
TO VARIABLE `names` — 4102

FOR EACH ELEMENT
`each` IN `names`

ACQUIRE THE CHARACTER STRING
CORRESPONDING TO `each.getName()`
FROM THE TRANSLATION TABLE
CORRESPONDING TO `locale`,
AND ASSIGN TO VARIABLE `label` — 4103

ADD `label` AS A LABEL FOR
THE TEXT BOX ON THE SCREEN — 4104

— 4105
IS `each.hide()`
`true`?

YES

4106 —

NO

ADD TEXT BOX IN WHICH INPUT
CONTENT CAN BE SEEN TO THE SCREEN

ADD TEXT BOX IN WHICH CONTENT
IS HIDDEN TO THE SCREEN — 4107

END

Fig. 41

2032A

| EXCHANGE | KEY INFORMATION |
|---|---|
| Exchange A | {"api_key_0": "1a68w4g4a384g34-s[berg", "api_key_1": "48a5frrb4aer5sn74j68474[-971ej354w4"} |
| Exchange A | {"api_key_0": "92qj' ef[w45tjo' pbja[ag", "api_key_1": "9834+s+53598vrr-ba-bwadf[]w54"} |
| . . . | . . . |
| Exchange B | {"api_key_0": "rg1s68str4hw3e4tr5hw", "api_key_1": "446ase586r4gastr4b8454680"} |
| Exchange B | {"api_key_0": "fe4aer*8s4f3b5ersrgawagsd", "api_key_1": "aijgweragre*8bs+th9+we4tsfhs43erggfagda"} |
| . . . | . . . |

Fig. 42

EP 3 843 021 A1

Fig. 43

Fig. 44

EP 3 843 021 A1

4300

Remittance
Application

Approve payment?

Store: 2501 2508

Coffee Bean Shop
coffee.example.com

Exchange : 2503

| Exchange A | ▽ |

Amount: 2507

2502a ——— 0.1 | USDC | ▽ |

2502b ——— ( 0.1 USD)

2504 2505

| Cancel | | Approve |

Fig. 45

Fig. 46

STORE SERVER ~205B

2051 — APPROVAL URL

2053 — SSL CERTIFICATE

PAYMENT REQUEST MAIL
(APPROVAL URL)
(S4401)

4404 ~
FINANCIAL INSTITUTION

REMITTANCE
EXECUTION SERVICE ~44041

MAIL SERVER

PAYMENT
REQUEST MAIL ~209

2091

PAYMENT
INFORMATION
(CURRENCY, AMOUNT,
REMITTANCE
DESTINATION
ACCOUNT,
NOTIFICATION
DESTINATION)
(S4406)

REMITTANCE APPROVAL
NOTIFICATION
(S4409)

SSL
CERTIFICATE
(S4405)

PAYMENT REQUEST MAIL
(APPROVAL URL)
(S4402)

REMITTANCE INSTRUCTION
(REMITTANCE DESTINATION,
CURRENCY, AMOUNT, KEY)
(S4410)

REMITTANCE
INSTRUCTION APPARATUS

MAIL CLIENT ~2023

REMITTANCE
PROCESSING UNIT ~2034B

UI DISPLAY
UNIT ~36036B

203B

DISPLAY MAIL
(S4403)

SELECT APPROVAL URL
(S4404)

REMITTANCE DETAILS
(S4407)

REMITTANCE APPROVAL
(EXCHANGE ID, REMITTANCE
AMOUNT, CURRENCY)
(S4408)

~201

CUSTOMER

EP 3 843 021 A1

Fig. 47

4500

Remittance
Application

Approve payment?

Store:          2501        2508

Coffee Bean Shop
coffee.example.com

Payment service :          2503

Rewards card A          ▽

Amount:

4502a —— 0.1   point

2502b —— (58.00 USD)

2504          2505

Cancel          Approve

Fig. 48

<table>
<tr><td colspan="2" align="center">**INTERNATIONAL SEARCH REPORT**</td><td colspan="2">International application No.<br>PCT/JP2019/014820</td></tr>
</table>

**A. CLASSIFICATION OF SUBJECT MATTER**
Int.Cl. G06Q20/06(2012.01)i, G06Q20/10(2012.01)i, G06Q20/16(2012.01)i

According to International Patent Classification (IPC) or to both national classification and IPC

**B. FIELDS SEARCHED**

Minimum documentation searched (classification system followed by classification symbols)
Int.Cl. G06Q20/06, G06Q20/10, G06Q20/16

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-218633 A (ORB, INC.) 22 December 2016, paragraphs [0024], [0031]-[0032] (Family: none) | 1-9 |
| A | WO 2016/013048 A1 (SUMITOMO MITSUI BANKING CORP.) 28 January 2016, paragraphs [0036]-[0052], fig. 7 (Family: none) | 1-9 |
| A | JP 2006-279269 A (NTT COMMUNICATIONS CORPORATION) 12 October 2006, paragraph [0023], fig. 4 (Family: none) | 1-9 |
| A | JP 2011-76166 A (MRS HOLDINGS CO., LTD.) 14 April 2011, claim 3 (Family: none) | 1-9 |

☐ Further documents are listed in the continuation of Box C.    ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search<br>09 May 2019 (09.05.2019) | Date of mailing of the international search report<br>21 May 2019 (21.05.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6271800 B
- JP 2018156010 A

- JP 2018235584 A